# EUROPÄISCHE PATENTANMELDUNG

(11) **EP 1 187 001 A2**
(43) Veröffentlichungstag der Anmeldung: **13.03.2002**
(21) Anmeldenummer: 01104625.7
(22) Anmeldetag: 23.02.2001
(51) Int. Cl.: G06F 9/44

(54) **Integriertes Wissens-Technologiesystem**

(30) Priorität: 25.01.2001 EP 01101754; 24.02.2000 DE 10009778
(71) Anmelder: Knowlogy Systems GmbH, 14469 Potsdam (DE)
(72) Erfinder: Bading, Lothar, 14469 Potsdam (DE)
(74) Vertreter: Köllner & Kewitz

(57) **Zusammenfassung**

Die Erfindung betrifft eine Verfahren und eine Vorrichtung zur Erzeugung eines Modells auf der Basis eines Metamodells, mit einem Metametamodell, das das Metamodell beschreibt, wobei das Metametamodell ein statisches Kernmodell umfasst, das Entity-Klassen beinhaltet, die durch Attribute beschrieben werden, Operationen umfasst, die das Verhalten der Instanzen der Entity-Klassen, insbesondere den Zustand der Attribute, bestimmen, ein dynamisches Kernmodell umfasst, das Prozess-Klassen enthält, die durch die Ablaufbeschreibung von Operationen bestimmt werden, wobei die Operationen durch Verzweigungen und/oder Bedingungen und/oder Sequenzen und/oder Schleifen und/oder Synchronisation miteinander verknüpft sind,mit einem ersten Schritt bei dem auf der Basis des Metametamodells ein Metamodell entsteht, wobei nur die Elemente zur Beschreibung des Metamodells Verwendung finden, die das Metametamodell zur Verfügung stellt. mit einem zweiten Schritt bei dem durch Instanzierung des Metamodells das Modell entsteht.

## Beschreibung

Die Erfindung betrifft Verfahren und Vorrichtungen zur Erzeugung eines computerlauffähigen Modells auf der Basis eines Metamodells.

Die Produktivität der Wissens- & Softwareproduktion systematisch zu steigern und industriell zu organisieren, wird die dringendste Herausforderung jeder modernen Gesellschaft. Dabei ist die wichtigste Anforderung der schnell wachsende Bedarf an Wissen über Wissen, d.h. vor allem über die Wissensarbeit, die Wissensproduktionsprozesse und das Wissensmanagement selbst.

Der amerikanische Mathematiker und Informatiker Norbert Wiener hat die Anforderung formuliert: "Die Menschen müssen lernen, sich beim Denken selbst zuzuschauen".

Metawissen, d.h. Wissen über Wissen, wird für den optimalen Einsatz dieser Ressource ausschlaggebend sein. Die Anwendung von Erkenntnis und Wissen auf die Prozesse der Wissensarbeit und Wissensproduktion selbst hat begonnen und wird systematisch vorrangetrieben werden. Knowledge Engineering und Knowledge Technology sind die Grundlagendisziplinen für einen industriell organisierten Wissensproduktionsprozess und damit für die weltweit entstehende Wissensindustrie.

Eine allgemeingültige Wissenstechnologie hat das Ziel bzw. die Aufgabe, eine für möglichst alle Wissensprodukte allgemeingültige und wiederverwendbare und dennoch speziell anpassbare, konfigurierbare und effizient anwendbare Grundlagen- und Querschnittstechnologie zu entwickeln.

Ein solcher Anspruch ist nur realisierbar auf der Basis eines Metawissens-Modells, eines Metawissens-Technologiemodells und Metawissens-Produktionsmodells.

Denken und Handeln sind Teil des Erkenntnisprozesses der Menschen. Der Begriff Erkenntnis benennt und beschreibt dabei den Prozess des Wahrnehmens, Begreifens und Denkens und damit den VVissensproduktionsprozess. Das Ergebnis von Denken und Handeln ist u.a. Meta- und Erfahrungswissen.

Der Begriff ist das kleinste Denk- und Wissens-Element. Die Aussage ist die kleinste Denk- und Wissens-Komponente. Wissen besteht mindestens aus einem Begriff bzw. einer Klasse und einer elementaren Meta-Aussage. Information besteht im Unterschied zu Wissen aus mindestens einer Objektinstanz und einer darauf bezug-nehmenden Ziel-, Handlungs-, Ereignis- oder Zustandsaussage.

Wissen ist die Verknüpfung und Verallgemeinerung von Informations- und Wissensaussagen zu komplexen Wissensaussagesystemen oder synonym Theorien über abgrenzbare Objektmengen. Modelle sind formalisierte Theorien, d.h. formalisierte Wissensaussagesysteme über formal definierte Objektmengen.

Der Erkenntnis- oder Wissensproduktionsprozess ist ein rekursiver, selbstreferentieller Prozess in den Gehirnen von Menschen und Menschengruppen. Informationen können ohne Vor- oder Referenzwissen nicht gewonnen werden. Referenzwissen ist somit Voraussetzung, um Informationen sinnvoll zu verknüpfen und zu verarbeiten und damit neues Wissen zu schaffen.

Wissen besteht aus verknüpften, verarbeiteten und verallgemeinerten Informationen/Aussagen und ist mehr als die Summe der verwendeten Einzel-Informationen/Aussagen. Wissen ist das Ergebnis der Informationsverarbeitung. Wissen ist verstandene Information.

Digitale Fachobjekt-Referenzmodelle vieler Fach- und Anwendungsgebiete mit entsprechenden Knowledge-Engineering -und Knowledge-Managementsystemen werden als konsequente Weiterentwicklung traditioneller Referenzwissenswerkzeuge in Form von Fachsoftware, Fachbüchern und allen anderen Formen von Fachdokumenten (Text, Bild, Grafik, Video, Ton) die Erkenntnisprozesse des Menschen revolutionieren und die Lerngeschwindigkeit von Menschen, Menschengruppen und Organisationen ernorm beschleunigen.

Moderne digitale Fachobjekt-Referenzmodelle sind Normaussagensysteme über viele Objekträume und Objektmengen. Digitale Fachobjekt-Referenzmodelle haben folgende Merkmale: Sie basieren auf einem expliziten objektorientierten Metamodell. Sie haben digitale, elektronisch jederzeit veränderbare Wissens-Modellelemente. Die Fach-Modellelemente können mit Knowledge-Engineering-Tools dynamisch und flexibel bearbeitet werden. Die Modellelemente werden in Datenbanken gespeichert und verwaltet.

Wissens-Modellelemente bestehen wiederum aus normsprachlichen Wortelementen, die durch Fachsprachennormung entstehen. Wissens-Modellelemente können in verschiedenen Notationen (textuell und/oder grafisch) repräsentiert werden.

Fachobjekt-Referenzmodelle eines Fach- und Anwendungsgebietes bestehen aus Hunderten genormter Fach-Referenzbegriffe und Synonyme, d.h. Fach-Substantiven, -Verben, -Adjektiven, -Präpositionen, -Adverbien. Es besteht aus Hunderten Von statischen Entity- und Beziehungsklassen mit Tausenden von zugeordneten Fachklassen-Attributen und Fachklassen-Funktionen. Tausenden von dynamischen Fach-Prozessklassen mit Tausenden von steuernden Ereignissen, Zuständen, Bedingungen, Operatoren etc. sowie Tausenden von Assoziations-, Aggregations- und Vererbungsbeziehungen zwischen den Klassen.

Referenzmodelle sind an sich keine neue Entwicklung. Es gibt bereits umfassende theoretische Konzepte für objektorientierte normsprachliche Fachmodelle, insbesondere von Prof. Erich Ortner (Darmstadt), Dr. Bruno Schienmann (Bonn) und Gerald Kristen (Veghel. Niederlande). Diese theoretischen Konzepte sind jedoch bisher in keine anwendbare Technologie bzw. in technischen Systemen umgesetzt worden, d.h. sie waren bisher nicht praktisch für eine normsprachliche Fachwissensmodellierungen anwendbar.

Darüber hinaus existieren objektorientierte aber nicht normsprachliche Modellierungskonzepte, -theorien und Modellierungstools zur integrierten Unternehmensmodellierung vom Fraunhoferinstitut für Produktionsanlagen und Konstruktionstechnik (IPK) in Berlin, Prof. Kai Mertins und von Prof. Elmar Sinz von der Universität Bamberg.

Andererseits gibt es auf dem Markt eine Vielzahl von Daten- und/oder Prozessmodellen und entsprechende Tools, die weder objektorientiert noch in Normsprachen und Fachprogrammiersprachen ihr technisches und/oder betriebswirtschaftliches Fachwissen individuelle modellieren.

Umfassende, integrierte betriebswirtschaftliche Referenzmodelle existieren gegenwärtig nur von IDS Scheer AG und der SAP AG sowie anderer Software- und Beratungsunternehmen. Dies sind ereignisgesteuerte Prozessmodelle und Datenmodelle von IDS/Prof. Scheer, die auf der Basis der ARIS- Metamodellarchitektur und dem Modellierungstool ARIS-Toolset erstellt wurden.

Die Daten- und Prozess-Referenzmodelle von IDS Scheer und SAP weisen jedoch folgende Nachteile auf. Sie
- sind nicht objektorientiert und trennen Funktionen und Daten weiterhin in unterschiedlichen Modellsichten,
- lösen das Problem einer konsistenten Integration von statischer und dynamischer Modellsicht nicht,
- bilden nur die Prozessfunktionalität und Datenstrukturen des SAP R/3 Systems ab und sind damit proprietär und nicht anbieterunabhängig
- konsolidieren nicht das Fachwissen der großen Zahl von horizontalen und branchenorientierten Standardsoftwaresystemen
- umfassen nur die systemgestützten Softwarefunktionen und dokumentieren nicht die manuellen und produktionstechnischen Prozessfunktionen/-attribute in den Unternehmen und Organisationen
- kennen keine konsistente und widerspruchsfreie normsprachliche Konsistenz
- sichern nicht die Eindeutigkeit und Wiederverwendbarkeit der Referenzmodellelemente

Es existieren heute verschiedene Meta-Modelle und -Sprachen sowie Modell-Austauschformate, die in unterschiedlichen Kontexten und für verschiedene Einsatzzwecke entstanden sind. Sie wurden in verschiedenen Modellierungs-Toolklassen (CASE-, GPO-, META-, STEP- und Workflow-Tools) implementiert und auf den Markt gebracht.

Derselbe Objekt- bzw. Modellraum kann mit den verschiedenen Methoden und Tools statisch und/oder dynamisch beschrieben werden. Das Ergebnis sind fast immer inkompatible und redundante Modelle, die nur unter hohem Aufwand oder gar nicht ausgetauscht, miteinander verglichen oder integriert. bzw. konsolidiert werden können.

Im Metamodellierungsbereich und bei den verschiedenen am Markt verfügbaren Tools hat sich noch kein einheitlicher Metamodell-Standard über die verschiedenen Anwendungs- und Einsatzgebiet hinweg durchsetzen können.

Die UML (Unified Modeling Language) ist die heute wichtigste Metasprache und das wichtigste Metamodell zur objektorientierten Modellierung von statischen und dynamischen Systemen und Modellen vor allem in der Softwareentwicklung.

MOF (Meta Object Facility) ist der Teil der UML, der Metamodell der UML explizit beschreibt.

Die EPK (Ereignisgesteuerte Prozesskette) ist eine Beschreibungssprache zur Modellierung von Geschäftsprozessen die von IDS Scheer und der SAP AG sowie einer Reihe weiterer Softwareanbieter und Beratungsfirmen benutzt wird.

Das Workflow Meta-Model und die WPDL (Workflow Process Definition Language) der WfMC (Workflow Management Coalition) dient zur Modellierung und Konfiguration von Workflow-Managementsystemen

STEP/EXPRESS (Standard für the Exchange of Product Model Data (ISO 103D3)) ist der Beschreibungssprachenstandard und das Metamodell für Produktmodelle.

EIA/CDIF (Electronic Industries Alliance/CASE Data Interchange Format) ist ein Meta-Modell Standard für den Austausch von Modellen zwischen unterschiedlichen CASE-Tools.

XML und XMI ist der neue Metasprachen-Standard um Daten und Informationsaustausch im Internet und Nachfolger von HTML.

Aufgabe der vorliegenden ist es die og. Nachteile der Modellierung zu beseitigen.

Gelöst wird diese Aufgabe durch die Merkmale der unabhängigen Ansprüche.

Die erfindungsgemäßen Referenzmodell besteht aus folgenden grundlegenden Teilmodellen und Sichten:
- Das statische Fachklassenmodell mit den Teilmodellen statisches Vererbungs-, Aggregafions- und Assoziationsmodell.
- Das Dynamische Fachklassenmodell mit den Teilmodellen Objektzustandsmodell und dynamisches Vererbungs-, Aggregations- und Assoziationsmodell.
- Das linguistische Sprachmodell mit den Fachsprachenklassen und ihren Referenzbeziehungen untereinander und zu den Metaklassen des statischen und dynamischen Metaobjekt-Referenzmodells.

Im folgenden werden die grundlegenden konzeptionellen Unterschiede der vorliegenden Technologie beschrieben: Sie
- basiert auf einer konsequent objekt- und prozessorientierten Knowledge und Linguistic Engineering Technologie.
- löst erstmals das Problem der vollständigen Integration und Konsistenz zwischen statischen Objektstrukturmodellen und dynamischen, ereignis- und zustandsgesteuerten Objektprozessmodellen
- verbindet erstmals systematisch die objektorientierte Technologie mit linguistischen, normsprachlichen Technologiekonzepten.
- stellt neuartige toolgestützte Technologien der Wissensanalyse und - erschließung zur Verfügung.

Im folgenden wird der wesentliche Nutzen von Fachobjekt-Referenzmodellen beschreiben:
- Referenzmodelle ermöglichen die konsequente, systematische und praktische Umsetzung einer ganzheitlichen Objekt- und Prozessorientierung.
- Referenzmodelle ermöglichen durch technologie- und organisationsneutrale Wissenselemente eine Analyse der Geschäfts- und Ablaufprozesse ohne Berücksichtigung der bisherigen Aufbauorganisation, Technologien und Verfahren.
- Referenzmodelle bieten Vorschläge, Ideen und ganze Musterprozesse für die radikal-innovative Neugestaltung der Schlüssel- und Sekundärprozesse eines Unternehmens
- Referenzmodelle ermöglichen es, die Komplexität und Logik der detaillierten Prozessabläufe analysieren, modellieren und optimieren zu können.
- Objekt- und prozessorientierte Wissens-Referenzmodelle erhöhen die Lern- und Anpassungsfähigkeit von Menschen und Organisationen.
- Wissens-Referenzmodelie können schnell und flexibel an die spezifischen Bedingungen einzelner Unternehmen und Organisationen angepasst werden.
- Wissensmodell-Datenbanksysteme können das gesamte Fach-, Organisations- und DV-Wissen eines Unternehmens! einer Organisation objekt- und prozessorientiert abbilden und verfügbar machen.
- Referenzmodelle haben normativen Charakter, da sie für die abgebildete Klasse von Unternehmen oder Organisationen Gestaltungsempfehlungen bieten.
- Die Strukturen u. Abläufe von Organisationen sind so abgebildet, dass sie für eine Vielzahl von Organisationen u. Branchen verwendbar sind.
- Referenzmodelle besitzen hohe Flexibilität, um Veränderungen hin zu einem unternehmensspezifischen Modell mit geringem Aufwand durchführen zu können.
- Systematische Kostenreduktion und Risikominimierung von Analyse- und Entscheidungsprozessen
- Wesentlich schnellere Implementierung strategischer und organisatorischer Konzepte und Veränderungen
- Effizientes und kostensparendes Mittel zur kontinuierlichen Qualitätsverbesserung von Produkten und Prozessen
- Reduzieren die Einführungszeit von Software und optimieren den Einsatz von Software.

Grundlage der Erfindung ist ein Metamodell zur Beschreibung eines Modells, wobei das Metamodell ein statisches Kernmodell umfasst, das Entity-Klassen beinhaltet, die durch Attribute und Operationen beschrieben werden. Die Operationen bestimmen das Verhalten der Instanzen der Entity-Klassen, insbesondere den Zustand der Attribute. Den Operationen können entweder Prozess-Klassen oder Programmcode zugeordnet sein. Hierdurch ist es möglich, dass Prozesse wiederum Teilprozesse starten. Ein Prozess kann somit so fein gegliedert werden, bis eine Untergliederung nicht mehr sinnvoll möglich ist, sondern besser durch Programmcode dargestellt werden kann. Wenn eine Untergliederung nicht mehr sinnvoll ist, sind vorzugsweise Maschinenoperationen auszuführen. In diesem Fall wird bei der späteren Programmcode-Erzeugung der Maschinencode, der der Operation zugeordnet ist, eingefügt.
Das Metamodell umfasst weiterhin ein dynamisches Kernmodell, das Prozess-Klassen enthält, die durch Aktivitäten beschrieben werden, wobei die Aktivitäten den Ablauf des Prozesses beschreiben, indem auf Operationen zurückgegriffen wird, die durch Verzweigungen und/oder Bedingungen und/oder Sequenzen und/oder Schleifen und/oder Synchronisation miteinander verknüpft sind.

Auf der Basis dieses Metamodells wird in den folgenden Schritten Programmcode erzeugt.

In einem ersten Schritt wird überprüft, dass nur Elemente Verwendung finden, die das Metametamodell zur Verfügung stellt.
In einem zweiten Schritt werden die so beschriebenen Entity-Klassen auf entsprechende Strukturen einer Zielsprache abgebildet, und die Prozess-Klassen und ihre Aktivitäten solange ersetzt, bis alle Operationen durch Programmcode dargestellt sind, wobei der Programmcode in Verzweigungen und/oder Bedingungen und/oder Sequenzen und/oder Schleifen und/oder Synchronisationen eingebettet wird. Diese einzelnen Programmkonstrukte, wie sie aus jeder Programmiersprache bekannt sind, dienen als Rahmen in den der Programmcode, der den Operationen zugeordnet ist, eingebettet wird.

Nach dem die Erzeugung des Programmcode abgeschlossen ist, muss das Modellen instanziiert werden.

Das dynamische und statische Kernmodell des Metamodells verfügt über die Modellelemente Assoziationen, Aggregation, Abstraktion, Zustände, Prozessrolle, Vererbung. Ein detaillierte Beschreibung dieser Modellelemente ist der Beschreibung im folgenden zu entnehmen.

Das Modellelement Zustand beschreibt die Gesamtheit aller Attributwerte eines Objektes.

Das Modellelement Ereignis bestimmt den Abschluss der Ausführung einer Operation, also einer Aktivität, und somit den Beginn eines neuen Zustands.

Wie Entity-Klassen, bzw. statische Klassen, weisen Prozess-Klassen Attribute auf.

Das Modellelement Operator verknüpft andere Modellelemente, insbesondere Aussagen, Bedingungen Zustände, Ereignisse Attributwerte zu komplexen Modellaussagen. Mögliche Arten von Operatoren werden weiter unten beschrieben. Operatoren sind jedoch von Operationen zu unterscheiden. Operatoren verändern die Werte der Attribute nicht.

Zur Erzeugung von Software ist es notwendig die Operationen, denen Programmcode zugeordnet ist, in ein Ablaufschema einzubetten. Dies kann entweder statisch oder dynamisch erfolgen. Die Operationen sind durch interpretierbaren oder compilierbaren Computercode bestimmt.

Um die Effizienz zu steigern und die Konsistenz beizubehalten, sind die Modelle, die sich um das Kernmodell anordnen, auf der Basis des Metamodells entwickelt worden. So sind Bestandteile des Metamodels wie Konfigurationsmanagement, AktivitätenModel, SichtenModell, GliederungsModell, DiagrammModell, DialogModell, AdministrationsModell Wissensträger-und-Anaylse-Modell auf der Basis des Kernmodells entwickelt worden, so dass ein iterativer Prozess der Entwicklung eintritt. Es ist dabei zu beachten, dass i. d. R. jeder Bestandteil in ein ablauffähiges Programm umgewandelt werden kann. Somit kann festgestellt werden, dass ein Modell immer auch zu einem Programm führen kann.

Ein weiterer wesentlicher Schritt zu einem konsistenten Modell ist die Erzeugung eines Fachmodells. Das Fachmodell hat die oben beschriebenen Eigenschaften. Das Fachmodell baut auf dem Metamodell auf. Durch das Fachmodell wird die Namensgebung für Klassen, Prozess-Klassen, Attribute und Operatoren normiert.

Das in den Ansprüchen aufgeführte Verfahren dient zur Erzeugung eines Fachmodells unter vorzugsweiser Verwendung des erfindungsgemäßen Metamodells. In einem ersten Schritt wird ein Fachgebiet und ein Modellzweck bestimmt. In einem zweiten Schritt werden die Modellwissensquellen analysiert und Fachbegriffe durch Normierung von Begriffen bestimmt.
In einem dritten Schritt werden den Fachbegriffen, die Substantive sind, Klassen oder Attributen zugeordnet. Fachbegriffen, die Verben sind, werden Aktionen zugeordnet, wobei eine Aktion in Verbindung mit einer statischen Klasse zur Bestimmung einer Operation dient. Eine Aktion unterscheidet sich von einer Operation dadurch, dass erst durch die Verknüpfung mit einer Klasse eine Bedeutung entsteht. Aktionen können je nach Zuordnung unterschiedliche Bedeutungen haben. Fachbegriffe, die Adjektive sind, werden durch Attributwerte abgebildet. Diese Abbildungen gelten vorzugsweise sowohl für das statische als auch für das dynamische Modell.

In einem vierten Schritt werden die so bestimmten Klassen instanziiert, wodurch das Modell entsteht.

Das Verhältnis der einzelnen Klassen zueinander wird durch die Bestimmung der Assoziationsaussagen, Aggregationsaussagen und Abstraktionssaussagen für die dynamischen und die statischen Klassen vorgenommen.

Ein wesentlicher Punkt der vorliegenden Erfindung ist, dass Operationen statischen Klasse zugeordnet werden, die über die Zuweisungen zu Aktivitäten Bestandteil von dynamischen Prozess-Klassen werden. Prozess-Klassen können jedoch wiederum nur Operationen sein, die in statischen Klassen definiert wurden. So ist es möglich, dass ein konsistenter Programmablauf garantiert wird. Die einzelnen Aussagen, die den Ablauf eines Prozesses bestimmen, wie Schleifen- oder Bedingungsaussagen, können somit auf definierte Operationen zugreifen. Hinter diesen Operationen steht entweder ein Prozess oder Source-Code. Ein Prozess besteht jedoch wiederum aus Aktivitäten, wobei den Aktivitäten wiederum Operationen zugeordnet sind, die vorzugsweise in ein Ablaufschema eingebettet sind. Diese rekursive Definition muss durch Operationen terminiert werden, denen Source Code zugeordnet ist.

Um die Prozesse zu starten und zu beenden, werden den Prozess-Klassen Prozessstartaussagen und/oder Prozessendaussagen zugeordnet. In Abhängigkeit dieser Aussagen wird ein Prozess gestartet oder beendet. Bei diesen Aussagen handelt es sich um besonderer Arten von Aktivitäten.

Um die Aktivitäten in einen sinnvollen Kontext betten zu können, wie man ihn aus anderen Programmiersprachen bereits kennt, sind den Prozess-Klassen Ablaufaussagen insbesondere Reihenfolgeaussagen, Synchronitäts-Aussagen, Wiederholungsaussagen und/oder Bedingungsaussagen zugeordnet. Hierbei handelt es sich um Konstrukte wie For-Schleifen, If-Then-Else-Anweisungen oder Fork-Anweisungen.

Um eine saubere Gliederung des Fachgebietes und des Fachraumes zu erlangen, werden die Fachobjekte insbesondere nach Aggregations-, Assoziations- und Vererbungsaspekten gegliedert. Hierbei wird das Fachgebiet nach statischen und dynamischen Fachobjekten gegliedert und analysiert.

Die so gewonnenen Informationen werden in einem Wissensverwaltungsmodell gespeichert, das vorzugsweise auf dem oben beschriebenen Metamodell basiert. Man kann sich unter dem Wissensverwaltungsmodell eine Datenbanksystem vorstellen, das auf der Basis des oben beschriebenen Metamodells erzeugt wurde.

Sichten sind ein Mittel, um auf Informationen aus unterschiedlichen Blickwinkeln zuzugreifen. Die vorliegende Erfindung bietet hierzu ein Modell zur Verwaltung und Erstellung von Sichten an. Das Sichten-Modell ist ebenfalls ein Programm, das auf der Grundlage des Metamodells, wie es oben bereits beschrieben wurde, erzeugt wurde.

Ein weiterer Bestandteil der vorliegenden Erfindung ist eine Vorrichtung. Diese Vorrichtung dient zur Erzeugung eines Modells auf der Basis eines Metamodells. Diese Vorrichtung weist Ein- und Ausgabemittel zur Datenein- und Datenausgabe auf. Ein Speicherbereich und eine Verarbeitungseinheit dienen zur Überwachung der Vorgaben des Metamodells und des Modells.

In einem ersten Schritt, bei dem die Konfiguration des Modells vorgenommen wird, wird die Erzeugung des Modells überwacht, so dass die Vorgaben des Metamodells eingehalten werden.
Die Verarbeitungseinheit überwacht in einem zweiten Laufzeitschritt, dass bei der Verwendung, d.h. bei der Instanzzierung und bei den entsprechenden Abfragen die Vorgaben des Metamodells eingehalten werden, indem die Eingaben überprüft werden und die entsprechenden Prozesse aktiviert werden.

Weiterhin werden durch die Vorrichtung die Verfahrensschritte durchgeführt, die bereits oben beschrieben wurden.
Die Vorrichtung überwacht, dass nur die Elemente zur Beschreibung des Modells Verwendung finden, die das Metametamodell zur Verfügung stellt. Die Verarbeitungseinheit bildet bei der Erzeugung des Computerprogramms die beschriebenen Entity-Klassen auf entsprechende Strukturen einer Zielsprache ab. Eine solche Abbildung kann entweder auf ein Datenbankschema erfolgen oder auf Klassendefinitionen, wie sie bei bekannten Programmiersprachen verwendet werden.

Die Prozess-Klassen und ihre Aktivitäten werden solange ersetzt, bis alle Operationen durch Programmcode dargestellt sind, wobei der Programmcode in Verzweigungen und/oder Bedingungen und/oder Sequenzen und/oder Schleifen und/oder Synchronisation eingebettet wird. Wie bereits oben ausgeführt, wird die rekursive Definition der Prozess-Klassen solange aufgelöst, bis nur noch Programmcode vorhanden ist, der den Operationen zugeordnet war.

Die Verarbeitungseinheit überwacht zur Laufzeit, ob bei den entsprechenden Abfragen die Vorgaben des Metamodells eingehalten werden, indem die Eingaben und Ereignisse überprüft werden. In Abhängigkeit der Ereignisse werden die entsprechenden Prozesse aktiviert, wodurch die korrekte Instanziierung des Modells sichergestellt wird. Eine weitere wichtige Grundlage der vorliegenden Erfindung ist das Metamodell.

Die Vorrichtung wird vorzugsweise durch eine Software gesteuert, die die beschriebenen Verfahren implementiert.

Die Grundlage der Vorrichtung und des Verfahrens zur Erzeugung eines Modells ist das im folgenden beschriebene Metamodell. Das Metamodell umfasst ein statisches Kernmodell, das Entity-Klassen beinhaltet, die durch Attribute und Operationen beschrieben werden, wobei die Operationen das Verhalten der Instanzen der Entity-Klassen, insbesondere den Zustand der Attribute, bestimmen, wobei den Operationen Prozess-Klassen oder Programmcode zugeordnet sind. Wie bereits oben beschrieben wurde, wird hierdurch sichergestellt, das lediglich Prozesse entwickelt werden, die Aktivitäten aufweisen, wobei diese Aktivitäten immer auf Operationen zurückgreifen. Durch die Verwendung eines Fachmodells, wird die Namensgebung eindeutig festgelegten.

Das Metamodell umfasst ein dynamisches Kernmodell, das Prozess-Klassen enthält, die durch Aktivitäten beschrieben werden, wobei die Aktivitäten den Ablauf des Prozesses beschreiben, indem auf Operationen zurückgegriffen wird, die durch Verzweigungen und/oder Bedingungen und/oder Sequenzen und/oder Schleifen und/oder Synchronisation miteinander verknüpft sind. Die Verzweigungen, Bedingungen, Sequenzen, Schleifen und die Synchronisation stellen Konstrukte dar, um einen Ablauf des Prozesses zu beschreiben, wie er aus Programmiersprachen bekannt ist.

Somit besteht eine Prozessklasse immer aus mehreren Aktivitäten, die in einem bestimmten Verhältnis zueinander stehen. Sollte ein Prozess definiert werden, der nicht als Operation bereits in einer Objektklassen vorhanden ist, so muss dieser erst in der entsprechenden Objektklasse angelegt werden. Sollte ein Fachmodell verwendet werden, so kann diese Operation nur angelegt werden, wenn ein entsprechender Fachbegriff bereits vorhanden ist.

Weitere vorteilhafte Ausführungsformen sind in den Unteransprüchen aufgeführt. Es folgt eine detaillierte Beschreibung anhand der Zeichnungen. Es zeigt(en):
- Figur 1: eine statische und dynamische Metamodell-Architektureben, wobei die Darstellung in ein statisches und ein dynamisches Modelle unterteilt ist, die M3-Ebene zeigt das Metametamodell, die M2-Ebene bestimmt die Form der Strukturierung des Fachwissens, die Ml-Ebene beschreibt das Fachwissen strukturiert, wobei das instanzierte M1-Modell die Fachinformation ist;
- Figur 2: eine Metamodellübersicht, wobei das Kernmodell im Zentrum steht und die darum angeordneten Modelle vom Kernmodell abgeleitet sind;
- Figuren 3a-c: ein Beispiel für Klassen, Attribute und Assoziationen, wobei die Klasse das Einfamilienhaus ist mit seinen Attributen Name, Haustypen, Eigentümer und der Eigentümer eine weitere Klasse ist, wobei die Kardinalität der Assoziationen zwischen Eigentümer Einfamilienhaus 1:N ist, d. h. ein Eigentümer kann mehrere Einfamilienhäuser sein eigen nennen;
- Figuren 4a-b: eine Auflistung der elementaren Operationen, wobei sich der Bezug entweder auf ein Objekt oder nur auf die Attributwerte auswirkt;
- Figuren 5a-b: unterschiedliche Rollen, die eine Klasse in Abhängigkeit von seiner Assoziation annehmen kann, wobei der Rollenbezeichner diese Rolle bestimmt;
- Figuren 6a-b: weitere Beispiele für unterschiedliche Rollen, so kann der Kaufvertrag als Klasse als auch als Assoziation ausgebildet sein,
- Figuren 7a-c: Beispiele für die alternative Darstellung der Klasse Person und ihrer Instanzen, wobei die Attribute auch in einer anderen Klasse ausgelagert sein können, die durch eine entsprechende Assoziation auf die Klasse Person zeigt;
- Figuren 8a-b: Beispiele für einen Begriffsbaum und seine Darstellung in einem UML-Diagramm;
- Figur 9: ein UML-Diagramm, das eine Aggregation definiert;
- Figur 10: ein Beispiel für eine Vererbung in einem UML-Diagramm, wobei Straßenfahrzeuge, Luftfahrzeuge, Wasserfahrzeuge und Schienenfahrzeuge von der Klasse Fahrzeuge abgeleitet sind, die die Attribute Name, Motorleistung, Nutzlast, Geschwindigkeit und Gewicht vererbt;

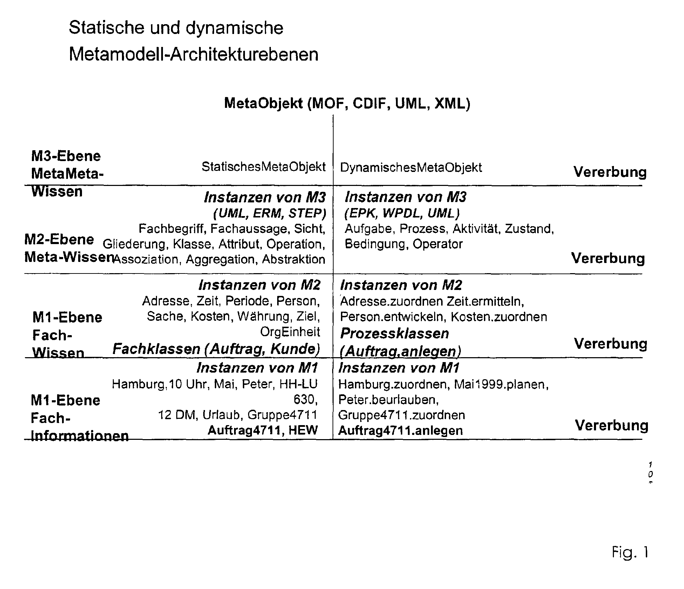

- Figur 1 1: symbolisch einen Objekt Lebenszyklus, wobei die Objektklassen instanziiert wird, der sich das so entstandene Objekt über seinen Zustand definiert;

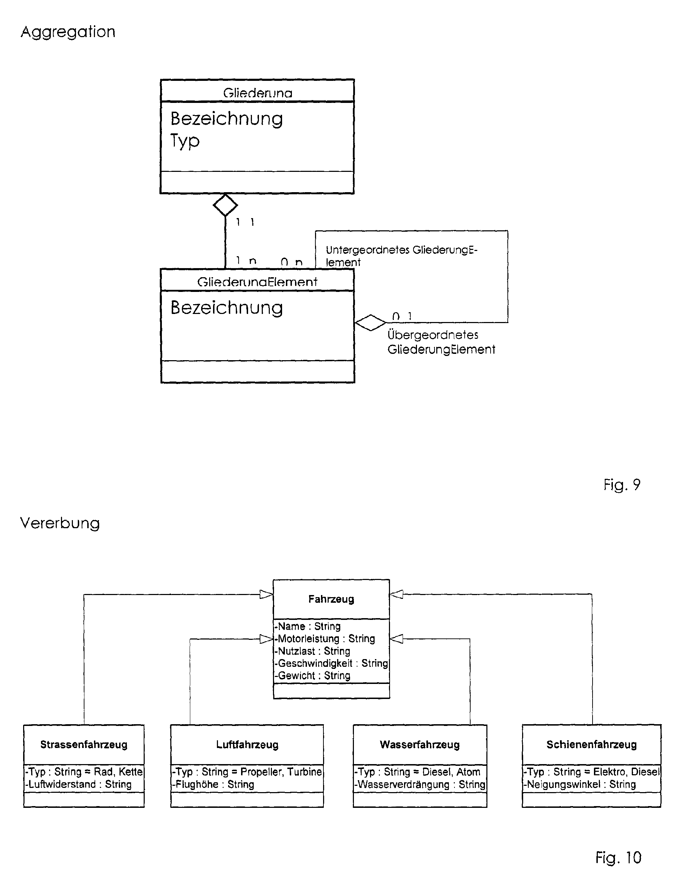

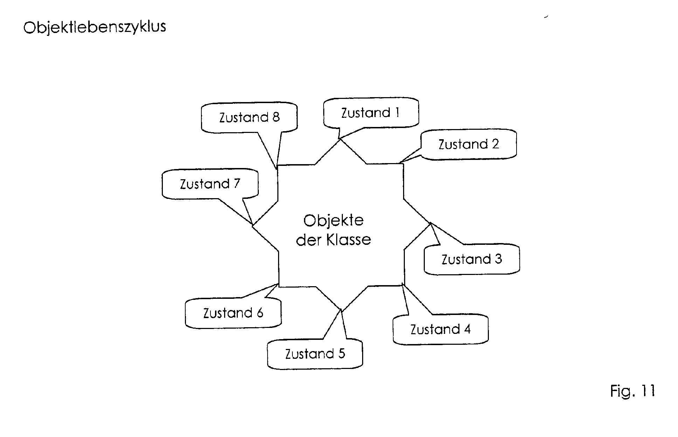

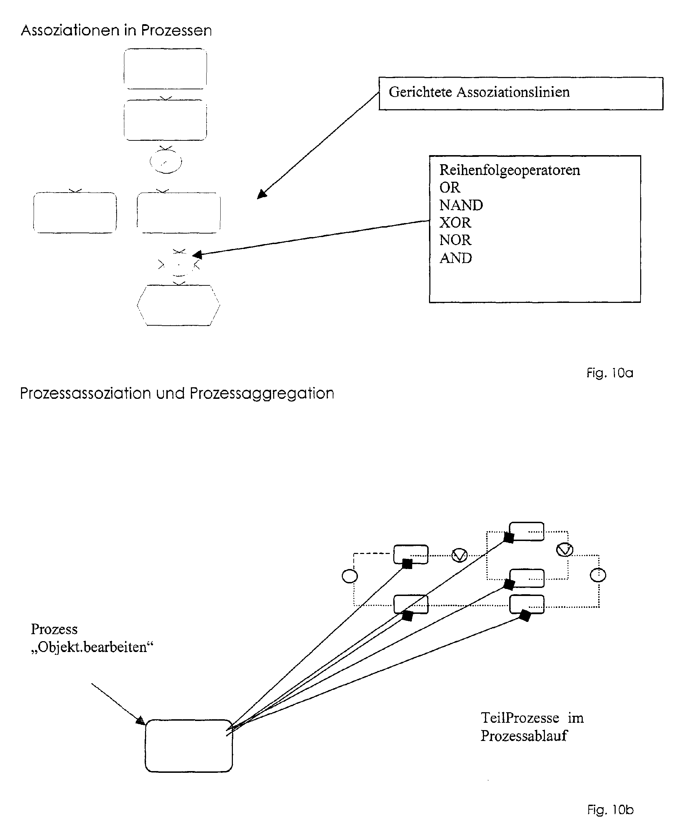

- Figuren 10a-b: Beispiele für Assoziationen und Aggregationen in Prozessen;

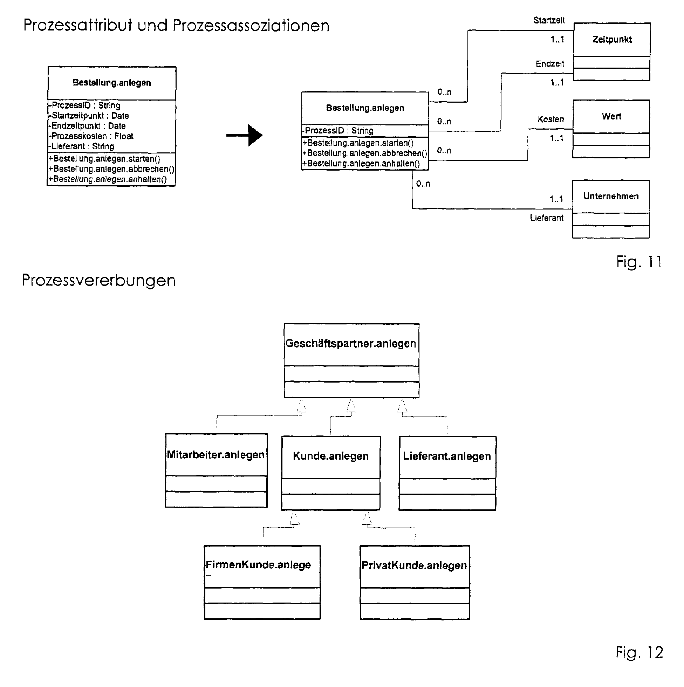

- Figur 11: Assoziationen in Prozessen während der Ausführung eines Prozesses;
- Figur 12: ein Beispiel für eine Prozess Vererbung;

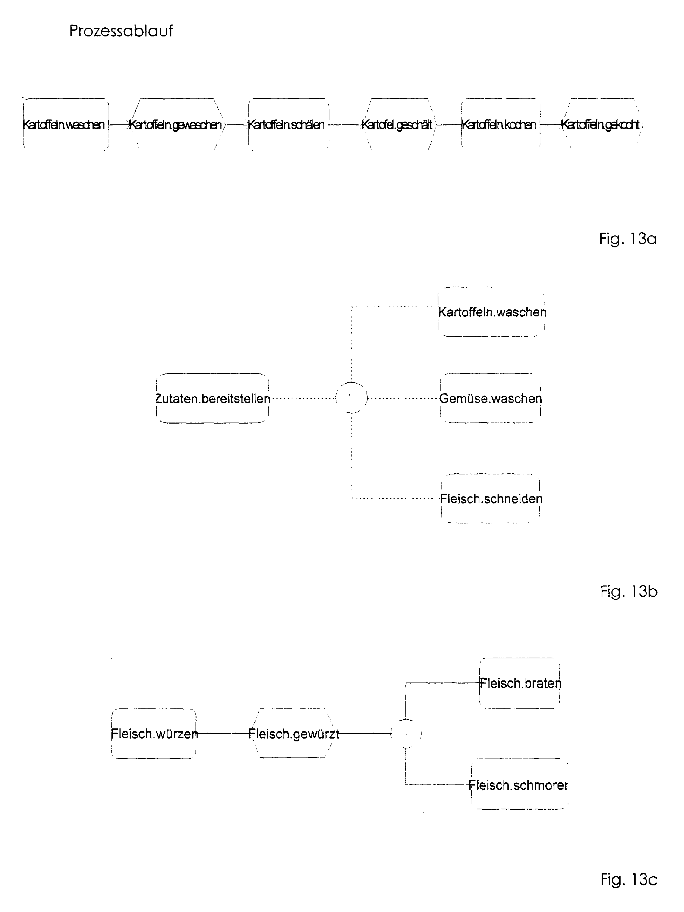

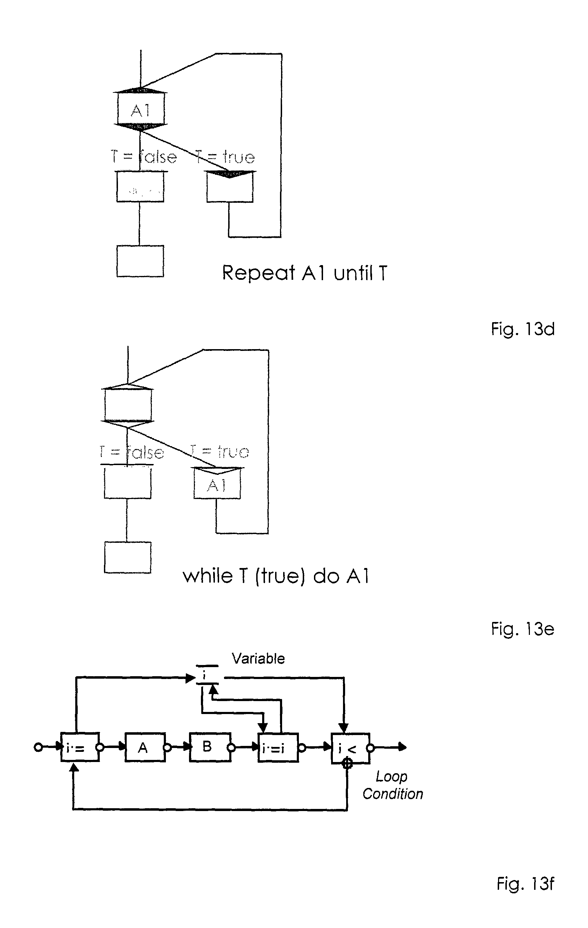

- Figur 13a-g: mögliche Prozessabläufe wie die sequenzielle, die parallele, die schleifenförmige, die bedingten und die synchronisierte;

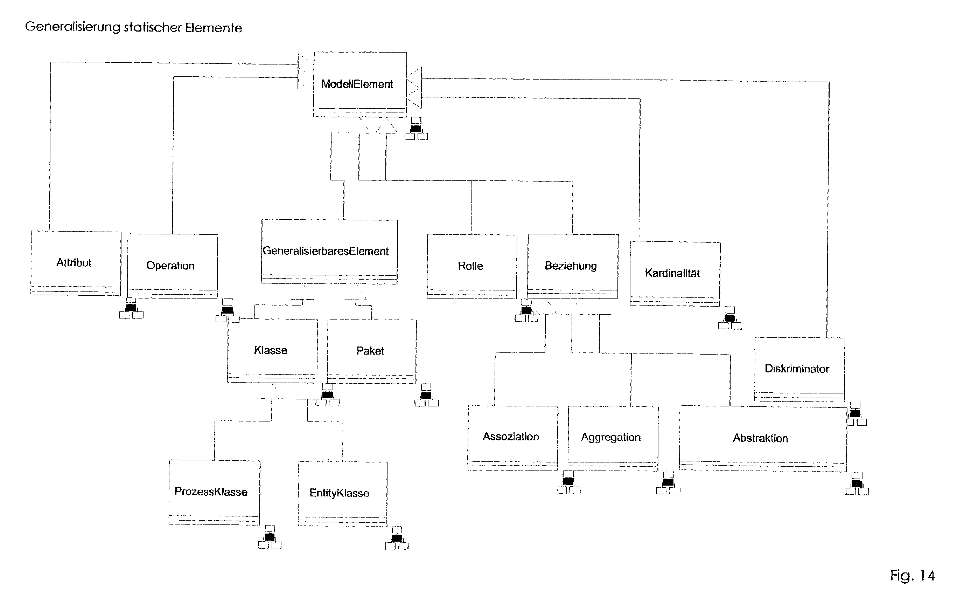

- Figur 14: ein UML-Diagramm, das die Generalisierung eines statischen Elements zeigt, wobei die Elemente unterschiedliche Rollen aufweisen können, in Beziehung miteinander stehen können und generalisierbar sind, wobei die vier kleinen Kästchen, in deren Mitte sich ein schwarzes Kästchen befindet, zeigen, dass es sich hierbei nur um einen Ausschnitt handelt und die einzelnen Elemente noch feiner definiert sind;

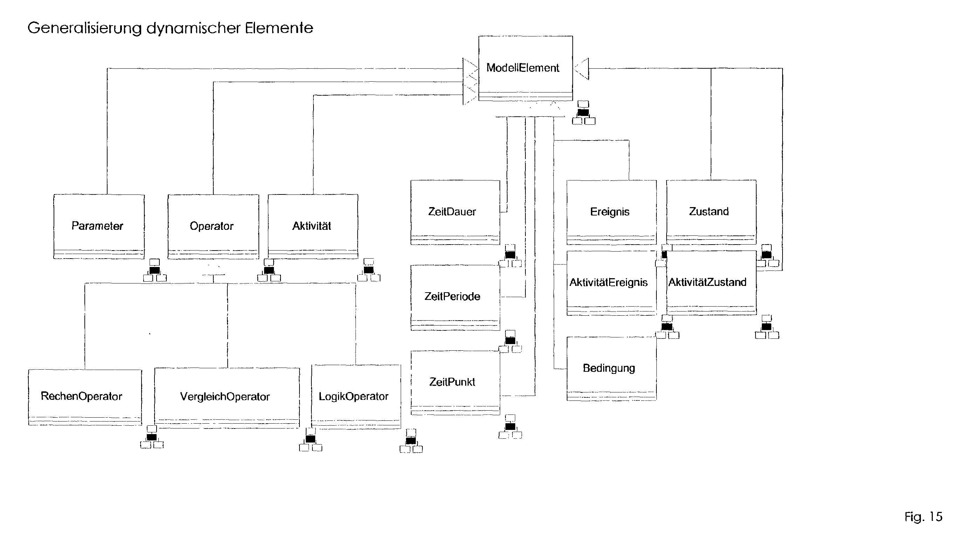

- Figur 15: die Generalisierung eines dynamischen Elementes, wobei die einzelnen UML-Klassen selbstsprechend sind;

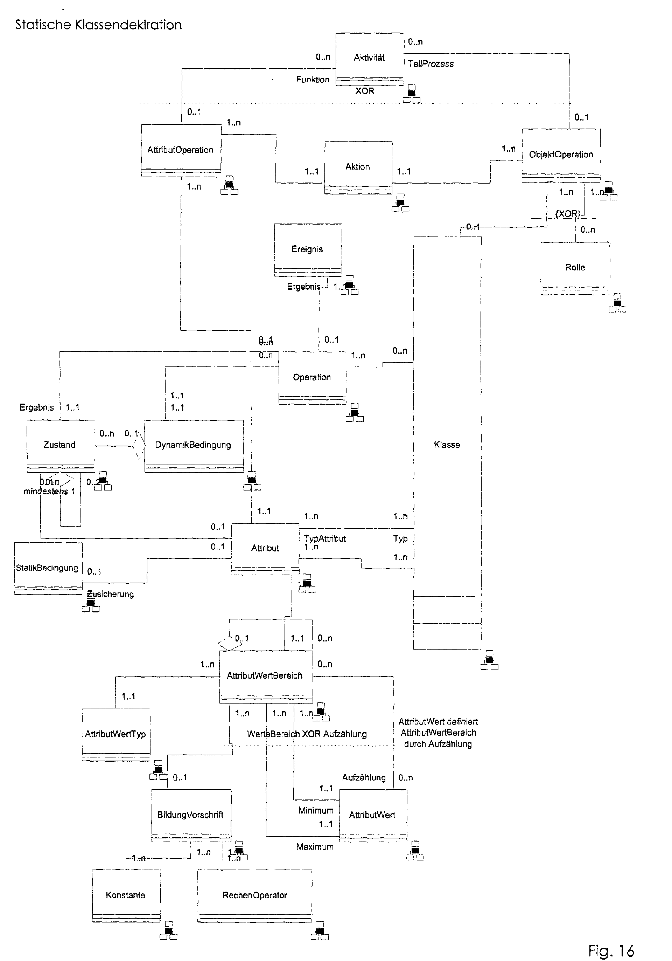

- Figur 16: ein UML-Diagramm für statische Klassendeklarationen, die Entity-Klassen beschreiben;

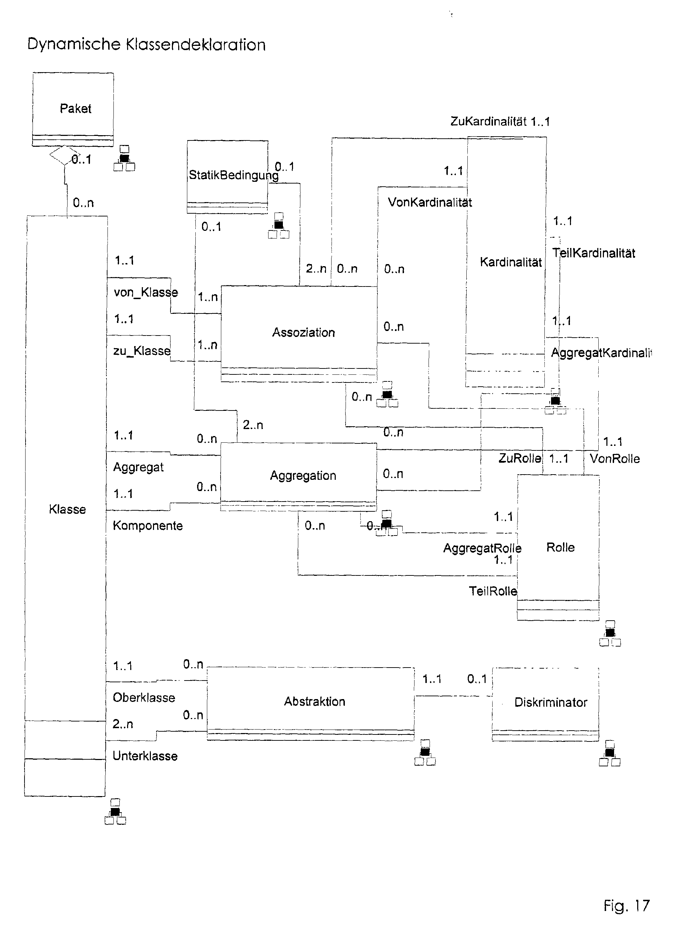

- Figur 17: die möglichen Statikrelationen einer statischen Klasse;

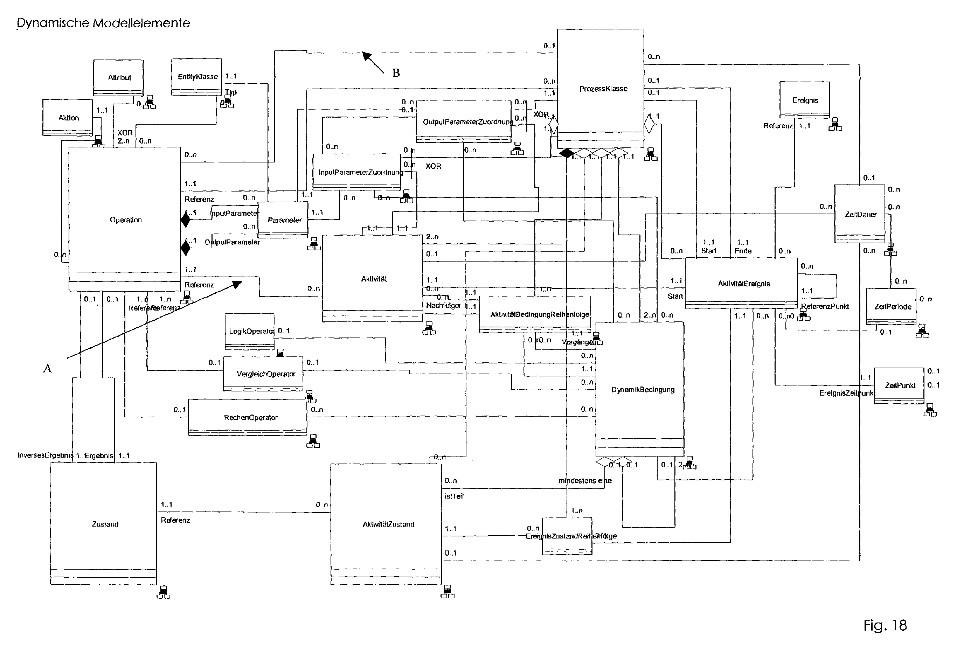

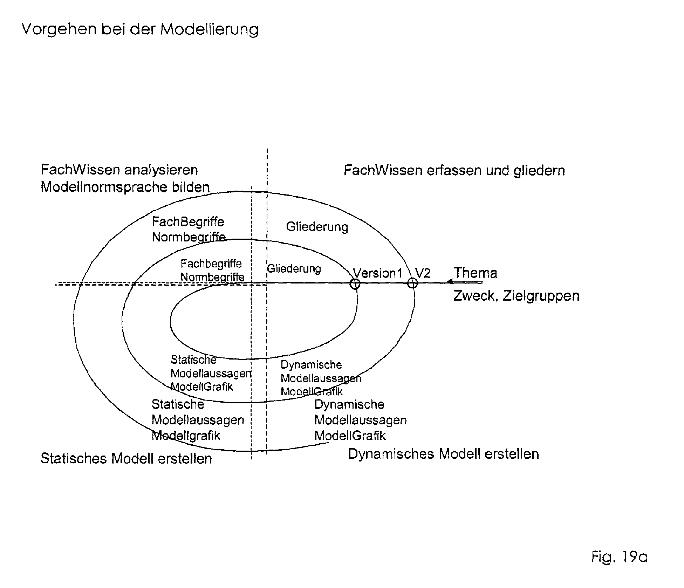

- Figur 18: den grundsätzlichen Aufbau von dynamischen Modellelementen, wobei zu beachten ist, dass den Prozessklassen durch die Klassen Aktivität Operationen (B) zugeordnet werden, wobei die Prozess-klassen wiederum als Operationen (A) definiert sind;

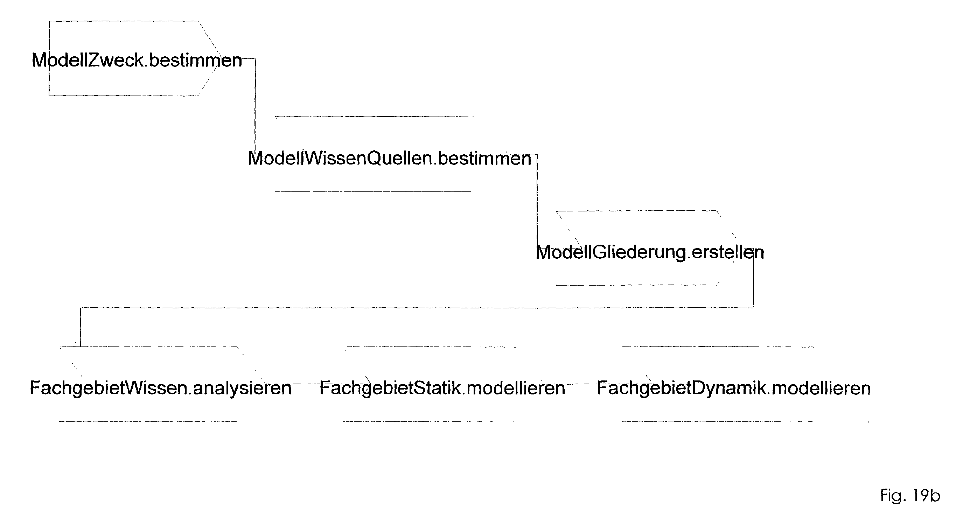

- Figuren 19a-b: das grundsätzliche Vorgehen bei einer Modellierung;

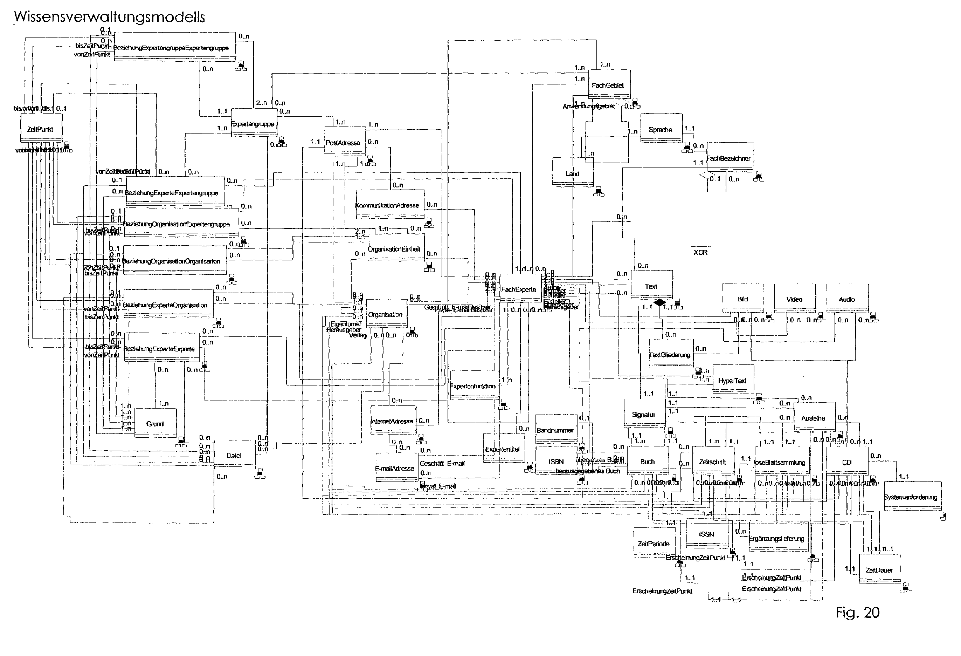

- Figur 20: ein UML-Diagramm des Wissensverwaltungsmodell, auf dessen Grundlage ein Datenbanksystem zur Verwaltung der Wissens generiert wird;

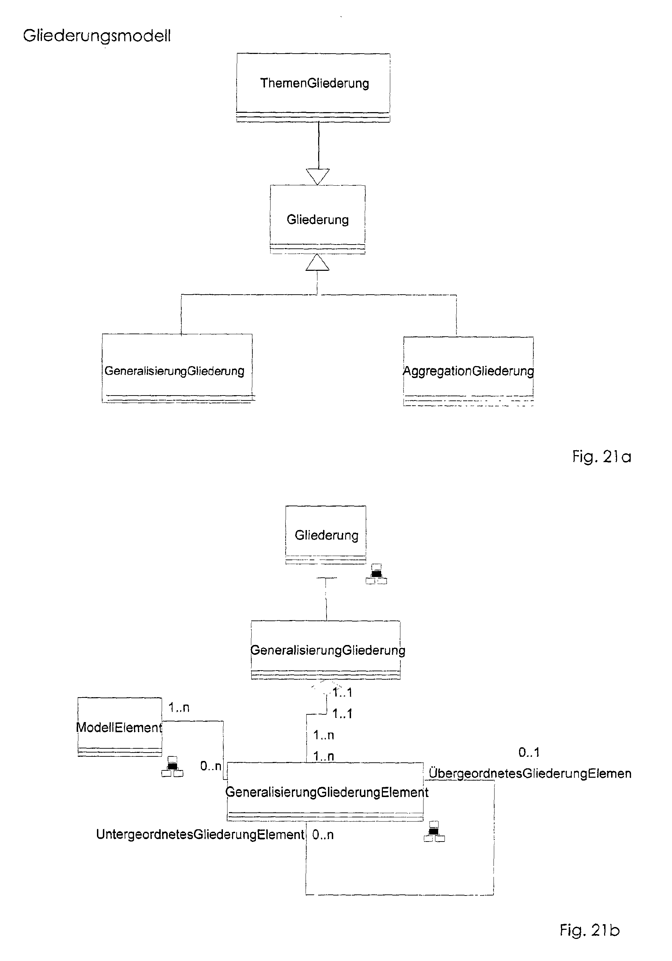

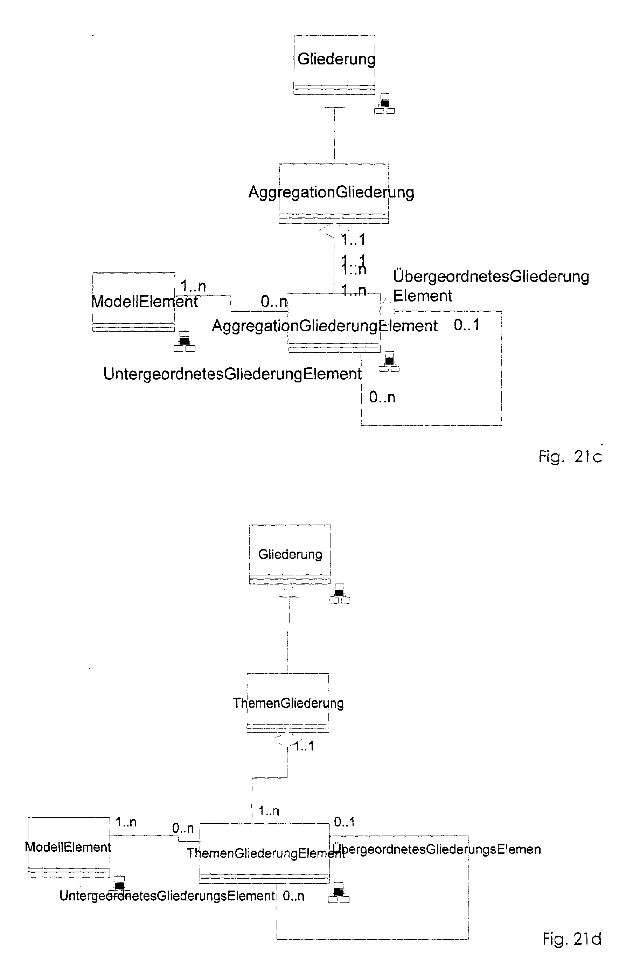

- Figuren 21a-d: UML-Diagramme, die die Gliederung von Objekten beschreiben;

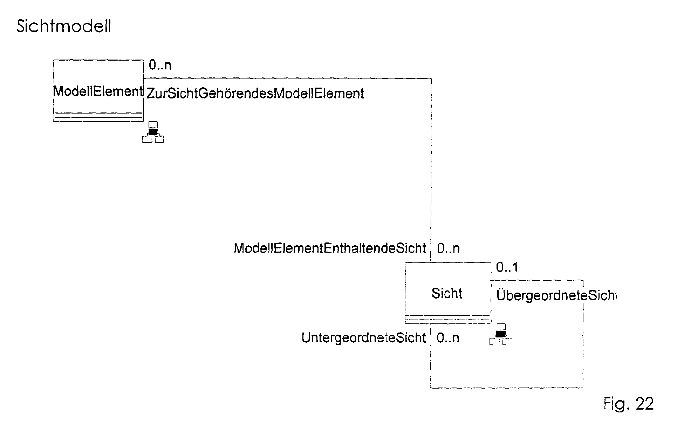

- Figur 22: ein UML-Diagramm, das das Sichtmodell beschreibt;

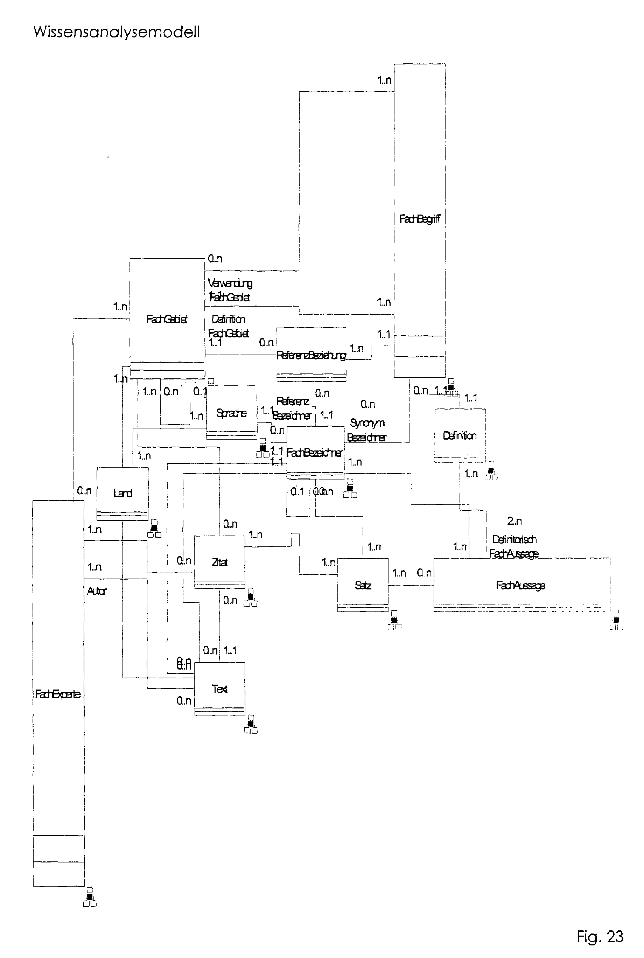

- Figur 23: den Aufbau eines Wissensanalysemodells, das die einzelnen Quellen in Fachbezeichner zerlegt;

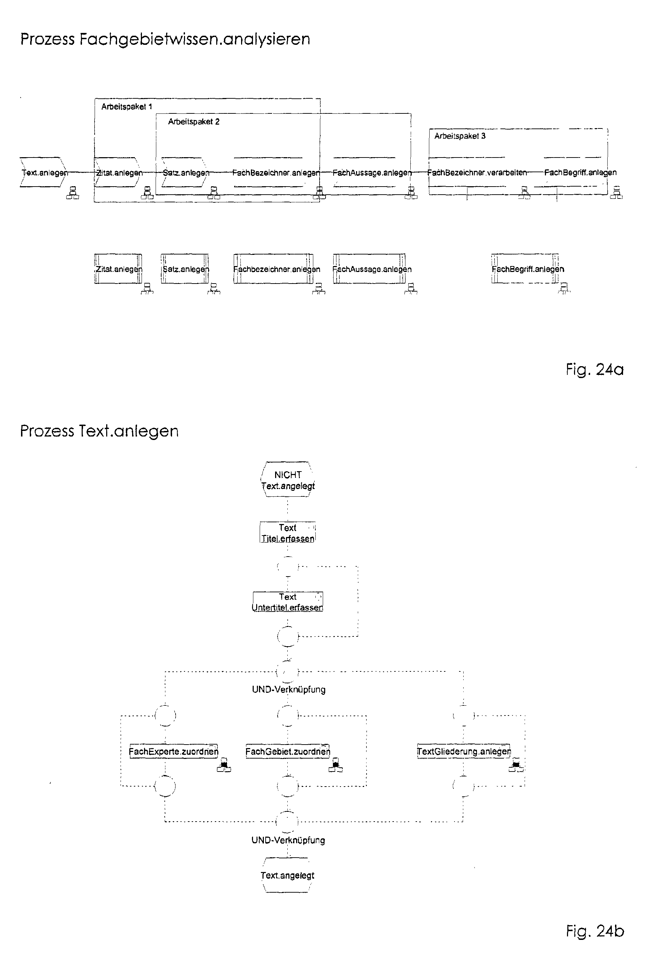

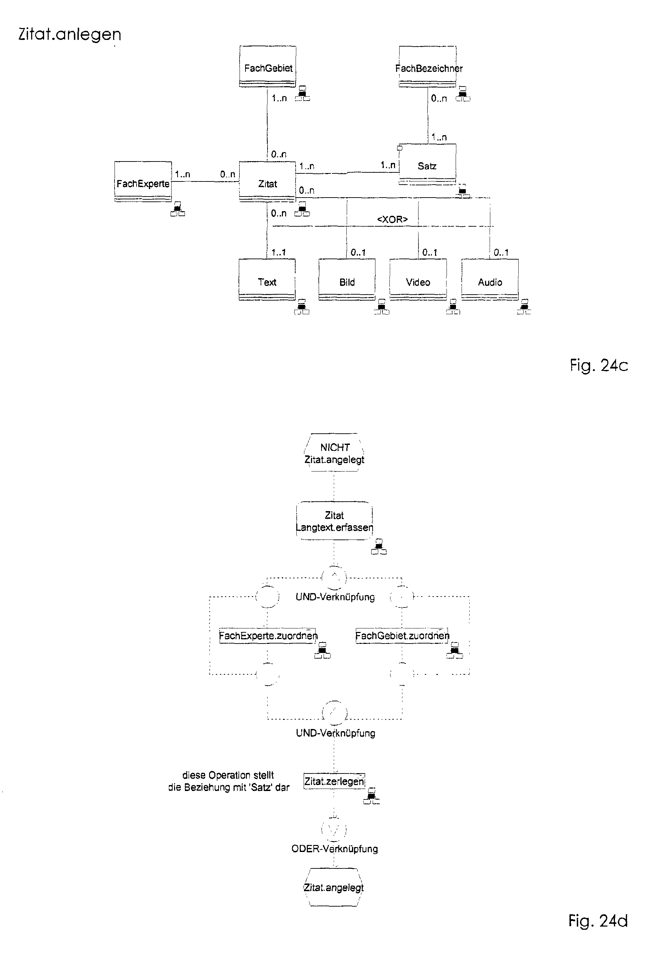

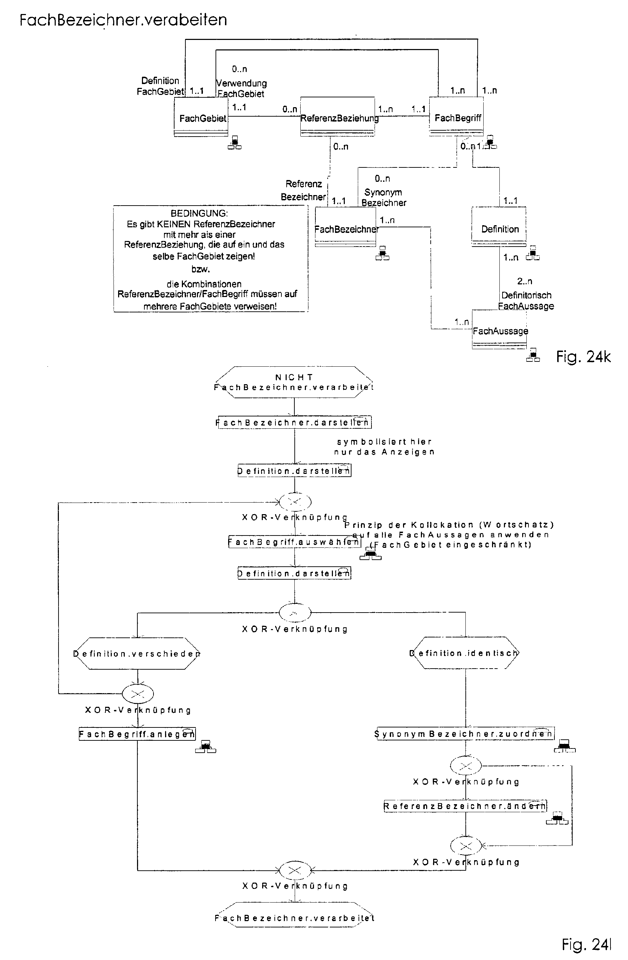

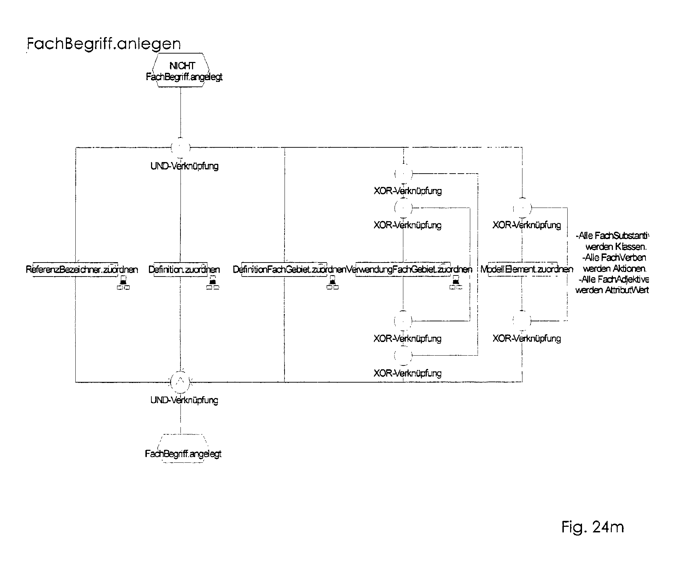

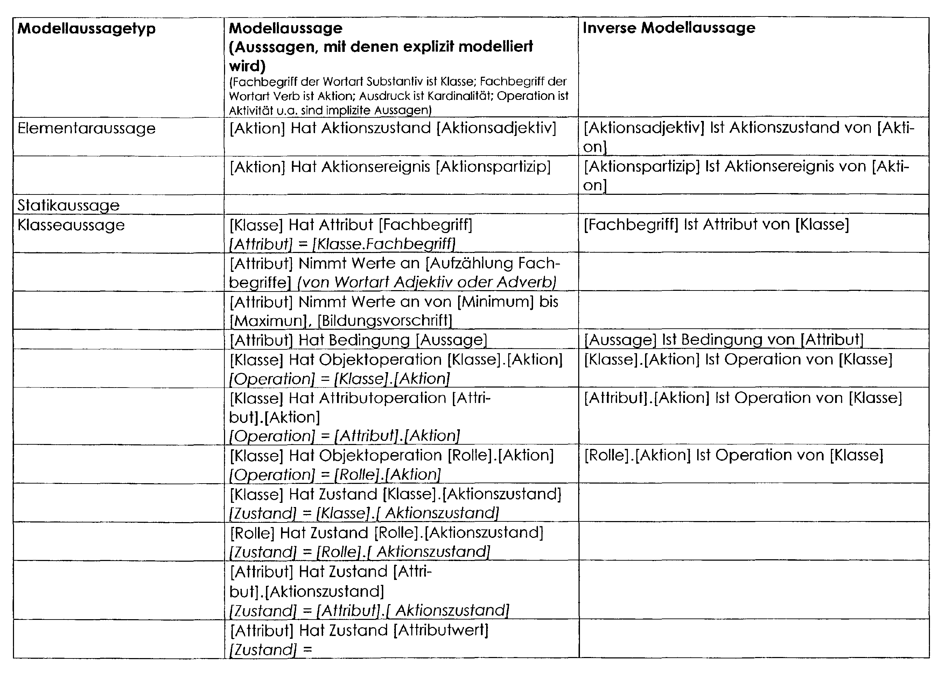

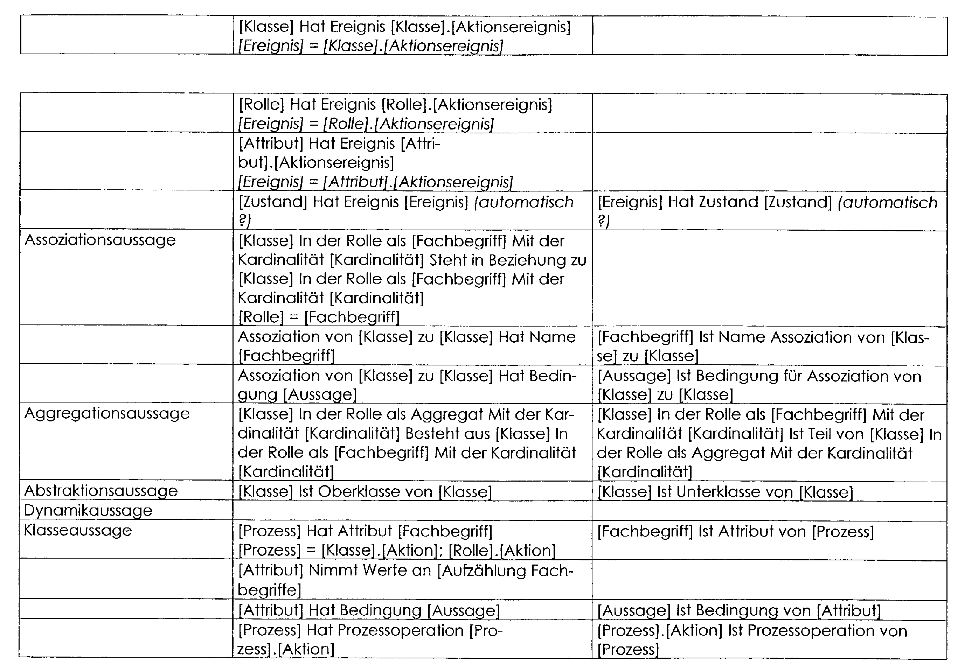

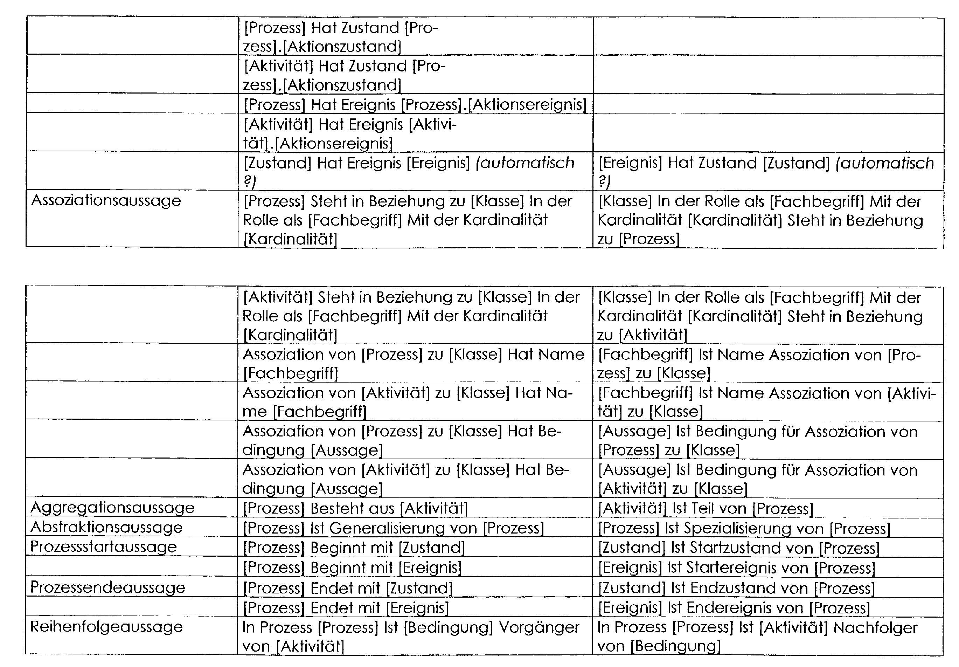

- Figuren 24a-m: den statischen und den dynamischen Aufbau von Teilprozessen, die bei der Wissensanalyse angewandt werden;

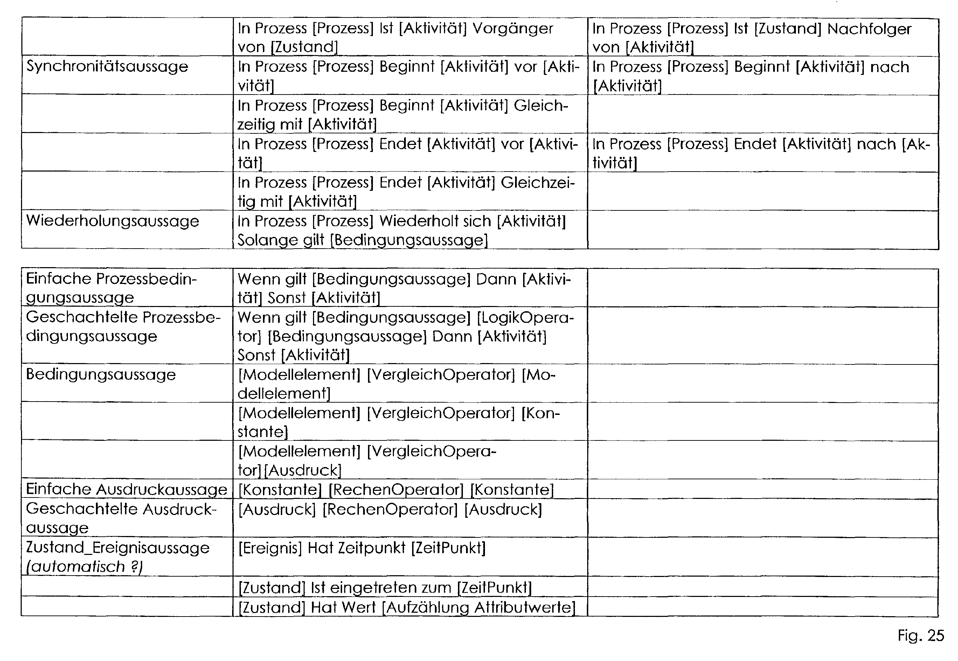

- Figur 25: anhand einer Tabelle, wie die Fachbegriffe bei der Modellierung mit dem Metamodell verknüpft werden;

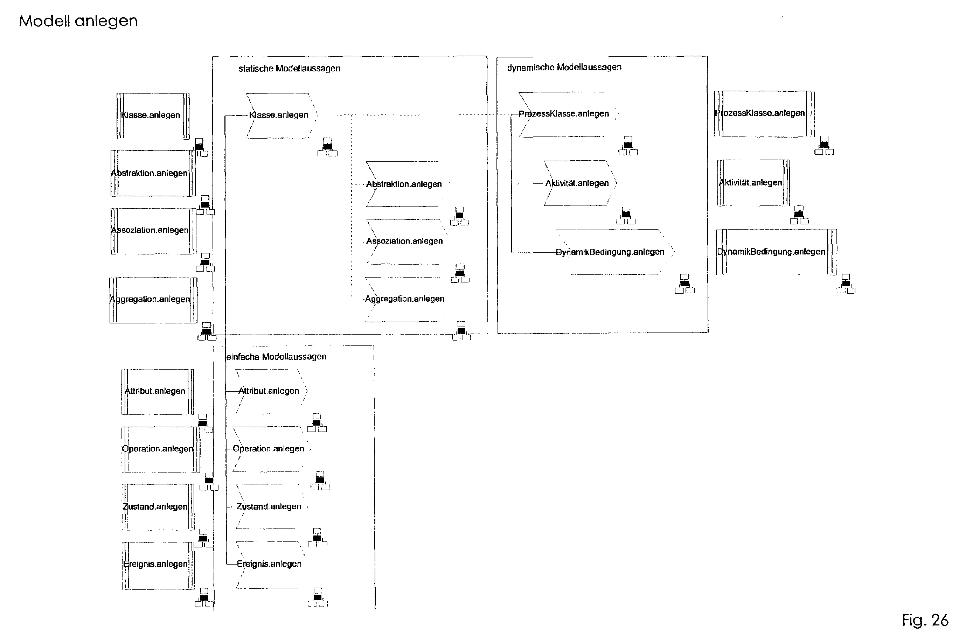

- Figur 26: anhand eines UML-Diagramms, das dynamische Komponenten aufweist, wie ein Modell angelegt wird, wobei statische Modellaussagen und dynamische Modellaussagen berücksichtigt werden;

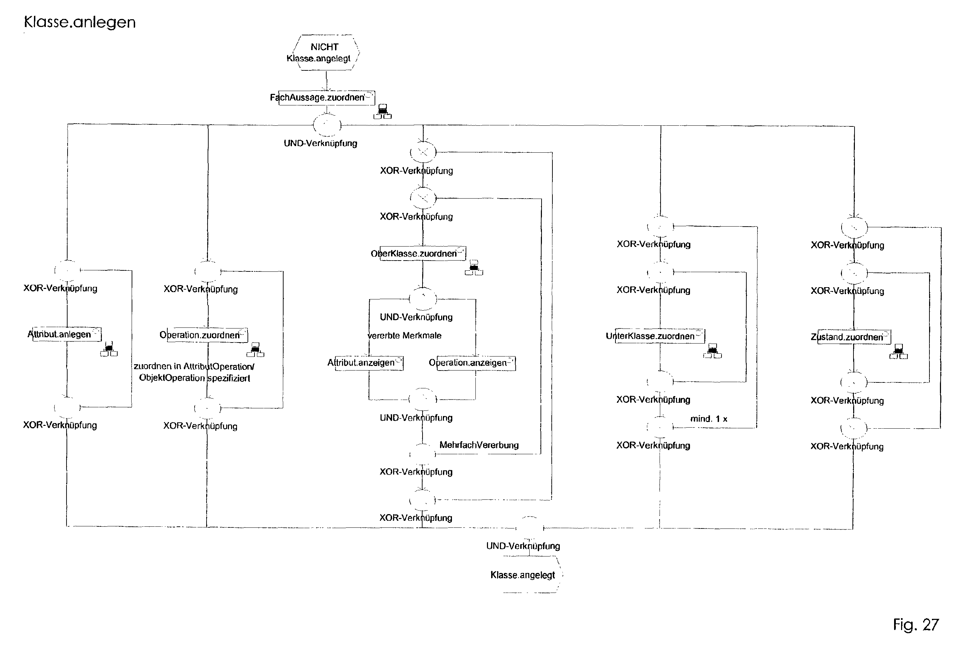

- Figur 27: den dynamischen Ablauf für das Anlegen einer Klasse;

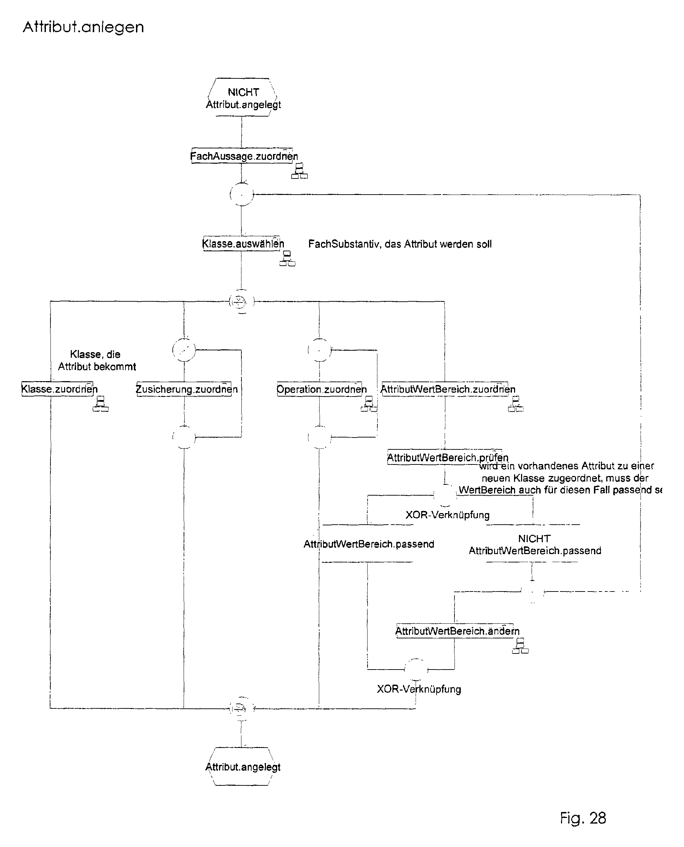

- Figur 28: den dynamischen Ablauf für das Anlegen eines Attributs;
- Figuren 29a-b: anhand eines UML-Diagramms den Aufbau der Operation Objekt-Anlegen und den entsprechenden dynamischen Ablauf;

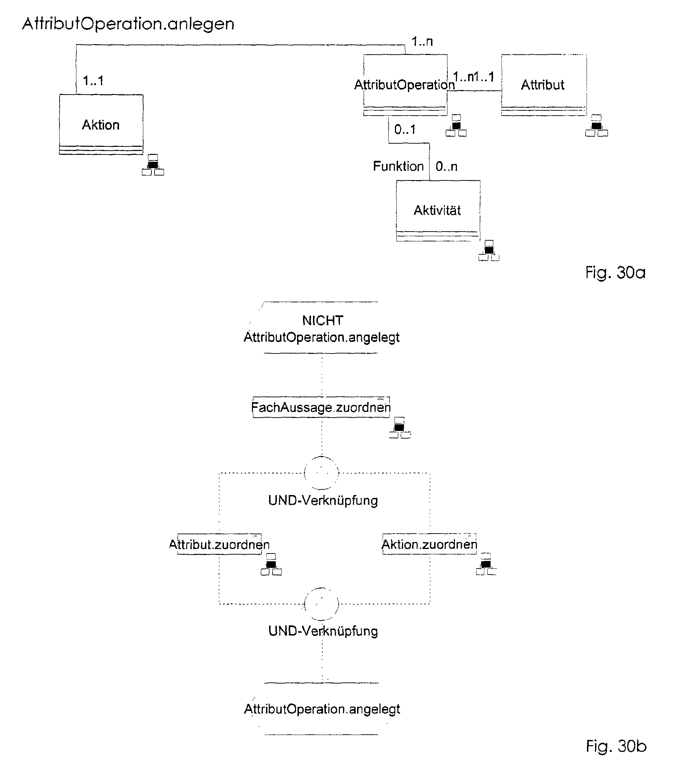

- Figuren 30a-b: die Operation Attribut-Anlegen in einem UML Diagramm und in einem Ablaufdiagramm

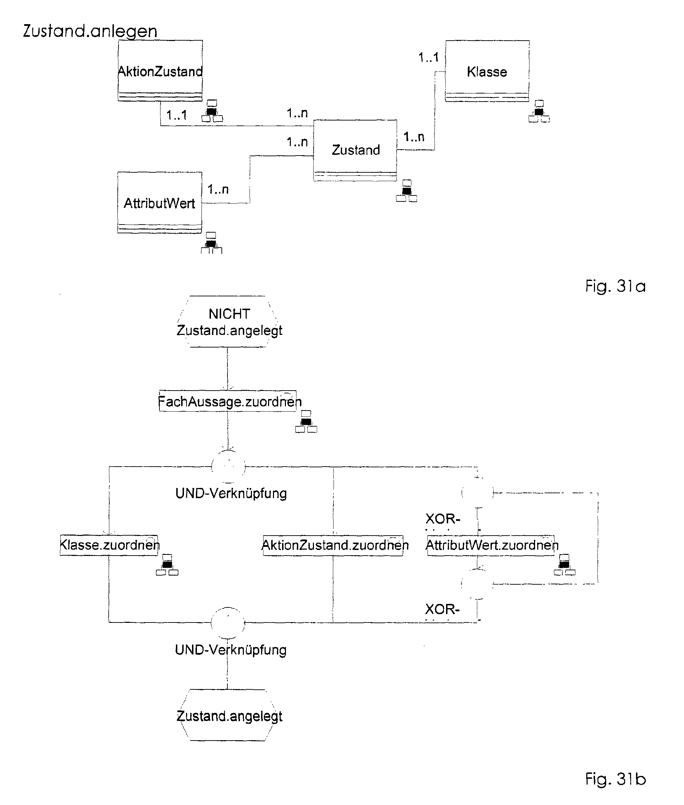

- Figuren 31a-b: die Operation Zustand-Anlegen in einem UML-Diagramm und in einem Ablaufdiagramm;

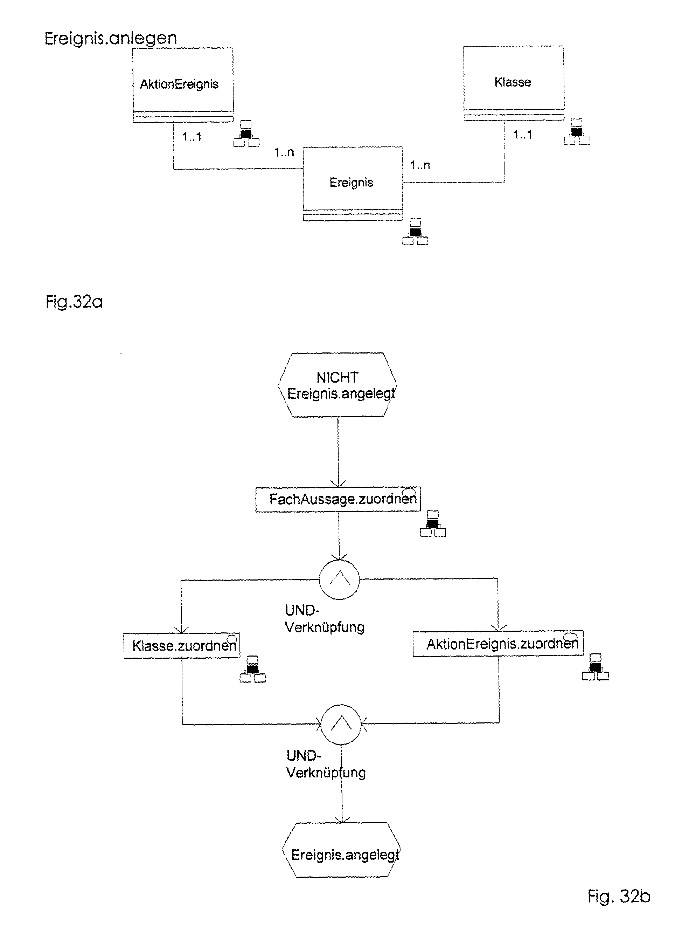

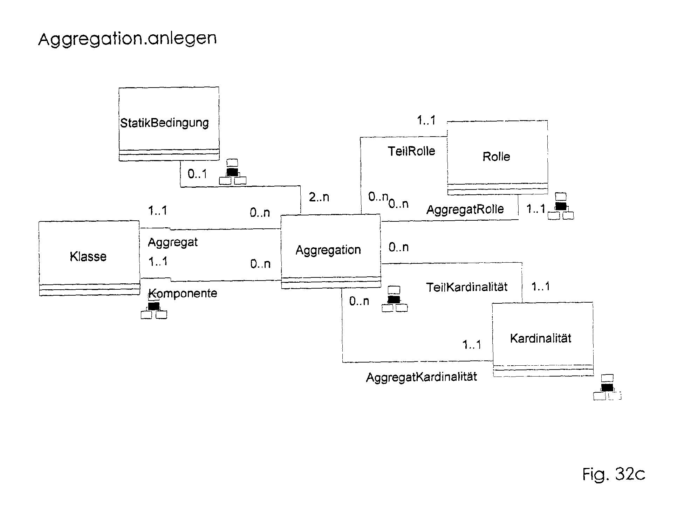

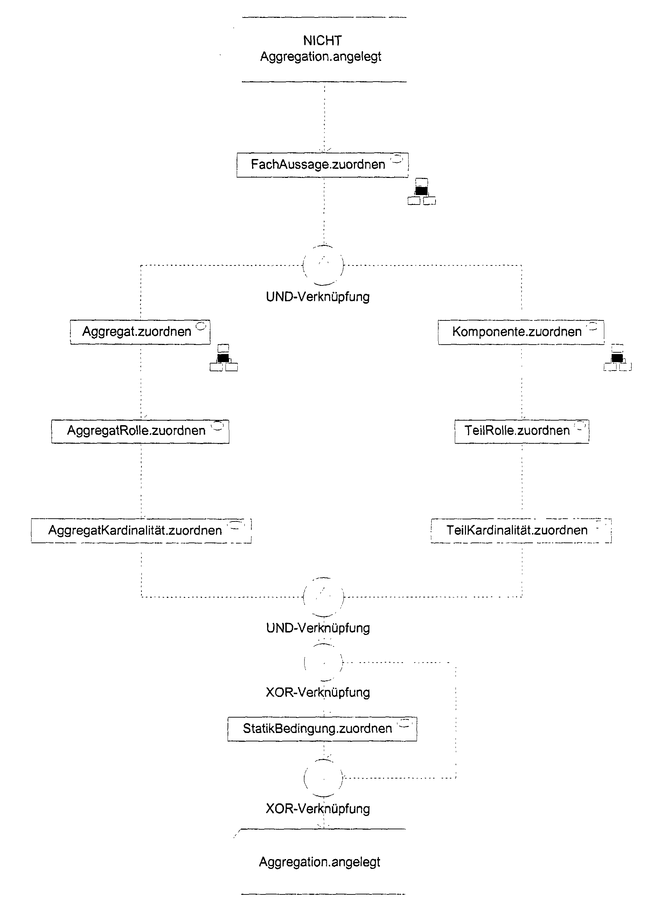

- Figuren 32a-b: die Operation Ereignis-Anlegen in einem UML-Diagramm und in einem Ablaufdiagramm;

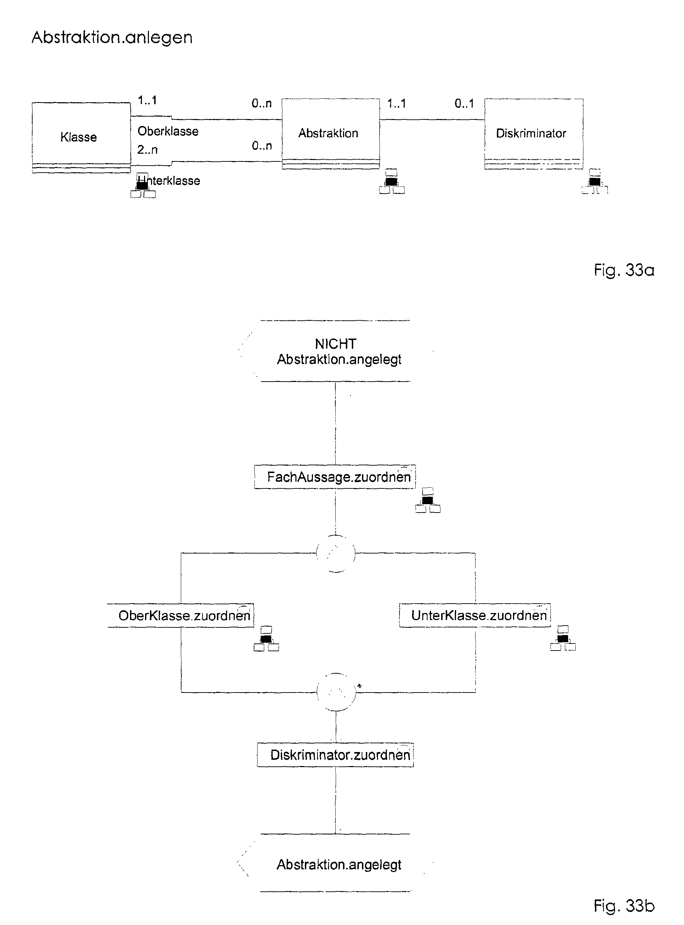

- Figuren 33a-b: die Operation Abstraktion-Anlegen in einem UML-Diagramm und in einem Ablaufdiagramm;

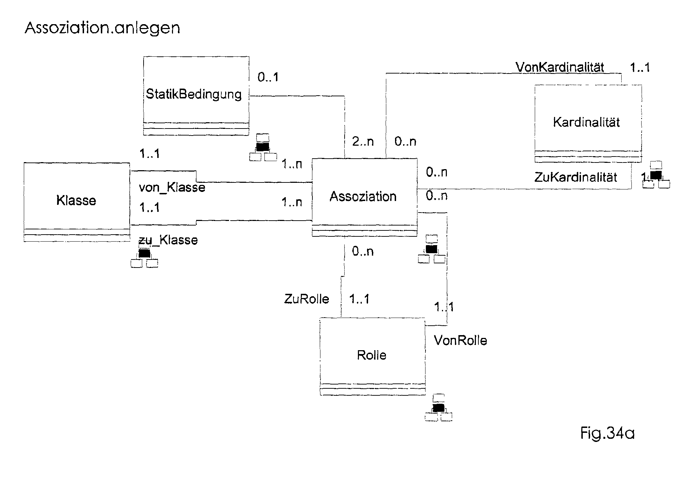

- Figuren 34a-b: die Operation Assoziationen-Anlegen in einem UML-Diagramm und in einem Ablaufdiagramm;

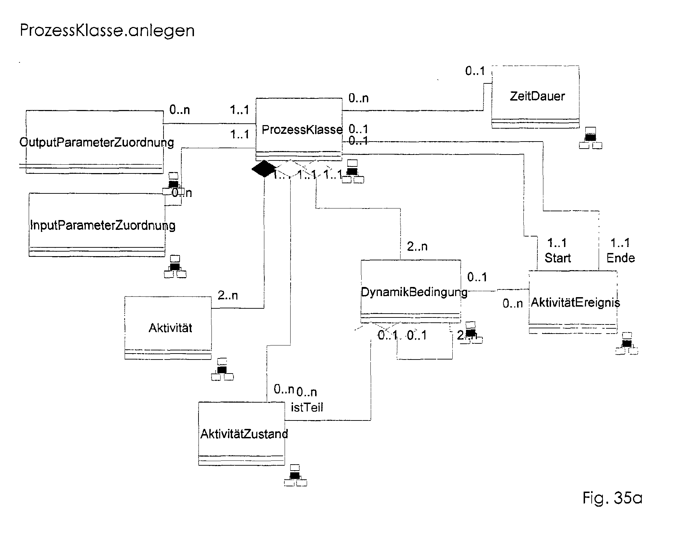

- Figuren 35a-b: die Operation Prozessenklassen-Anlegen in einem UML-Diagramm und in einem Ablaufdiagramm;
- Figuren 36a-b: die Operation Aktivität-Anlegen in einem UML-Diagramm und in einem Ablaufdiagramm;

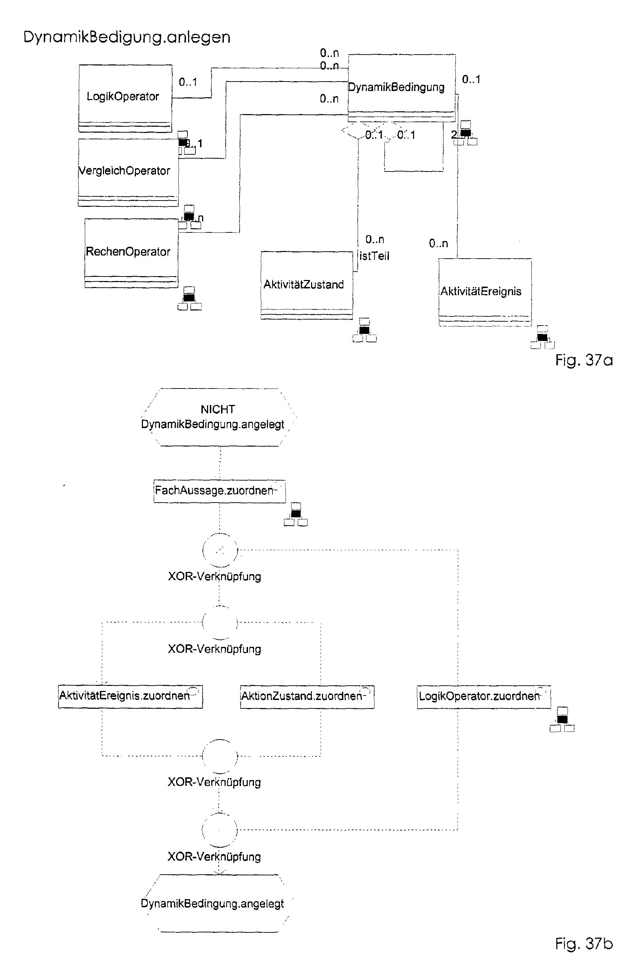

- Figuren 37a-b: die Operation Dynamikbedingungen-Anlegen in einem UML-Diagramm und in einem Ablaufdiagramm;

Zur Wahrung der Übersicht sind die einzelnen Kapitel und Abschnitte mit Nummern versehen. Im Folgenden wird auf die in den Figuren dargestellten Beispiele detailliert eingegangen.

### 1. Metamodelldefinition

Das Metamodell ist ein Modell eines Modells.

Ziel des Modellierens ist es ein Wissens- oder Fachgebiet in einem Beschreibungsmodell abzubilden oder anders ausgedrückt Wissensreferenzmodelle zu modellieren.

Zur Erstellung eines solchen Modells wird eine "Sprache" verwendet, durch die die Elemente des Modells beschrieben werden. Außerdem wird bei der Erstellung des Modells eine bestimmte Vorgehensweise zugrunde gelegt. Daraus leiten sich die Aufgaben des Metamodells ab:

Eine Aufgabe des Metamodells ist es, die "Sprache" des Modells abzubilden, d.h. alle benutzten Modellelemente in ihrer inneren (Beschreibung jedes einzelnen Modellelements) und äußeren (Beschreibung der Beziehungen zwischen den Modellelementen) Struktur zu beschreiben.

Eine weitere Aufgabe ist es, den Prozess der Modellbildung abzubilden oder anders ausgedrückt das Vorgehen bei der Modellierung.

### Zusammengefasst ist festzustellen:

Das Metamodell ist ein Bauplan zur Beschreibung der dynamischen und statischen Elemente. Diese Beschreibung erfolgt in zweierlei Hinsicht, nämlich in bezug auf die verwendete "Modellierungssprache" und in bezug auf den Modellierungsprozess.

### 2. Metamodellarchitektur

Die Figur 1 zeigt die Metamodell-Architekturebenen von statischen und dynamischen Modellen, wobei die einzelnen Ebenen aufeinander aufbauen. Das Metametamodell beschreibt den grundsätzlichen Aufbau eines Metamodells. Das Metametamodell stellt somit die Grundlage des abschließenden Modells dar. Das Metamodell unterliegt jedoch hinsichtlich der Namensgebung der Klassen, der Attribute und der Operationen sowie der Assoziationen und Aggregationen dem Fachraum, indem es eingebettet ist. So bestimmen Fachbegriffe und Sachaussagen die Namensgebung.

Die M1-Ebene basiert auf der vorhergehenden Ebene, wobei das Metamodell die entsprechenden Fachbegriffe und die damit in Verbindung stehenden Modellelemente in einen Kontext bringt. Das Modell entsteht schließlich durch die Instanzzierung des Metamodell, wodurch es mit Fachinformationen gefüllt. Alle Ebenen vererben ihre Eigenschaften an die darunter liegende Ebene.

Diese Metamodellarchitektur gilt nicht nur für statische Modelle und deren Objekte, wie sie aus UML-Diagrammen hinlänglich bekannt sind, sondern auch für dynamischen Modelle und deren Instanzen.

### 3. Metamodellübersicht

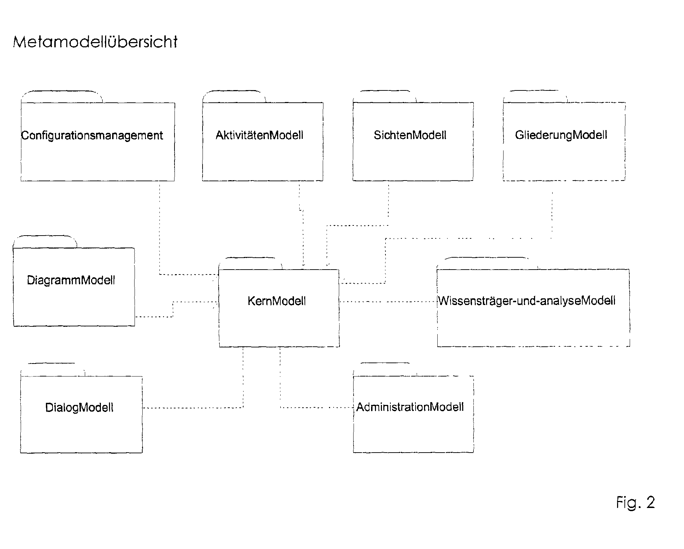

Die in Figur 2 dargestellten Bestandteile des Metamodells haben unterschiedliche Aufgaben.

Das Kernmodell - mit seinen Bestandteilen statisches Kernmodell und dynamisches Kernmodell - ist die Grundlage für alle anderen Bestandteile. Es beschreibt alle Modellelement, die im Rahmen der KnowLogy-Modellierungsmethode - und damit auch für die Modellierung der anderen Bestanteile - verwendet werden.

Das Gliederungsmodell und das Wissensträger- und -analysemodell bilden die Grundlage für die Vorgehensweise gemäß der KnowLogy-Modellierungsmethode.

Administrationsmodell, Dialogmodell und Diagrammmodell sichern die Präsentation der Modelle in verschiedenen textuellen oder grafischen Darstellungsformen.

Configurationsmanagement und Aktivitätenmodell sind vorwiegend technisch bedingte Bestandteile, die die Arbeit mit dem Modellierungstool organisieren.

Alle Modelle basieren jedoch vorzugsweise auf dem Kernmodell. Somit ist eine iterative Entwicklung der einzelnen Tools, die durch die Modelle dargestellt werden, ohne weiteres möglich. Für die einzelnen Modelle wird ein Fachraum analysiert und die entsprechenden Fachbegriffe bestimmt. Daraufhin wird auf der Basis des Kernmodells unter Verwendung der Fachbegriffe ein entsprechendes Modell erzeugt, dass in ein ablauffähiges Programm automatisch umgewandelt werden kann.

### 4. Kernmodell

### 4.1 Klassen des Kernmodells

### 4.1.1 Klassen zur Modellierung der Objektstatik

### 4.1.1.1 Klasse

### 4.1.1.1.1 Definition:

Klasse ist ein Modellelement, das Objekte (Dinge, Lebewesen) mit denselben Merkmalen (Attributen, Beziehungen, Operationen) zusammenfasst.

### 4.1.1.1.2 Sprach- und Wortherkunft

< lat. *classis*, "Abteilung", später < franz. *classe*, "Gruppe mit besonderen Merkmalen"

### 4.1.1.1.3 Erläuterung des Klassenkonzepts:

Klasse gehört zu dem Set von Modellkonstrukten, mit denen Fachwissen modelliert wird. Die Klasse ist das zentrale Modellelement. Die Modelle werden aus Klassen gebildet; die Modelle sind letztlich ein Gefüge aus Klassen. Alle anderen Modellelemente beziehen sich auf das Modellelement Klasse.

Die Klasse ist ein Sammler für Objekte, ein Platzhalter für die Merkmale, über die alle Objekte verfügen, die zu der Klasse gehören. Jedes (Individual)Objekt gehört zu einer Klasse; es gibt keine Klasse ohne Objekte, es gibt kein Objekt ohne Zugehörigkeit zu einer Klasse. Durch ihre Zugehörigkeit zu Klassen werden die Objekte voneinander unterschieden und geordnet. Klassenobjekte haben Eigenschaften, Beziehungen und Verhalten; sie sind also strukturiert: Attribute und Operationen bilden ihre innere Struktur, Assoziationen, Aggregationen, Abstraktionen ihre äußere Struktur. Es gibt statische Klassen, die sogenannten Entity-Klassen, und dynamische Klassen, die Prozess-klassen.

Klassen unterscheiden sich von anderen Modellelementen gerade dadurch, dass sie eine innere und äußere Struktur haben. Wissensobjekte, deren Struktur für das Fachgebiet relevant sind, werden durch Klassen abgebildet. Oder anders ausgedrückt, um relevante Strukturen von Wissensobjekten abbilden zu können, gibt es das Modellelement Klasse.

Klassen im Wissensmodell gehen aus Fachbegriffen als einem wichtigen Ergebnis der Wissensanalyse und Sprachrekonstruktion des Fachwortschatzes des jeweiligen Fachgebietes hervor.

Ein Begriff ist die Einheit aus Intension (Bedeutung), Extension (Menge der Objekte, die durch die Bedeutung erfasst wird, auf die die Bedeutung zutrifft) und Bezeichner (das Wort, das als Name für die Bedeutung steht). Dieser "Dreiklang" findet sich in jeder Klasse wieder; Begriff und Klasse sind wesensverwandt.

Das "Finden/Identifizieren" von Klassen für ein Modell ist also das Ergebnis der Bedeutungsklärung, der Begriffsarbeit im entsprechenden Fachwortschatz des betreffenden Fachgebiets.

Es gibt allgemeine Arten von Begriffen bzw. Klassen, die in konkreter Ausprägung in jedem Fachwissensraum auftauchen (Fachsachen, Fachpersonen, Fachkonzepte, Fachvorgänge, Fachdokumente usw.). Das Wissen um diese Begriffsarten hilft, relevante Fachbegriffe bzw. Fachklassen zu finden.

### 4.1.1.1.4 Spezialisierungen und Rollen von Klasse

Zur Unterstützung der Identifizierung von Klassen bei der fachlichen Modellierung, werden im folgenden die wichtigsten Spezialisierungen und Rollen von Klassen aufgelistet.

### 4.1.1.1.4.1 Spezialisierungen

Entity-Klassen
Sachen, Dinge
Personen
Organisationen
Zeiten
Orte
Maße, Werte

Assoziationsklassen
Konzepte
Dokumente, Belege
Sachverhalte
Rechte

Prozessklassen
Vorgänge, Geschehnisse, Handlungen

### 4.1.1.1.4.2 Rollen

OberKlasse
UnterKlasse
AggregatKlasse
TeilKlasse

### 4.1.1.2 Attribut

### 4.1.1.2.1 Definition:

Attribut ist ein Merkmal einer Klasse, das Objekte der Klasse unabhängig von Beziehungen zu Objekten anderer Klassen haben.

Attribut ist Teil von allen Objekten der Klasse.

Attributwerte dürfen nur über die Operationen der zugehörigen Klasse geändert und gelesen werden (Geheimnisprinzip).

### 4.1.1.2.2 Sprach- und Wortherkunft

< lat. *attributum*, "das beigelegte (Merkmal)"

### 4.1.1.2.3 Erläuterung des Attributkonzepts:

Attribut ist ein Modellelement, das zur Modellierung von Klassen verwendet wird. Es dient der konkreteren Charakterisierung von Klassen. Attribute beschreiben die inneren Eigenschaften der Objekte einer Klasse, die Eigenschaften, die ein Objekt als Mitglied einer Klasse an und für sich hat, d.h. die ein Klassenobjekt auch unabhängig von seinen Beziehungen zu anderen Objekten hat. Alle Objekte einer Klasse besitzen dieselben Attribute, jedoch unterschiedliche Attributwerte bzw. Kombinationen von Attributwerten. Der Name des Attributs ist auch ein Fachbegriff, also ein Wort als Bezeichner einer eindeutigen Bedeutung im gegebenen Fachwissensraum.

Der Attributbezeichner muss im Kontext der Klasse eindeutig sein, d.h. er erscheint innerhalb einer Klasse nur einmal. Aus der sehr großen Vielfalt von Eigenschaften, die Objekte haben, werden im Modell nur die als Attribute expliziert, die in Bezug auf den Modellzweck problemrelevant sind; Modellieren heißt Komplexität reduzieren, um wesentliche Zusammenhänge erkennen und nutzen zu können.

Im Gegensatz zum Modellelement Klasse hat das Attribut als Modellelement keine innere Struktur. Seine Aufgabe besteht eben gerade darin, die innere Struktur von Klassen abzubilden. In diesem Sinne ist das Attribut elementar. Attribute werden nur durch ihre Werte repräsentiert. Ein Attribut kann immer nur seinen aktuellen Wert zeigen, ein Attribut hat zu jedem beliebigen Zeitpunkt einen bestimmten Wert, ein Attribut kann zu einem konkreten Zeitpunkt immer nur einen Wert innerhalb des definierten Wertebereichs haben.

### Attribut und Zustand

Attribut und Attributwert haben ihre Fortführung im Modellelement Zustand. Die Menge der möglichen Zustände eines Objekts wird durch die Menge der möglichen Kombinationen der Werte seiner Attribute bestimmt.

In der Dynamik eines Objektes (Prozess) bewegt und verändert es sich. Veränderung heißt, der Zustand eines Objektes ändert sich. Das bedeutet, die Veränderung eines Objekts ist die Änderung der Werte seiner Attribute.

Attribut und Operation

Die Änderung der Werte der Attribute eines Objekts als Ausdruck der Objekt- bewegung und der Objektveränderung geschieht über die Ausführung der Operationen von Objekten.

### Attribut und Klasse

Die Modellelemente Klasse und Attribut sind zueinander relativ. Darüber, welche Fachbedeutung im Modell als Klasse auftritt und welche als Attribut einer Klasse, entscheidet letztlich der Modellzweck.

Aus Attributen können Klassen werden, wenn sich im Prozess des Modellierens herausstellt, dass der Wert eines Attributes für die Erfüllung des Modellzwecks allein nicht ausreicht - am Attribut also mehr interessiert als nur sein Wert -, sondern die Abbildung der inneren Struktur einer fachlichen Bedeutung erforderlich wird - am Attribut selbst tauchen eigene Attribute auf.

Umgekehrt kann sich erweisen, dass eine Klasse in ihrer Detailliertheit überflüssig ist, sie zum Attribut mit entsprechenden Werten werden kann.

Ein gutes Modell stellt immer einen Kompromiss dar zwischen einer kleinen Anzahl von Klassen mit vielen Attributen und einer größeren Anzahl von Klassen mit wenigen Attributen. Je "kleiner" das zu modellierende Fachgebiet ist, desto mehr werden die teilnehmenden Klassen "viele" Attribute haben; je komplexer die Fachzusammenhänge sind, die modelliert werden sollen, desto mehr werden in mehreren Klassen dieselben Attribute auftauchen. Daher lohnt es, Attribute von Klassen als selbständige Klassen zu modellieren; damit wird Komplexität reduziert und Flexibilität gesteigert.

Die Umwandlung von Attributen in Klassen darf jedoch nicht dazu führen, dass Klassen keine Attribute mehr enthalten. Da Veränderungen von Objekten nur über die Änderung von Werten seiner Attribute darstellbar sind, ist eine Klasse ohne Attribute eigentlich eine Klasse mit "leblosen", nicht veränderbaren Objekten. Sie kann sich nur in vorhandenen anderen Merkmalen (Beziehungs- und Verhaltenszustände) verändern, nicht jedoch in ihren "inneren" Werten.

Die Figur 2 zeigt die Relativität von Klassen und Attributen. Einer Klasse wird durch eine Kasten bestimmt. Die Attribute befinden sich innerhalb dieses Kasten und werden durch bestimmte Datentypen definiert. So ist es möglich, dass das Attribut Eigentümer, in eine eigene Klasse umgewandelt wird und der Bezug zum Einfamilienhaus durch eine Assoziation Eigentümer hergestellt wird.

### Attribut, Klasse und Beziehungen

Attribute von Klassen, die zu eigenen Klassen werden, dürfen den ursprünglichen Klassen nicht verloren gehen. Sie werden mit diesen über andere Modellelemente (Beziehungselemente) verbunden. Die Zugehörigkeit eines Attributes zu einer Klasse wird ersetzt durch die Assoziation zwischen den nunmehr zwei Klassen. Die aus einem Attribut hervorgegangene Klasse liefert über die neue Assoziation eine Dienstleistung für die Ursprungsklasse, damit wird die alte Funktionalität des Attributes in neuer Art und Weise durch eine Assoziation erhalten.

### Typattribut

Oft empfiehlt es sich, den Klassen ein oder mehrere sogenannte Typattribute zu geben. Damit können die Objekte einer Klasse verschiedenen Typen zugeordnet und nach diesen sortiert werden. Die Typattribute mit ihren entsprechenden Werten spiegeln eine Klassifizierung wider. Die Typattributswerte sind Unterbegriffe zum Begriff, der sich in der Klasse manifestiert, ohne dass die Typen/Unterklassen real als Klassen ausmodelliert werden. Das erfolgt immer dann, wenn zwar begrifflich-definitorische Unterschiede deutlich gemacht werden müssen, die "Unterklassen" jedoch (noch) keine weiteren, neue Merkmale gegenüber der "Oberklasse" aufweisen, die modellrelevant wären. Die Typisierung von Objekten einer Klasse gibt die Möglichkeit, sie nach diesen zu sortieren.

Ein Attribut kann nicht mehr Information ausdrücken als seine Bedeutung und seinen jeweiligen Wert aus dem definierten Wertebereich. Beim Typattribut bilden die relevanten Unterbegriffe zu dem Begriff, der der Klasse zugrunde liegt, den Wertebereich des Typattributes.

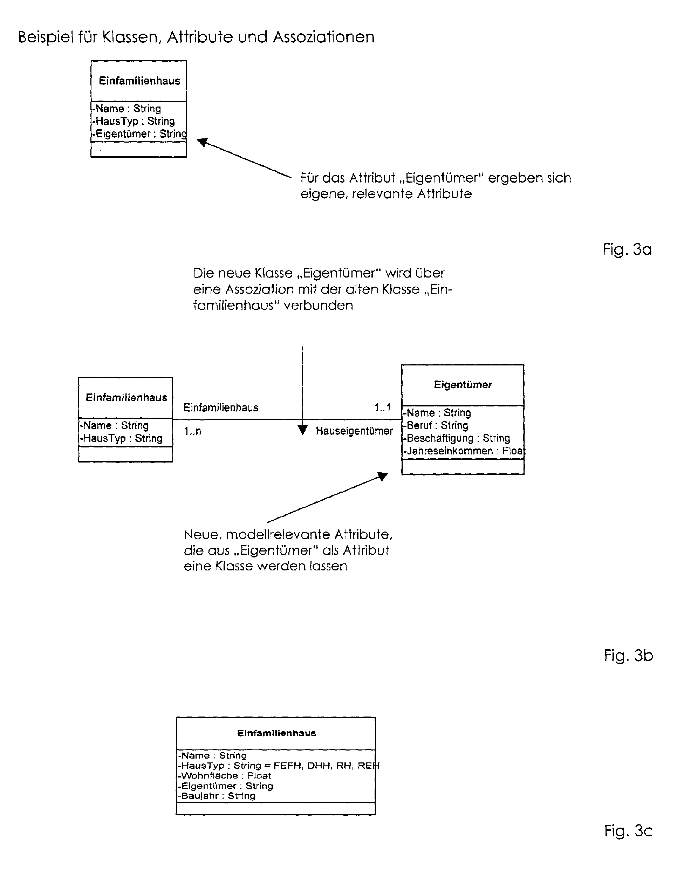

Ausgehend vom Modellzweck (hier z.B. Hausverwaltung wie aus Figur 3c ersichtlich) hat "Reihenhaus" oder "Doppelhaushälfte" keine weiteren Attribute als "Einfamilienhaus". Die Typisierung von Einfamilienhäusern gibt die Möglichkeit, sie nach diesen zu sortieren. Wenn nicht mehr interessiert als die Sortiermöglichkeit von Objekten einer Klassen nach bestimmten Typen, dann werden Typattribute modelliert.

### Attribut und Bedingung

Einschränkung für Wertebereiche; Bedingung für die Bildung der Werte eines Attributes, welche Werte kann und darf ein Attribut nur annehmen:

| Klasse: | Dreieck |
|---|---|
| Attribut1 | Seitenlänge1, Datentyp: float, Wertebereich: Seitenlänge1 >0, Bedingung1: Seitenlänge1 < (Seitenlänge2 + Seitenlänge3) |
| Attribut2 | Seitenlänge2, Datentyp: flogt, Wertebereich: Seitenlänge2>0, Bedingung1: Seitenlänge2 < (Seitenlänge1 + Seitenlänge3) |
| Attribut3 | Seitenlänge3, Datentyp: flogt, Wertebereich: Seitenlänge3>0, Bedingung1: Seitenlänge3 < (Seitenlänge1 + Seitenlänge2) |
| Bedingung | Jede Seitenlänge muss kleiner als die Summe der beiden anderen sein, drei notwendige Bedingungen für die Existenz eines Dreiecks, ansonsten ist es kein Dreieck |

### 4.1.1.2.4 Spezialisierungen und Rollen von Attribut

Zur Unterstützung der Identifizierung von Attributen bei der fachlichen Modellierung, werden im folgenden die wichtigsten Spezialisierungen und Rollen aufgelistet.

### 4.1.1.2.4.1 Spezialisierungen

SinnAttribut
BewertungAttribut
RelationAttribut
KlassifizierungAttribut
BeschreibungAttribut

### 4.1.1.2.4.2 Rollen

BasisAttribut
AbleitungAttribut
EigenAttribut
GeerbtesAttribut
TypAttribut

### 4.1.1.2.5 Spezialisierungen von AttributWert

Aufzählung (Enumeration)
Bereich (von ... bis)
Regel (Vorschrift)

### 4.1.1.3 Operation

### 4.1.1.3.1 Definition:

Operation ist ein Merkmal einer Klasse, das das Verhalten der Objekte der Klasse spezifiziert.

### 4.1.1.3.2 Sprach- und Wortherkunft

< lat. *operatio*, "Arbeit, Verrichtung, Wirken"

### 4.1.1.3.3 Erläuterung des Operationkonzepts:

Die Operation ist ein Modellelement, mit dem das potenzielle modellrelevante Verhalten, d.h. die fachlich relevanten Handlungen, Vorgänge, Tätigkeiten usw. der Objekte einer Klasse benannt wird.

Die Operation deklariert die Fähigkeiten der Objekte einer Klasse zu bestimmten Handlungen, Vorgängen, Tätigkeiten usw. Die Operation stellt noch nicht die konkrete Ausführung dieser Fähigkeiten dar; in diesem Sinne gehört sie zur statischen Modellsicht.

Alle Objekte einer Klasse verfügen über alle modellierten Operationen.

Die Objekte einer Klasse haben mindestens eine Operation, die sie zu einer Handlung bzw. Wechselwirkung mit Objekten einer anderen Klasse befähigt. Ohne Operation hat eine Klasse im Modell keinen Zweck, da sie nicht agieren bzw. interagieren kann.

### Operation und Prozess, Operation und Aktivität, Operation und Zustand

Die Operation hat ihre Fortführung in den Modellelementen Prozess und Aktivität, die wiederum als Elemente der dynamischen Sicht, die konkrete Ausführung von Operationen beschreiben.

In diesen Vorgängen verändern sich Objekte bzw. werden Objekte verändert. Änderungen von Objekten sind gleichbedeutend mit Veränderungen der Werte von Attributen der Objekte. Oder anders ausgedrückt, ein Objekt kann sich nur verändern bzw. kann nur verändert werden, wenn sich die Werte seiner Attribute, d.h. seine Zustände, ändern. Das wiederum kann nur in der Ausführung von Operationen, also in Prozessen und Aktivitäten, erfolgen. Operationen einerseits und Prozess als konkreter Ablauf von Operationen andererseits stehen in einer Was-Wie-Beziehung. Erstere benennen, was mit dem Vorgang erreicht werden soll; sie werden also ziel- und ergebnisorientiert formuliert. Der Prozess als konkreter Ablauf beschreibt dagegen, wie das Ziel, das Ergebnis im einzelnen erreicht werden soll.

### Operation und Attribut, Operation und Objekt, Operation und Beziehung

Die Operationen einer Klasse müssen alle Attribute und alle Beziehungen der Klasse abdecken, oder anders ausgedrückt, auf alle Attribute und Beziehungen einer Klasse müssen sich Operationen beziehen, sonst sind diese wiederum im Modell überflüssig.

Wenn eine Operation sich auf nur ein Attribut eines Objektes einer Klasse bezieht, dann spricht man von einer Attributoperation.

Sehr häufig ist es fachlich sinnvoll, Operationen zu benennen, die sich auf mehr als ein Attribut eines Objektes beziehen (Zusammenfassung von Attributoperationen). Man spricht dann von Objektoperationen. Eine Operation wird immer gebildet aus einem Klassennamen (Substantiv) und einem Aktionsnamen (Verb) für eine Objektoperation bzw. einem Attributnamen (Substantiv) und einem Aktionsnamen (Verb) für eine Attributoperation.

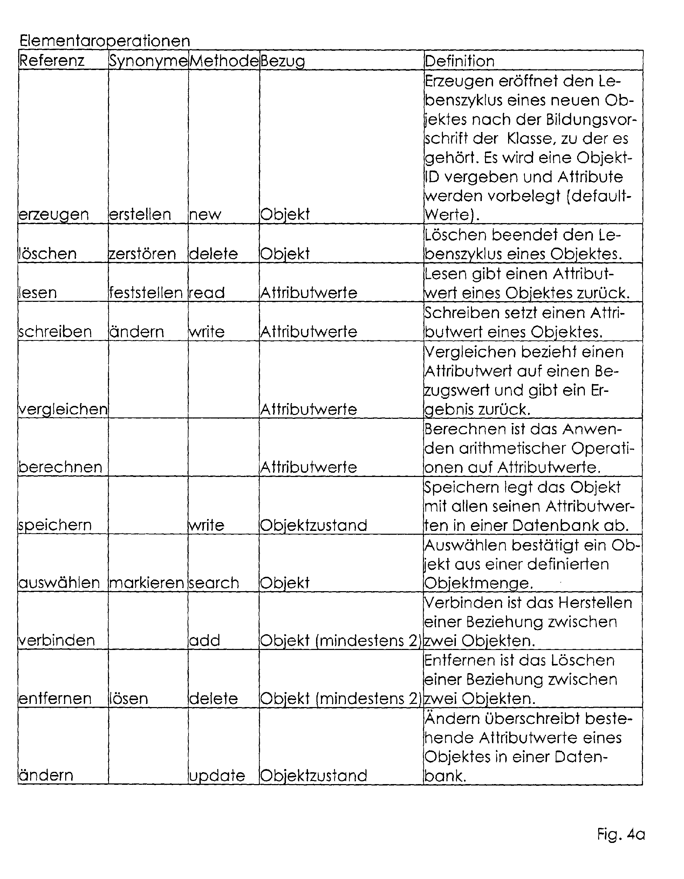

Jede Operation hat innerhalb einer Klasse einen eindeutigen Namen. Es gibt elementare Operationen, die nicht in "Teiloperationen" zerlegt werden, und die in fast jeder Klasse, zumindest in jeder Informationsobjektklasse vorkommen. Der Figur 4a sind eine Reihe von Elementaroperationen zu entnehmen.

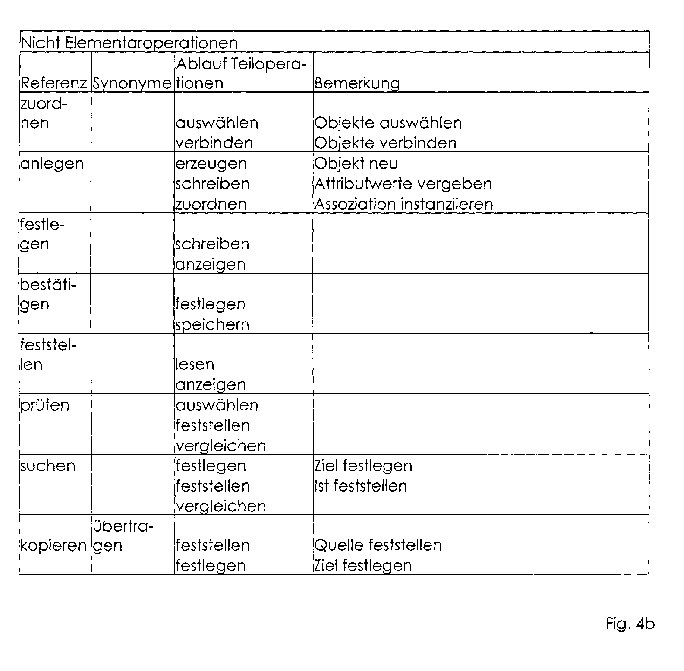

Nicht elementare Operationen bestehen aus "Teiloperationen"; als "Teiloperationen" können elementare Operationen und nicht elementare Operationen auftreten. Der Figur 4b sind eine Reihe von nicht Elementaroperationen zu entnehmen.

### 4.1.1.3.4 Spezialisierungen und Rollen von Operation

Zur Unterstützung der Identifizierung von Operationen bei der fachlichen Modellierung, werden im folgenden die wichtigsten Spezialisierungen und Rollen aufgelistet.

### 4.1.1.3.4.1 Spezialisierungen nach Geschehnisart

HandlungOperation
VorgangOperation

### 4.1.1.3.4.2 Rollen

Eine Operation kann sich unterschiedlich darstellen:
TerminativOperation
IngressivOperation
ResultativOperation
DurativOperation
IterativOperation
SelbstauslösungOperation
NichtselbstauslösungOperation
SelbstterminierungOperation
NichtselbstterminierungOperation
AbstraktOperation
ObjektOperation
AttributOperation

### 4.1.1.4 AbstrakteOperation

### Definition:

AbstrakteOperation ist eine Operation.

AbstrakteOperation ist Teil einer abstrakten Klasse.

### 4.1.1.5 ObjektOperation

### Definition:

ObjektOperation ist eine Operation.

ObjektOperation bezieht sich auf das gesamte Objekt der Klasse.

### 4.1.1.6 AttributOperation

### Definition:

AttributOperation ist eine elementare Operation.

AttributOperation bezieht sich nur auf ein Attribut der Objekte der Klasse.

### 4.1.1.7 Assoziation

### 4.1.1.7.1 Definition:

Assoziation ist ein Modellelement. Assoziation ist eine Beziehung zwischen verschiedenen Objekten einer oder mehrerer Klassen. Assoziation verbindet in einem Prozess in Interaktion tretende Klassen.

### 4.1.1.7.2 Sprach- und Wortherkunft

< franz. *association*, "Verbindung, Vereinigung"

### 4.1.1.7.3 Erläuterung des Assoziationskonzepts

Eine Assoziation ist ein Modellelement, mit dem die Verbindung zwischen verschiedenen Objekten einer oder mehrerer Klassen ausgedrückt wird. Objektverbindungen sind Exemplare einer Assoziation. Eine Assoziation zwischen zwei Klassen wird instanziiert, indem Objekte der assoziierten Klassen einander zugeordnet (miteinander verbunden) werden.

Assoziationen sind notwendig, damit Objekte miteinander kommunizieren und interagieren können; Assoziationen sind die "Nervenstränge" des Modells; Kommunikation und Interaktion der Klassen laufen über ihre Assoziationen. Durch die Assoziierung von Klassen wird eine Netzstruktur des Modells gebildet.

Eine Netzstruktur ist keine Hierarchiestruktur, d.h. assoziierte Klassen stehen nicht in einer Über- bzw. Unterordnungsbeziehung (Rangfolge) sondern assoziierte Klassen sind zueinander gleichrangige Klassen.

Jede Klasse hat mindestens eine Assoziation zu einer anderen Klasse; ohne eine Wechselbeziehung mit einer anderen Klasse ist eine Klasse in einem Modell überflüssig. Sie liegt isoliert außerhalb des Fachraums, denn der Fachraum ist das Beziehungsgeflecht der teilnehmenden Klassen untereinander. Verfügt eine Klasse über keine Assoziation kann sie nicht mit anderen Klassen in Interaktion treten, nicht prozessieren.

Jede Assoziation hat zwei Rollennamen, d.h. eine Bezeichnung der Rolle, die die jeweilige Klasse in der Beziehung zu der jeweils anderen Klasse spielt.

Jede Klasse erhält ihre Kardinalität in der Assoziation, d.h. den Wertebereich (Minimal- und Maximalkardinalität), zu wie viel Instanzen der assoziierten Klasse eine ihrer Instanzen in der Assoziation in Beziehung stehen kann.

Die Assoziation wird daher, für jeder der beteiligten Klassen, folgendermaßen gebildet und gelesen:
<KlasseName> "in der Rolle als" <RolleName> "Mit der Kardinalität" <Kardinalität> "steht in Beziehung zu" <KlasseName>.

Wenn beide Assoziationsrichtungen zusammengeführt werden, ergibt sicht folgende Leseweise:
<KlasseName1> "in der Rolle als" <RolleName1> "Mit der Kardinalität" <Kardinalität1> "steht in Beziehung zu" <KlasseName2> "in der Rolle als" <RolleName2> "Mit der Kardinalität" <Kardinalität2>.

So gesehen ist eine bidirektionale Assoziation die Zusammenführung von zwei unidirektionalen Beziehungen; die Klasse A hat "ihre" gerichtete Beziehung zur Klasse B und umgekehrt hat Klasse B "ihre" gerichtete Beziehung zu Klasse A

Da eine Assoziation eine Beziehung ist, d.h. eine Verbindung zweier Klassen miteinander, kann sie immer aus zwei Richtungen betrachtet werden, einmal aus der Sicht der einen beteiligten Klasse, das andere mal aus der Sicht der anderen beteiligten Klasse.

Letztlich ist es jedoch eine bidirektionale Beziehung, denn Klasse A könnte "ihre" Beziehung zu Klasse B nicht ohne die Klasse B haben und umgekehrt könnte die Klasse B "ihre" Beziehung zur Klasse A nicht ohne diese Klasse A haben. In einem gegebenen Fachkontext haben assoziierte Klassen natürlich ein unterschiedliches fachliches Gewicht:
- Eine Klasse "Datum" wird in der Regel immer als Dienstleister (Server-Klasse) für solche Klassen wie "Person" oder "Auftrag" (Clienf-Klasse) auftreten; die Assoziation "Datum in der Rolle als Geburtsdatum steht in Beziehung zu Person" ist fachlich wichtiger als die Gegenrichtung "Person in der Rolle als Person von Geburtsdatum steht in Beziehung zu Datum" - in dieser bidirektionalen Assoziation interessiert eigentlich nur gerichtete Assoziation "Datum" "Person"
- In anderen Fällen werden beide Klassen in einer Assoziation füreinander wechselseitig sowohl Server als auch Client sein: z.B. "Auftrag" "Rechnung"
- Daraus ergibt sich der dritte Fall, dass eine Klasse in einer Assoziation Server, in einer anderen Assoziation Client sein kann

Als Rollenbezeichner dienen Unterbegriffe zum Begriff, der durch die Klasse repräsentiert wird.

Rollen sind im statischen Modell eindeutig:
Eine Klasse kann in ihren Assoziationen mit anderen Klassen mehrmals in ein und derselben Rolle auftreten.
Eine Rolle kann aber nicht für mehrere Klassen verwendet werden (Verletzung der Begriffssystematik).

In der Figur 5a wird der Oberbegriff "Wissensquelle" fälschlicherweise, daher auch zwei mal in verschiedenen Klassen, als Rolle für Klassen verwendet, die im gegebenen Zusammenhang an sich Unterbegriffe sind; Rolle ist immer "enger" als die Klasse, hier ist sie "weiter".

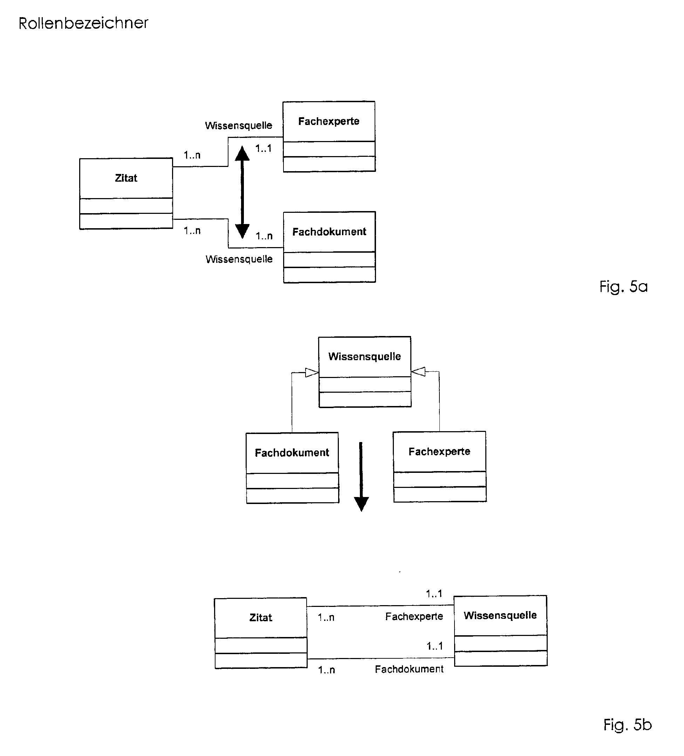

In der Figur 5b liegt ein richtiger Begriffsbaum und davon abgeleitet eine richtige Rollenverwendung vor; Rolle ist als einschränkende, nicht erweiternde Sicht auf den Begriff, der der Klasse zugrunde liegt, zu betrachten.

Es ist wichtig, Kann- und Muss-Beziehungen zu unterscheiden. Eine Kann-Beziehung hat als Untergrenzen die Kardinalität 0. Eine Muss-Beziehung die Kardinalität 1 oder größer.

Kardinalitäten:
1 genau eins
0, 1 null oder eins
0..4 von null bis einschließlich vier
3, 7 drei oder sieben
0..n größer oder gleich null
1..n größer oder gleich eins

Wenn ein sinnvoller Bezeichner gefunden wird, kann eine Assoziation einen eigenen Namen erhalten.

Eine Assoziation kann auch Beziehung einer Klasse zu sich selbst sein, wenn zwei unterschiedliche Objekte dieser Klasse verbunden werden (rekursive Assoziation); das trifft dann zu, wenn zwei Objekte einer Klasse zueinander verschiedene Rollen einnehmen.

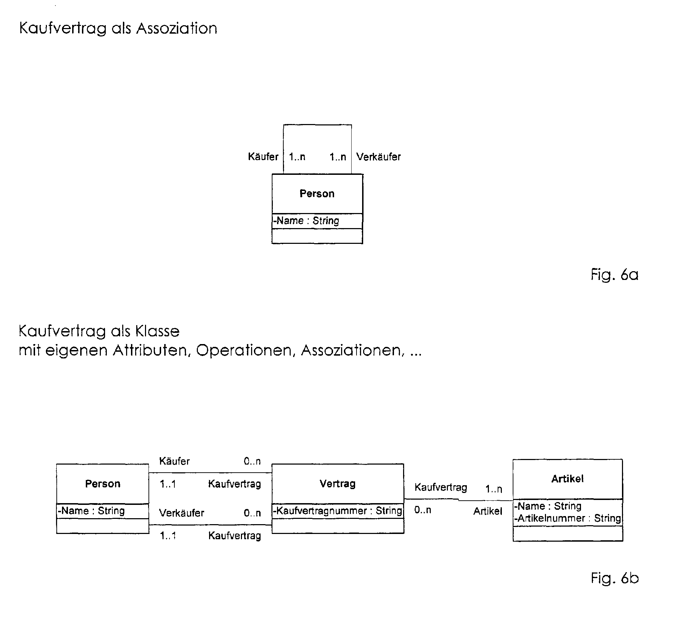

Wird ein Fachzusammenhang wie in Figur 6a modelliert, kann nicht mehr Information abgebildet werden, als dass zwischen zwei Personen eine Beziehung in der Form als Kaufvertrag besteht; das bedeutet, dass fachlich nicht mehr vermittelt werden soll als der Fakt, wer mit wem eine Käufer-Verkäufer-Beziehung (Kaufvertrag) hat

Da jede Klasse über mindestens eine Assoziation verfügen muss, hat jede Klasse auch die Operation [Objekt].zuordnen, d.h. die Operation, eine Assoziation zu instanziieren.

Ob im Modell der Prozess [Objekt].zuordnen bzw. ein Assoziationszustand [Objekt].zugeordnet wirklich ausmodelliert werden, hängt wiederum von der Modellrelevanz des damit verbundenen fachlichen Inhalts ab.

### Assoziation und Bedingung

Eine Assoziation kann durch Bedingungen in ihrer Wirkung genauer beschrieben werden. Insbesondere wirken Bedingungen bei Assoziationen auf deren Kardinalitäten. Einschränkungen auf mehrere Assoziationen untereinander können nicht allein durch Kardinalitäten ausaedrückt werden.
- Klasse:: Person
- Klasse:: Postadresse
- Klasse:: Telefonadresse
- Assoziation:: Eine Person steht in Beziehung mit 0..n Postadressen in der Rolle als Anschrift Eine Person steht in Beziehung mit 0..n Telefonadressen in der Rolle als Telefonverbindung
- Bedingung:: Mindestens eine der Adressen (Postadresse oder Telefonadresse) muss zu jeder Person angegeben sein

### Assoziation und Zustand

Eine Assoziation hat Zustände: zugeordnet (verbunden) - nicht zugeordnet (nicht verbunden)

Der Zustand einer Assoziation eines Objektes hat zwei Werte: entweder ist eine Assoziation instanziiert, d.h. ein Objekt der einen an der Assoziation beteiligten Klasse ist einem Objekt der anderen an der Assoziation beteiligten Klasse wirklich zugeordnet (verbunden), oder die Zuordnung ist noch nicht erfolgt, die Assoziation ist noch offen (nicht verbunden).

Über eine Zustandsabfrage einer Assoziation kann festgestellt werden, welche konkreten Objekte der assoziierten Klassen einander zugeordnet wurden.

### Assoziation und Klasse

Figur 6b zeigte einen Kaufvertrag als Klasse, der über Assoziationen mit einer Klasse Person und einer Klasse Artikel verbunden ist.

Aus einer Assoziation wird eine Klasse, wenn es sich als notwendig erweist, der Assoziation "eigene" Attribute und Operationen zuzuordnen; "Assoziationsattribute" gehören in keine der an der Assoziation beteiligten Klassen, sie gehören zu der Beziehung zwischen beiden Klassen.

An und für sich gibt es aber keine Assoziationsattribute, denn, wenn bei einer Assoziation Attribute auftauchen, dann hört die Assoziation auf Assoziation zu sein, sie wird zur Klasse; das Konstrukt Assoziation kennt an sich keine Attribute, nur das Konstrukt Klasse hat Attribute. Ein Assoziation kann per se nicht mehr Fachinformation ausdrücken, als dass eine gleichberechtigte Beziehung zwischen Objekten besteht. Die inhaltliche Aussagekraft des Modellelements Klasse als dem zentralen Modellelement, auf das sich alle anderen Modellelemente beziehen, ist dagegen ungleich größer. Wenn ein Sachverhalt als Klasse modelliert wird, steht eben das Spektrum aller Modellelemente zur detaillierten und umfassenden Vermittlung von Fachinhalten zur Verfügung, die mit dem Konstrukt der Klasse verbunden sind (Attribute, Beziehungen, Verhalten).

Die aus einer Assoziation gebildete Klasse erhält wiederum Assoziationen zu den ursprünglich an der Assoziation beteiligten Klassen.

### Alternative Modellierungsmöglichkeiten:

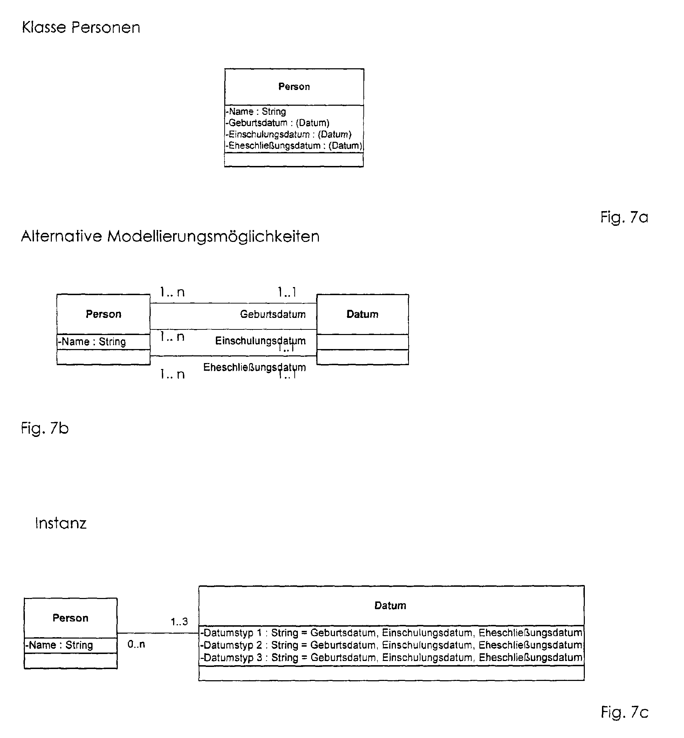

Bei einer Modellierung wie in den Figuren 7a und 7b werden bei jeder Person die Daten in den Attributen erneut erfasst.

Jedes Datum wird nur einmal angelegt, die Personen erhalten ihre individuellen Daten über Assoziationen/Rollen; dies führt zwangsweise wie in Figur 710 zu sehen ist zu vielen Verknüpfungen.

Übersichtlichkeit im Modell durch relativ wenige Assoziationen; dafür "unübersichtliche" Klassen;

### Problematisch:

Attributwerte von Typattributen können nur alternativ vergeben werden, um alle drei Daten abbilden zu können, werden drei Typattribute mit immer denselben Attributwerten benötigt

### 4.1.1.7.4 Spezialisierungen und Rollen von Assoziation

Zur Unterstützung der Identifizierung von Assoziationen bei der fachlichen Modellierung, werden im folgenden die wichtigsten Spezialisierungen und Rollen aufgelistet.

### 4.1.1.7.4.1 Spezialisierungen nach Richtungscharakter

GleichberechtigungAssoziation (ungerichtete Assoziation) ReihenfolgeAssoziation (gerichtete Assoziation)

### 4.1.1.7.4.2 Spezialisierungen nach Anzahl teilnehmender Klassen

BinärAssoziation
TernärAssoziation
RekursivAssoziation

### 4.1.1.7.4.3 Rollen

ClientAssoziation
ServerAssoziation

### 4.1.1.8 Rolle

### 4.1.1.8.1 Definition:

Rolle ist ein ModellElement.

Rolle beschreibt die Besonderheit einer Klasse in einer Assoziation zu einer anderen Klasse.

Rolle beschreibt die Besonderheit einer Klasse in einer Aggregation zu einer anderen Klasse.

Rolle hat temporären Charakter.

### 4.1.1.8.2 Sprach- und Wortherkunft

< afrz. *rol(l)e*, "Rolle, Liste, Register"

### 4.1.1.8.3 Erläuterung des Rollenkonzepts

Eine Rolle beschreibt, wie eine Klasse von einer anderen, mit ihr in Beziehung stehenden Klasse wahrgenommen wird.

Rollennamen sind immer Unterbegriffe des Klassennamens.

Ein Ergebnis der Wissensanalyse (ein Teilprozess der Erstellung eines Wissensmodells) ist das jeweilige System eindeutiger, redundanzfreier Fachbegriffe, die das Vokabular für das zu erstellende Modell ausmachen, d.h. für alle Modellelemente.

Unterbegriffe aus dem Modellvokabular können im Modell selbst in Form von drei Modellelementen auftreten:
als Werte von Typattributen in Klassen
als Rollen von Klassen in Beziehungen
als Unterklassen von Klassen.

Die Verwendung von Unterbegriffen als Klassenrollen in Klassenbeziehungen ist eine Stufe zwischen Typattribut und Unterklasse; die Rolle gestattet, mehr Fachinhalt auszudrücken als ein Typattribut, jedoch nicht so viel wie eine Unterklasse.

Rollen werden nur in Beziehungen (Assoziationen, Aggregationen) zwischen Klassen verwendet; sie stellen Spezialisierungen von Klassen in Beziehungen zu anderen Klassen dar.

Die Rolle hat ebenso wie das Typattribut zur jeweiligen Klasse keine fach- und modellrelevanten, eigene speziellere Attribute; sie hat aber im Unterschied zum Typattribut speziellere Beziehungen und Prozesse als allgemein die Klasse, zu der sie gehört.

Mit anderen Worten: für den Unterbegriff sind gegenüber dem Oberbegriff (Klasse) keine spezielleren Attribute, aber bestimmte speziellere Beziehungen und bestimmte speziellere Prozesse modellrelevant.

Das Rollenkonzept wird angewandt, um die Relevanz einzelner Eigenschaften von Objekten einer Klasse in verschiedenen Kontexten darzustellen. Dabei wird die Deklaration der Klasseneigenschaften für jede Rolle, die ein Objekt der Klasse in einem Kontext spielt, auf die in diesem Kontext wirkenden Eigenschaften reduziert. Es wird quasi eine rollenspezifische "Lochmaske" auf die Klassendeklaration gelegt, durch die man nur die für die Rolle relevanten Eigenschaften der Klasse sehen kann.

Das Rollenkonzept unterscheidet sich deshalb vom Konzept der Generalisierung/Spezialisierung in folgenden Punkten:

Bei der Generalisierung/Spezialisierung ist die Menge der in der Klassendeklaration der Oberklasse aufgeführten Attribute und Operationen die Schnittmenge der Attribute und Operationen, die in den Klassendeklarationen der Unterklassen vorkommen. Die Spezialisierung bedeutet entweder
die differenzierte Erweiterung der Klassendeklaration um Attribute und/oder Operationen oder
die differenzierte Einschränkung des Wertebereiches von Attributen.

Beim Rollenkonzept ist die Menge der in der Klassendeklaration der Klasse aufgeführten Attribute und Operationen die Vereinigungsmenge der Attribute und Operationen, die in Deklarationen der Rollen vorkommen.

Eine Rollendeklaration bedeutet das Ausblenden von solchen Eigenschaften der Klasse, die in dem Kontext, in dem ein Objekt der Klasse die Rolle spielt, nicht relevant sind.

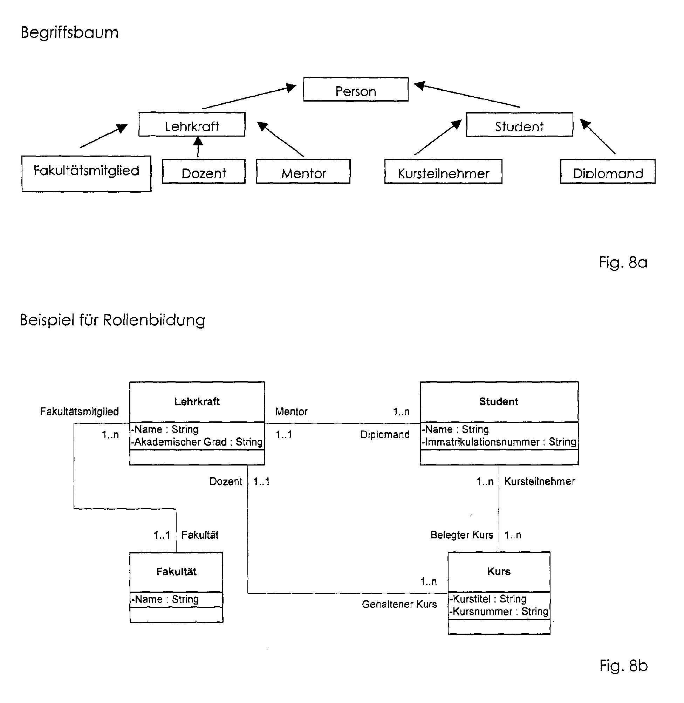

Ein Objekt kann gleichzeitig, bzw. in laufend wechselnden Kontexten, mehrere Rollen spielen. Ein solches Objekt kann deshalb nicht eindeutig einer speziellen Unterklasse einer Klasse (Spezialisierung) zugeordnet werden. Es müsste dann mehreren Unterklassen gleichzeitig zugeordnet werden (Mehrfachklassifizierung), um dies zu umgehen wird das Rollenkonzept angewendet. Eine mögliche Darstellung ist ein Begriffsbaum, wie er in Figur 8a zu sehen ist.

Der Begriffsbaum, wie er aus der Begriffsbildung in der Fachwissensanalyse hervorgeht, wird im Modell nicht ausschließlich in Form von Unterklassen umgesetzt. Aus der Figur 8b ist zu entnehmen, dass ein Begriffsbaum nicht immer identisch in ein UML-Diagramm umgesetzt wird. vielmehr bestehen auch Verbindungen der Blätter oder einzelner Äste auf ihrer jeweiligen Ebene.

### 4.1.1.9 Aggregation

### 4.1.1.9.1 Definition:

Aggregation ist ein Modellelement. Aggregation ist eine hierarchische Beziehung zwischen Klassen.

Aggregation ist die Vereinigung von Teilen (Komponenten) zu einem übergeordneten Ganzen (Aggregat).

### 4.1.1.9.2 Sprach- und Wortherkunft

< lat. *aggregare,* "beigesellen"

### 4.1.1.9.3 Erläuterung des Aggregationskonzepts

Die Aggregation ist ein Modellelement, das eine Hierarchiebeziehung, d.h. eine Über-/Unterordnung, zwischen Klassen widerspiegelt. Die Aggregation ist eine Teil-Ganzes-Beziehung. Im Gegensatz zur Assoziation stehen die beteiligten Klassen nicht in einer gleichberechtigten, sondern in einer abhängigen Beziehung zueinander.

Mit Aggregationen werden im Modell, im Gegensatz zu Abstraktionsbeziehungen, funktionale Zusammenhänge zwischen Klassen abgebildet. Die Fragestellung zur Identifizierung von Aggregationen lautet, aus welchen Teilen besteht ein bestimmtes Aggregat, damit es als Ganzes funktionieren kann.

Die Beziehung des Teils (Teil von Aggregat oder Komponente) zum Ganzen wird ausgedrückt durch "... ist Teil von...",

Die Beziehung des Ganzen (Aggregat) zu seinen Teilen wird ausgedrückt durch "... besteht aus..."

Aggregationen sind im allgemeinen transitiv, d.h. ist 'A' Teil von 'B' und 'B' Teil 'C', dann ist auch 'A' Teil von 'C.

Aggregationen sind asymmetrisch, d.h. ist 'A' Teil von 'B', dann ist 'B' kein Teil von 'A'.

Aggregationen können auch rekursiv, d.h. eine Klasse mit sich selbst aggregiert sein. Damit können Instanzen ein und derselben Klassen einander in verschiedenen funktionalen Rollen zugeordnet werden. die Figur 9 zeigt den eine rekursive Aggregationen.

### 4.1.1.9.4 Spezialisierungen von Aggregation

Zur Unterstützung der Identifizierung von Aggregationen bei der fachlichen Modellierung, werden im folgenden die wichtigsten Spezialisierungen aufgelistet.

### 4.1.1.9.4.1 Spezialisierung nach Zeitbezug

NichtauflösbareAggregation
(funktional andauernde Aggregation)
AuflösbareAggregation
(funktional zeitlich begrenzte Aggregation)

### 4.1.1.9.4.2 Spezialisierung nach Rückbezüglichkeit

RekursivAggregation
NichtrekursivAggregation

### 4.1.1.10 Abstraktion (Generalisierung/Spezialisierung)

### 4.1.1.10.1 Definition der Generalisierung:

Generalisierung ist eine hierarchische Beziehung zwischen Klassen.

Generalisierung faßt Klassen mit gemeinsamen Eigenschaften zu einer Oberklasse zusammen.

### 4.1.1.10.2 Definition der Spezialisierung:

Spezialisierung ist eine hierarchische Beziehung zwischen Klassen.

Spezialisierung unterteilt eine Klasse nach einem eindeutig festgelegten Unterscheidungsmerkmal (Diskriminator) in mehrere (mindestens zwei) Unterklassen.

### 4.1.1.10.3Sprach- und Wortherkunft

< franz. *généraliser*, "verallgemeinern"

< lat. *specialis*, ursprünglich "einer besonderen Art entsprechend", daraus dann allgemein "besonders"

### 4.1.1.10.4Erläuterung des Abstraktionskonzeptes

Die Merkmale von übergeordneten Klassenebenen sind in den Objekten der untergeordneten Rangebenen aufgehoben (Vererbung). Dadurch entsteht ein Ordnungssystem als Klassenhierarchiebaum, das verwandtschaftliche Beziehungen ausdrückt: die vertikalen Linien beschreiben die Eltern-Kind-Beziehungen (Abstraktion/Generalisierung), die horizontalen Rangebenen die geschwisterlichen (Differenzierung/Spezialisierung).

Die gemeinsamen Merkmale haben eine doppelte Konsequenz. Einerseits fassen sie die Objekte, die diese gemeinsamen Merkmale aufweisen, in einer Gruppe (Klasse) zusammen. Andererseits grenzen sie diese Objekte von anderen Objekten, die nicht über diese Merkmale verfügen, ab.

Die konkreten Objekte sind damit selbst "dünner", abstrakter geworden, sie wurden in ihrer Eigenschaftsvielfalt auf ein Muster relevanter Eigenschaften reduziert.

Um die Vergleichbarkeit und damit Unterscheidbarkeit der Klassen und ihrer Objekte auf der jeweils gleichen Hierarchieebene zu sichern, ist die Einführung von (für die jeweilige Rangstufe gültigen) Unterscheidungskriterien (Diskriminatoren) erforderlich. Die Konsistenz der gesamten Klassenhierarchie ist abhängig von der zweckorientierten Wahl der Diskriminatoren. Um die Zweckmäßigkeit und Richtigkeit der Bildung der Klassenstruktur (Klassenhierarchie) besser nachvollziehen und überprüfen zu können, müssen die Diskriminatoren in geeigneter Weise explizit formuliert und festgehalten werden.

Weitere, höhere Rang- oder Hierarchieebenen entstehen durch weitere Abstraktion. Die Betrachtung der Klassen einer Abstraktionsebene ergibt, dass bestimmte Klassen wiederum gemeinsame Merkmale haben, bzw. dass anhand bestimmter Unterscheidungsmerkmale die Objektgruppen der Rangebene in neue Gruppen zusammengefasst werden. Dabei wird wieder von Merkmalen abstrahiert, die Objekte auf noch allgemeinere Merkmale reduziert. So entsteht eine abstraktere, "dünnere" Rangebene. Die Merkmale der höheren Ebene sind wiederum in den niedrigeren Ebenen aufgehoben.

Mit jeder Abstraktionsebene "entfernt" man sich weiter von der konkreten realen Objektwelt (wenn man beachtet, dass jedes Entfernen von der konkret-erscheinenden Realität des Objekts zugleich eine Annäherung an sein wirkliches Wesen darstellt). Gleichzeitig ist es so, dass, je "dünner" die Abstraktion ist, je weiter man von den konkreten Objekten entfernt ist, desto mehr konkrete Objekte werden durch die Abstraktion erfasst und erklärt. Letztlich können beliebig viele Abstraktionsebenen gebildet werden. Am Ende steht die "dünnste", abstrakteste, allgemeinste, die höchste Hierarchieebene; ihre Merkmale sind dann so allgemein, so abstrakt, dass damit wiederum alle konkreten Objekte erfasst und erklärt werden. Alle konkreten Objekte gehören zu der höchsten Abstraktion.

### 4.1.2.2 Prozess

### 4.1.2.2.1 Definition:

Prozess ist ein Modellelement.

Prozess ändert das gesamte Objekt der Klasse.

Prozess besteht aus sachlogisch zusammengehörenden Aktivitäten.

Prozess ist zeitlich geordnet.

### 4.1.2.2.2 Sprach- und Wortherkunft

< lat. *processus,* "Fortschreiten, Fortgang, Verlauf"

### 4.1.2.2.3 Erläuterung des Prozesskonzeptes

Der Prozess beschreibt den realen Ablauf, die reale Ausführung einer Objektoperation in Raum und Zeit.

Prozesse sind das dynamische Pendant zu den Objektoperationen im statischen Modell.

Ein Prozess ist eine inhaltlich abgeschlossene (Anfang und Ende), zielgerichtete, zeitliche und sachlogische Abfolge von objektverändernden Geschehnissen (Aktivitäten), die durch Ereignisse, Zustände, Bedingungen ausgelöst, angetrieben und miteinander verbunden sind.

Prozesse werden durch Objekte geprägt. Objekte sind die Gegenstände von Prozessen. Es sind Objekte, die prozessieren. Im Prozess bewegen und verändern sich Objekte. Jeder Prozess hat ein relevantes hauptsächliches Prozessobjekt.

Im Unterschied zum Objektlebenszyklus ist ein Prozess immer die Interaktion von mehreren Objekten.

Zum Prozess gehört die Gesamtheit der weiteren Zuständigkeiten, Ressourcen und Regeln, die erforderlich sind, das vereinbarte Ergebnis zu erreichen.

Das Ergebnis von Prozessen ist die Änderung der Zustände der am Prozess beteiligten Objekte. Solange ein Prozess abläuft ist die Veränderung der Objekte noch nicht vollzogen; der Abschluss eines Prozesses bedeutet die Erreichung eines neuen Zustandes der Objekte.

### Prozessklassen

Ein Prozess ist letztlich auch ein Objekt mit den für Objekte allgemeinen Merkmalen:

Prozesse haben Eigenschaften, Beziehungen und Verhalten.

Prozesse werden daher auch als Prozessklassen modelliert.

Prozessklassen sind Mengen von Prozessen, die über dieselben Prozessmerkmale verfügen.

Eine Prozessklasse verfügt über:
Prozessattribute
Prozessoperationen
Prozessassoziationen
Prozessaggregationen - Aktivitäten
Prozessgeneralisierungen bzw. ―Spezialisierungen
Prozesszustände

Prozessattribute können sein:
ProzessName
ProzessTyp1 (z.B. Manueller Prozess, EDV-Prozess, maschineller Prozess)
ProzessTyp2 (z.B. Wertschöpfungsprozess, Verwaltungsprozess, Bewertungsprozess)

Prozessoperationen sind potenzielle Vorgänge, die mit einem Prozess geschehen können. Geschehnisse, die mit dem Objekt Prozess verbunden und von fachlicher Relevanz sind. Prozessoperationen werden wiederum als Prozesse modelliert, die aber einen Prozess zum Gegenstand haben. Es wird damit eine zweite Prozessebene geschaffen, die eine prozessuale Betrachtung von Prozessen ermöglicht.

Prozessoperationen beschreiben nicht, was **im** Prozess vor sich geht, sondern was **mit** dem Prozess geschieht, nicht die Wirkung im Prozess, sondern Wirkung auf den Prozess.

Beispiele für Prozessoperationen sind:
[Prozess].starten
[Prozess].anhalten
[Prozess].fortführen
[Prozess].umkehren
[Prozess] .wiederholen
[Prozess].beenden

### Prozessaggregationen

Prozesse bestehen aus Prozessteilen. Ein Prozessteil wird durch das dynamische Modellelement Aktivität dargestellt. Aktivitäten als Teil von Prozessen referenzieren auf Objekt- und Attributoperationen, wie der Figur 10b zu entnehmen ist . Zustände und Ereignisse sind Auslöser und Ergebnisse von Prozessen und Aktivitäten; Bedingungen verknüpfen Aktivitäten, sie stellen den Prozessfluss her.

Die Prozessteile gehören fachlogisch zusammen; sie bilden den innere Fachlogik des Prozesses ab. Sie sind erforderlich, damit das Prozessziel erreicht werden kann (was und wie bzw. Ziel und Weg).

Die Prozessaggregation ist eine Sammlung, eine fachlogische, jedoch zeitlich ungeordnete Zusammenstellung von Prozessteilen eines Prozesses; sie kann jedoch an und für sich keine konkrete zeitlich-fachlogische Reihenfolge der Prozessteile abbilden.

Objekt.bearbeiten (besteht aus) (bzw. kann bestehen aus)
Objekt.anlegen (Ist Teil von)
Objekt.speichern (Ist Teil von)
Objekt.auswählen (Ist Teil von)
Objekt.ändern (Ist Teil von)
Objekt.prüfen (Ist Teil von)
Objekt.sperren (Ist Teil von)
Objekt.löschen (Ist Teil von)
Objekt.kopieren (Ist Teil von)
Objekt.sortieren (Ist Teil von).

### Prozessassoziationen

### Assoziationen von Prozessen zu statischen Klassen

Einerseits gibt es Assoziationen von Prozessklassen zu statischen Klassen, wie z.B.
Kosten
Material
Arbeitsmittel
Produkt
Beleg
Organisationseinheit
Stelle
Mitarbeiter
ZeitPunkt, ZeitDauer, ZeitPeriode.

Mit diesen Assoziationen werden die äußeren Zuständigkeiten, Ressourcen, Regeln, Zeiten und Orte abgebildet, die im weiteren Sinn erforderlich sind, das gewünschte Ergebnis zu erreichen (wer, wann, wo, womit, ...).

### WER

Die verschiedenen personellen Gesichtspunkte, die Mitarbeiter, Stellen und

Organisationseinheiten, die mit ihren Fähigkeiten und Fertigkeiten sowie ihren Kompetenzen in verschiedenen Rollen an der Prozessausführung beteiligt sind.

### WANN

Die verschiedenen zeitlichen Gesichtspunkte, die für einen Prozessablauf relevant sind.

### WO

Die verschiedenen räumlichen Gesichtspunkte, die für einen Prozessablauf relevant sind.

### WOMIT

Die verschiedenen Ressourcen, Mittel, die für einen Prozessablauf relevant sind.

Die Beziehungen dieser vier Hauptgruppen von Prozessfaktoren sind nicht nur einseitig zwischen Prozess und Prozessfaktor ausgerichtet. Die Prozessfaktoren stehen auch untereinander in einem vielschichtigen Beziehungsgeflecht:
der personelle Faktor und der Ressourcenfaktor haben Zeit-, Raum- und Wertbeziehungen
der Ressourcenfaktor hat einen personellen Bezug und umgekehrt
der Raumfaktor hat einen Zeit- und Wertbezug. Mit diesen Assoziationen wird nicht abgebildet, was im Prozess fachlogisch abläuft, sondern das Umfeld, in dem der Prozess konkret vollzogen wird.

Das ist der Übergang von der fachlogischen Beschreibung des Prozesses zur Beschreibung der realen Umstände, unter denen er vollzogen wird.

Die Prozessmodellierung ist letztlich erst mit dieser "Workflow-Beschreibung" vollständig.

### Assoziationen in Prozessen

Andererseits bestehen gerichtete Assoziation zwischen Prozessteilen innerhalb eines Prozesses. Die gerichteten assoziativen Beziehungen bilden die Reihenfolge, die zeitlich-fachliche Ablauflogik der einzelnen Prozesselemente im Prozess ab, z.B.:
erst, ... dann; (Vorgänger, Nachfolger), (Sequenz)
gleichzeitig; (alle), (Parallelität)
solange ... bis (Schleife)
entweder ... oder.

Das geschieht mit Hilfe von Reihenfolgeoperatoren und Bedingungen, wie sie aus Figur 10a zu entnehmen sind.

### Prozessattribut und Prozessassoziationen

Analog zur Relativität zwischen Attribut und Klasse in der statischen Objektsicht ist auch die Verwendung von Prozessattributen und Assoziationen für dynamische Klassen relativ. Startzeitpunkt oder Endzeitpunkt eines Prozesses können sowohl als Prozessattribute als auch als Assoziation zwischen Prozess und Klasse ZeitPunkt in der Rolle als Startzeitpunkt oder Endzeitpunkt modelliert werden (Figur 11). Das gilt analog auch für andere Klasse wie z.B. Organisationseinheit, Kosten, Arbeitsmittel.

### Prozessvererbungen

Die Klassifizierung von Prozessen ergibt eine Sammlung von spezielleren Prozessen zu jeweiligen allgemeineren, abstrakteren Prozessen, von denen sie bestimmte Eigenschaften erben.

Die Prozessklassifizierung ist grundsätzlich auf zwei unterschiedliche Arten möglich:
- Prozessklassifizierung nach der Operation (Objekt bleibt gleich)
- Prozessklassifizierung nach dem Objekt (Operation bleibt gleich)

Die Prozessklassifizierung nach dem Objekt und die Prozessklassifizierung nach der Operation können in einer Prozessvererbungsmatrix zusammengeführt werden, die übersichtlich die Menge der insgesamt möglichen Prozessspezialisierungen zeigt, die jedoch nicht immer alle fachlich relevant sein müssen. Prozessspezialisierungen werden häufig als Prozessvarianten oder Prozessszenarien bezeichnet.

Prozessvererbungshierarchien, wie in Figur 12, ergeben im dynamischen Modell die je nach Modellzweck erforderlichen Abstraktionsebenen.

### Prozesszustände

Der Zustand eines Prozesses ist die jeweils aktuelle Lage seines Ablaufs, die augenblickliche Verfassung, in der sich der Prozessablauf befindet. Er bezieht sich auf die Prozessoperationen, die den Ablauf der Objektoperationen, d.h. der Prozesse, charakterisieren.

| Beispiel: | |
|---|---|
| Objekt | Auftrag |
| Objektaktion (Objektverhalten) | Anlegen |
| Prozess (Ablauf der Objektoperation) | Auftrag.anlegen |
| Prozessoperation (Prozessverhalten) | Autrag.anlegen.starten |
| Prozessablauf hat Zustand (Wert) | **Auffrag.anlegen.gestartet** |

### Prozessrollen

In Abhängigkeit vom Ziel der Modellierung von Prozessen kann ein Prozess in einem Zusammenhang ein Primärprozess sein, in einer anderen Relation wird er zum Sekundärprozess.

Es gibt keinen Prozess ohne Objekte. Jeder Prozess hat ein Objekt, das ihn prägt. Derjenige Prozess, der in einem gegebenen Zusammenhang Gegenstand und Ziel der Modellierung ist, ist der Primärprozess (Hauptprozess, Clientprozess, Kundenprozess). Sekundärprozesse sind Sub- oder Service-Prozesse, die zur Realisierung der Primärprozesse notwendig sind (Nebenprozess, Serverprozess, Lieferantenprozess).

### Prozessablauf

Die Abfolge von Prozesselementen ist nicht notwendig linear sondern kann durch Bedingungen mit Operatoren beliebig verzweigen. Die Abfolge von Prozessteilen lassen sich durch Aneinanderreihung und Kombination an sich gleichbleibender Strukturelemente darstellen:

### Sequenz

Eine Reihe unmittelbar aufeinanderfolgender, obligatorischer Prozesselemente; ein bestimmtes Prozesselement muss erst enden, bevor das darauffolgende starten kann; das Ende (Ergebniszustand) des vorangehenden Prozessteils ist unmittelbar und zwingend Voraussetzung für den Start des nächsten Prozessteils:

Die Kartoffeln in Figur 13a sollen nicht gekocht werden, bevor sie geschält wurden, sie sollen nicht geschält werden, bevor sie gewaschen wurden.

### Verzweigung

Der Prozessverlauf nimmt nicht nur einen Weg, sondern läuft über mehrere bzw. einige Wege:
- Parallele
   Unterschiedliche Prozessteile stehen nicht in einer unmittelbaren Ablaufabhängigkeit; sie können gleichzeitig ablaufen, wie aus Figur 13b ersichtlich ist.
   Es gilt die Regel der Modellierung der fachlogisch maximalen Parallelität:
   Ohne Berücksichtigung der Verfügbarkeit von Ressourcen zur realen Ausführung eines Prozesses werden alle Prozessteile parallel modelliert, die zueinander nicht in einer fachlogischen Zwangsfolge stehen Gemüse waschen, Kartoffeln waschen, Fleisch schneiden können gleichzeitig erfolgen, diese Prozessteile des Prozesses Gericht.zubereiten sind der Fachlogik nach nicht voneinander abhängig Erst unter dem Blickwinkel der verfügbaren Ressourcen (z.B. ob eine Kochkraft oder zwei den Prozess ausführen können) würde sich für die genannten Prozessteile eine bestimmte Sequenz ergeben, die dann aber ressourcenbedingt und nicht fachlogisch bedingt ist
- Alternative
   Der Prozess muss einen bestimmten Verlauf unter verschiedenen Varianten nehmen in Abhängigkeit davon, ob bestimmte Bedingungen erfüllt sind oder nicht. Ein möglicher Ablauf ist der Figur 13c zu entnehmen.

### Schleife

Bestimmte Prozessteile müssen, abhängig von bestimmten Bedingungen, mehrmals durchlaufen (wiederholt) werden. Eine solche Wiederholung ist den Figuren 13d-f zu entnehmen.

### Synchronität

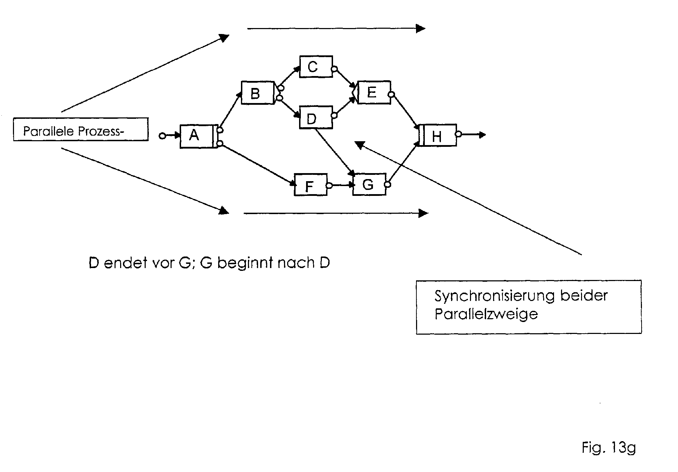

Zeitliche Synchronisation der Ausführung von parallel verlaufenden Prozessteilzweigen
**Einfache Synchronität -** Y darf frühestens dann ausgeführt werden, wenn X entweder zuvor erfolgreich beendet wird oder wenn feststeht, dass X nicht mehr zur Ausführung kommt
**Strikte Synchronität -** Y darf nur dann ausgeführt werden, wenn X zuvor erfolgreich beendet worden ist
Synchronisationen müssen überlappungsfrei modelliert werden, wie man aus Figur 13g entnehmen kann.

### Synchronitätsfälle

Gleichzeitig starten, nicht gleichzeitig enden
Gleichzeitig enden, nicht gleichzeitig starten
Gleichzeitig starten und enden
Gleichzeitig, nicht gleichzeitig starten und enden

### 4.1.2.2.4 Spezialisierungen und Rollen von Prozess

Zur Unterstützung der Identifizierung von Prozessen bei der fachlichen Modellierung, werden im folgenden die wichtigsten Spezialisierungen und Rollen aufgelistet.

### 4.1.2.2.4.1 Spezialisierungen

Prozessspezialisierung nach Objekt
Prozessspezialisierung nach Operation

### 4.1.2.2.4.2 Rollen

GesamtProzess
TeilProzess

### Rollen von Prozessteilen in gerichteten Assoziationen zwischen aggregierten Prozesselementen

Im Unterschied zum statischen Modell, in dem die Rollen von Klassen Unterbegriffe zum Klassenbegriff ausdrücken, sind die Rollen der assoziierten Prozessteile keine spezielleren Prozesse im Sinne der Abstraktion. Rollen von Prozessteilen in Prozessassoziationen sind feststehende prozessorale Sachverhalte, die für alle Prozessteile gleichermaßen gelten; Prozessteile können nur bestimmte feststehende Rollen spielen:Prozessteile spielen in Prozessen (immer) die (selben) Rollen "Vorgänger" oder "Nachfolger" oder "Start" oder "Ende". Das ergibt sich aus der Funktionalität, die Assoziationen in einem Prozess erfüllen; sie bilden die zeitlich-fachlogische Abfolge der Prozessteile ab.

### 4.1.2.3 Aktivität

### 4.1.2.3.1 Definition:

Aktivität ist ein Modellelement.

Eine Aktivität führt zu Veränderungen, insbesondere ändert sie den Wert der Attribute von einem Objekt.

### 4.1.2.3.2 Sprach- und Wortherkunft

< miat. *activitas*, "Tatkraft", "Unternehmungsgeist"

### 4.1.2.3.3 Erläuterung des Aktivitätskonzeptes

Die Aktivität charakterisiert den realen Ablauf, die reale Ausführung einer Operation in Raum und Zeit.

Aktivitäten werden durch objektexterne und/oder objektinterne Ereignisse zu ihrer Ausführung aufgerufen.

Die Ausführung einer Aktivität hat immer einen bestimmten Anfangs- und einen bestimmten Endzeitpunkt. In der Zeitdauer zwischen diesen beiden Zeitpunkten vollzieht sich die verändernde Wirkung der Aktivität.

Die Ausführung einer Aktivität führt immer zu einem Ergebnis.

Ist die Aktivität elementar, so tritt sie in der Rolle als Funktion auf. Eine Funktion wirkt immer auf ein Attribut eines Objektes und führt immer zu Veränderungen des Wertes des Attributes, auf das sie einwirkt.

Die Funktion ist das dynamische Pendant zur Attributoperation im statischen Modell.

Eine Funktion ist ein Prozesselement, dass "atomar" ist, d.h. sie wird im Modell nicht mehr zerteilt.

Eine Funktion wird nicht mehr in weitere einzelne Handlungsteile zerlegt, wenn im gegebenen Modellierungszusammenhang eine weitere Detaillierung eines Funktionsablaufes nicht interessiert. Falls eine Detaillierung des Funktionsablaufes erforderlich wird, muss aus der "unteilbaren" Funktion ein aus Prozesselementen zusammengesetzter Prozess werden. Wenn im dynamischen Modell eine Funktion zu einem Prozess wird, bedeutet das wiederum, dass im statischen Modell das entsprechende Attribut, auf das die Funktion bislang eingewirkt hat, zur Klasse werden muss.

Umgekehrt gilt ebenso: wenn sich im statischen Modell erweist, dass für ein Attribut selbst Attribute auftauchen und deshalb aus dem Attribut eine Klasse wird, dann wird im dynamischen Modell die entsprechende Funktion, die bislang auf das Attribut eingewirkt hat, zu einem Prozess.

### 4.1.2.4 Zustand

### 4.1.2.4.1 Definition:

Zustand ist ein ModellElement.

Zustand beschreibt die Gesamtheit der Attributwerte des Objektes.

Zustand eines Objekts ändert sich durch die Änderung des Wertes mindestens eines seiner Attribute.

Zustand ist das Ergebnis einer Aktivität.

Zustand eines Objektes dauert bis zur nächsten Änderung mindestens eines Attributwerts des Objektes an.

### 4.1.2.4.2 Sprach- und Wortherkunft

< fnhd. *zuostant,* "Art und Weise des Bestehens" (seit dem 17. Jh. im heutigen Sinne verschoben vom beobachtbaren Stand - Stand der Dinge u.ä. - zu der inneren Befindlichkeit)

### 4.1.2.4.3 Erläuterung des Zustandkonzeptes

Ein Objekt ist im Modell charakterisiert durch seine Eigenschaften, seine Beziehungen und durch sein Verhalten. In der statischen Sicht auf das Objekt werden diese Merkmale durch ihre Bezeichner
mit der dahinter liegenden Bedeutung repräsentiert. In der dynamischen Sicht auf das Objekt weisen seine Merkmale zu jedem Zeitpunkt des Lebenszyklus bestimmte konkrete Werte, d.h. Zustände, auf.
Allgemein gesehen ist der jeweilige Zustand eines Objektes die Gesamtheit der Werte seiner Merkmale, die augenblickliche Beschaffenheit und Verfassung der Objektmerkmale, die diese zu jedem bestimmten Zeitpunkt innehaben.

Jeder Zustand kann eine Menge von Zustandsvariablen enthalten.Zustandsvariablen sind die für diesen Zustand charakteristischen Merkmale der Objekte der Klasse.Die Menge der Zustandsvariablen sind demnach eine Untermenge der Merkmale der Objekte der Klasse.ln einem Zustand werden nur solche Merkmale als Zustandsvariablen aufgeführt, die zur Beschreibung bzw. Identifikation des Zustandes fachlich bedeutsam sind. Eigenschaftszustände eines Objekts beziehen sich auf die Objektattribute, Beziehungszustände eines Objekts beziehen sich auf dessen Assoziationen, Verhaltenszustände auf Prozesse, in denen das Objekt prozessiert.

Der (Gesamt-) Zustand eines Objektes setzt sich zusammen aus:
- den aktuellen Attributwerten der Attribute des Objektes,
- den Zuständen seiner Assoziationen (nicht zugeordnet, zugeordnet, wem zugeordnet),
- dem Zustand des Prozesses, in dem es sich gerade bewegt (wie ist der Zustand des Ablaufs des Prozesses).

Die Gesamtheit der möglichen (interessierenden) Objektzustände bilden den Lebenszyklus des Objektes.

Sind für eine bestimmte Betrachtung nur bestimmte Merkmale oder gar nur einzelne Merkmale und ihre Werte von Interesse, werden diese als der im gegebenen Zusammenhang interessierende Zustand des Objekts betrachtet. Der Zustand eines Objekts ändert sich durch die Änderung des Wertes mindestens eines seiner Merkmale. Ein Zustand eines Objektes dauert so lange an, wie kein bestehender Merkmalswert des Objektes sich ändert.

Zwei Rollen von Zuständen sind Start- und Endzustände.

Zu einem Startzustand führt im gegebenen Kontext kein Prozesselement hin. Von einem Endzustand führt im gegebenen Kontext kein Prozesselement mehr weg.

Der Zustand im dynamischen Modell ist das Pendant zu den im statischen Modell deklarierten Merkmalswerten.

### 4.1.2.4.4 Rollen von Zustand

Zur Unterstützung der Identifizierung von Zuständen bei der fachlichen Modellierung, werden im folgenden die wichtigsten Rollen aufgelistet.
- AuslösungZustand
- GewollterZustand
- ErwarteterZustand
- Gewünschterzustand
- SpontanerZustand
- Istzustand
- SollZustand
- Stabilerzustand
- InstabilerZustand

### 4.1.2.5 Ereignis

### 4.1.2.5.1 Definition:

Ereignis ist ein ModellElement.

Ereignis bezeichnet den Zeitpunkt des Abschlusses einer Aktivität.

### 4.1.2.5.2 Sprach- und Wortherkunft

< ahd. *arougnessi,* "Sich zeigen", später "Geschehen"

### 4.1.2.5.3 Erläuterung des Ereigniskonzeptes

Das Ereignis ist der Abschluss der Ausführung einer Operation und wird durch diesen Zeitpunkt bestimmt. Es ist der Zeitpunkt, in dem der neue, geänderte Zustandes des Objekts eingetreten ist.

Das Ereignis bezieht sich immer auf die Operation, deren Abschluss sie kenntlich macht.

Ereignis und (neuer) Zustand bilden das Ergebnis der Aktivität.

Die Elemente Zustand, Ereignis, und Aktivität stehen in einem unmittelbaren Zusammenhang.

Merkmalswerte ändern sich immer infolge der Ausführung einer Aktivität.

Die Aktivität wirkt immer auf ein oder mehrere Merkmale, d.h. immer in Richtung einer Änderung des Wertes dieses bzw. dieser Merkmale, also hin zu einem neuen Zustand des Objektes.

Der Zeitpunkt des Abschlusses der Aktivität, d.h. der Zeitpunkt, in dem das Objekt einen neuen Zustand eingenommen hat, ist das Ereignis.

Die chronologisch-sachlogische Abfolge der Elemente ist:
Zustand (ein gegebener Zustand dauert an)
Aktivität (Ablauf eines Geschehens, das verändernd auf Merkmale/Merkmalswerte von Objekten einwirkt)
Ereignis (das Geschehen ist zu einem bestimmten Zeitpunkt vollzogen, die Veränderung hat sich ereignet)
(neuer) Zustand (das ereignete Geschehen hat einen neuen Merkmalswert gebracht)

### 4.1.2.5.4 Rollen von Ereignis

Zur Unterstützung der Identifizierung von Ereignissen bei der fachlichen Modellierung, werden im folgenden die wichtigsten Rollen aufgelistet.
- AuslösendesEreignis (StartZeitpunkt für folgende Operation)
- SignalEreignis (Wecker)

### 4.1.2.6 Bedingung

### 4.1.2.6.1 Definition:

Bedingung ist ein ModellElement.

Bedingung besteht aus Aussagen und Operatoren.

Bedingung steht in Beziehung zu anderen Modellelementen (z.B. Attribut, Assoziation, Prozess).

Bedingung bewirkt in Abhängigkeit von der Gültigkeit einer Aussage Einschränkungen für andere Modellelemente.

### 4.1.2.6.2 Sprach- und Wortherkunft

< mhd. im 16. Jh. als "rechtliche Abmachung, Vereinbarung" später als "Voraussetzung" und als "Gegebenheit, Umstand"

### 4.1.2.6.3 Erläuterung des Bedingungskonzeptes

Eine Bedingung ist die Aussage über einen objektiven Sachverhalt, von dessen Existenz bzw. von deren Gültigkeit die Existenz eines anderen Sachverhaltes bzw. die Gültigkeit einer anderen Aussage abhängt oder die diese nach sich zieht.

Einer Bedingung als Aussage kann somit jeweils - zu einem bestimmten Zeitpunkt in einem bestimmten Kontext - ein konkreter Wahrheitswert (wahr oder falsch) zugeordnet werden.

Der Bedingungszusammenhang wird durch die
Wenn - so - Beziehung ausgedrückt. In Bedingungen können Aussagen durch Operatoren verbunden werden.

Voraussetzung für das Ablaufen einer bestimmten Aktivität ist i.a., das Objekte sich in einem bestimmten Zustand befinden. Dies wird in einer Bedingung festgehalten.

Prinzipiell können sowohl statische als auch dynamische Modellelemente mit Bedingungen versehen werden. Es gibt jedoch auch Modellelemente, die nicht bedingbar sind.

Beim instanziieren der Klasse oder der Assoziation bzw. beim Ablaufen des Prozesses ist dann zu prüfen, ob die Bedingungsaussage wahr oder falsch ist. Nur für wahre Aussagen ist die Bedingung erfüllt. Für Fälle, die zu einer falschen Aussage führen, ist eine entsprechende Fehlerbehandlung vorzusehen

### 4.1.2.6.4 Spezialisierungen und Rollen von Bedingung

Zur Unterstützung der Identifizierung von Bedingungen bei der fachlichen Modellierung, werden im folgenden die wichtigsten Spezialisierungen und Rollen aufgelistet.

### 4.1.2.6.4.1 BedingungSpezialisierung

Notwendige Bedingung
   Eine Bedingung heißt notwendig, wenn ohne ihre Realisierung die Existenz der durch sie bedingten Erscheinung unmöglich ist. Jedoch bestimmt die Bedingung noch nicht die wirkliche Existenz der bedingten Erscheinung, sondern nur die Möglichkeit.
Hinreichende Bedingung
   Eine Bedingung heißt hinreichend, wenn ihre Realisierung die Existenz der durch sie bedingten Erscheinung mit Notwendigkeit nach sich zieht.
   Das heißt jedoch nicht, das nur diese Bedingung die bedingte Erscheinung nach sich zieht.
Hinreichende &Notwendige Bedingung
   Eine Bedingung heißt notwendig und hinreichend, wenn ohne ihre Realisierung die Existenz der durch sie bedingten Erscheinung unmöglich ist und ihre Realisierung deren Existenz mit Notwendigkeit nach sich zieht.

### 4.1.2.6.4.2 BedingungRolle

StatikBedingung
   AttributBedingung
   Assoziation Bedingung
DynamikBedingung
   AktionAnfangBedingung
   AktionEndeBedingung
   ProzessAnfangBedingung
   ProzessEndeBedingung

### 4.1.2.7 Operator

### 4.1.2.7.1 Definition:

Operator ist ein ModellElement.

Operator verknüpft andere Modellelemente (insbesondere Aussagen, Bedingungen, Zustände, Ereignisse, Attributwerte) zu komplexen Modellaussagen.

### 4.1.2.7.2 Sprach- und Wortherkunft

< miat. *operator,* "Arbeiter, Schöpfer"

### 4.1.2.7.3 Spezialisierungen von Operator

Zur Unterstützung der Identifizierung von Operator bei der fachlichen Modellierung, werden im folgenden die wichtigsten Spezialisierungen aufgelistet.

### 4.1.2.7.3.1 Spezialisierung nach OperatorArt

LogikOperator
   Mindestens ein
   Höchstens ein
   Genau ein
   Kein
   Alle
Rechen Operator
   Addition
   Subtraktion
   Multiplikation
   Division
   ...
VergleichOperator
   Ist gleich
   Ist nicht gleich
   Ist kleiner als
   Ist nicht kleiner als
   Ist größer als
   Ist nicht größer als

### 4.2 Grafische Darstellung des Kernmodells

Die Figuren 14 bis 18 sind eine grafische Darstellung des Kernmodells.

Die Figur 14 zeigt eine Generalisierung statischer Elemente. Statische Modellelemente können über Attribute und Operationen verfügen. Weiterhin ist es ein generalisierbares Element, wenn es der Klasse ProzessKlasse oder EntiyKlasse angehört. Weiterhin kann ein Modellelement eine Rolle aufweisen oder in Beziehung stehen in Form einer Assoziation oder Aggregation. Die Kardinalität bestimmt die Anzahl der Objekte. Ein Diskriminator dient zum Löschen des Objektes.

Die Figuren 15 bis 17 legen den Umfang fest, in dem statische Klassen und dynamische Klassen deklariert werden.

Die Figur 15 stellt die Generalisierung von dynamischen Elementen in einem UML-Diagramme dar. Dynamische Modellelemente können Parameter aufweisen und Operatoren. Die Operatoren bestehen aus Rechenoperatoren, Vergleichsoperatoren und Logikoperatoren. Weiterhin stehen sie in Beziehung zur Klasse Aktivität. Die zeitliche Steuerung erfolgt durch sprechende Klassen. Diese Klassen bestimmen die Dauer, die Periode, den Zeitpunkt sowie das Ereignis und die Aktivität des Ereignisses zu bestimmten Bedingungen. Weiterhin wird der Zustand beschrieben.

Die Figur 16 zeigt ein UML-Diagramm für eine statische Klassendeklaration. Eine Klasse weist Attribute auf und Operationen. Weiterhin weist die ObjektOperationen auf, die in Abhängigkeit ihrer Rolle mehreren Klassen zugeordnet werden können. Die Operationen sind mit Aktivitäten verbunden. Hierdurch wird der tatsächliche Ablauf festgelegt. Die Operationen hängen von Bedingungen ab. Die Attribute werden durch den Typ und den Wertebereich bestimmt.

Die Figur 14 zeigt die Statikrelationen, die eine statische Klasse aufweisen kann. Hierbei handelt es sich um Assoziationen, Aggregationen und Abstraktionen. Die Abstraktionen stehen mit einem Diskriminator in Verbindung. Die Aggregation und die Assoziation referenzieren Rollen. Weiterhin wird durch die Klasse Kardinalität die Form der Assoziation und Aggregation festgelegt.

Die Figur 18 zeigt den Aufbau von dynamischen Elementen. Insbesondere zeigt die Figur welche Form eine Prozess Klasse aufweisen kann. Die Prozessklasse ist über die Aktivität mit Operationen verbunden. Die Operationen wiederum sind Bestandteile von Entity-Klassen. Der Zustand eines laufenden Prozesses kann über den Aktivitätszustand bestimmt werden. Prozesse, die auf einer Prozessklasse basieren, werden durch Aktivitätsereignissen gestartet. Diese wiederum sind Teile von Dynamikbedingungen. Aktivitätsereignisse werden bestimmt durch die Zeitdauer, die Zeitperiode und den Zeitpunkt. Die weiteren Klassen und ihre Funktion sind der Figur zu entnehmen.

### 5. Vorgehensmodell

Das dynamische Metamodell ist die Abbildung des Prozesses der Modellierung oder anders ausgedrückt des Vorgehens bei der Modellierung.

Die einzelnen Schritten der Modellierung sind den Figuren 19a und 19b zu entnehmen. Im ersten Schritt wird der Modellzweck bestimmt. Ist bei der Bestimmung des Modells wegwerfen wird zu der Frachtraum bestimmt und entschieden welche Aufgabe das Modell lösen soll. Im zweiten Schritt werden die Informationen bestimmt, das heißt es werden die Wissensquellen analysiert und ausgewertet.

Die Modellgliederung dient dazu, Hierarchien innerhalb der Wissensquellen zu bestimmen.

Bei der Fachgebietanaiyse werden die Fachaussagen und Fachbegriffe bestimmt sowie die entsprechenden Definitionen.
Nach der Bestimmung der Fachbegriffe und Fachaussagen wird die Statik des Modells moderiert. Hierbei werden die oben beschriebenen Metamodelle verwendet. Nach der Modellierung der Statik wird die Dynamik modelliert nun um nun nun nun die EU.

### 5.1 Modellzweck bestimmen

Unverzichtbarer erster Schritt im Prozess der Modellerstellung ist die Bestimmung, welchen Zweck das Modell erfüllen soll. Das bedeutet vor allem, Klarheit darüber herzustellen, für welche Anwendungsfälle der Gegenstand des Modells modelliert werden soll. Es ist für die Modellierung richtungsweisend, ob z.B. die Betriebswirtschaft (Modellgegenstand) unter einem akademischtheoretischen, volkswirtschaftlichen Blickwinkel - Stichwort Ausbildungsmodell - abgebildet werden soll, oder aus der Sicht eines Unternehmens - Stichwort Geschäftsprozessmodell - oder mit dem Ziel einer Softwarevorlage - Stichwort Implementierungsmodell. Diese drei Modelle hätten aufgrund desselben Modellgegenstandes sehr viel Gemeinsames, aufgrund der unterschiedlichen Modellverwendungen (Modellzweck) jedoch auch viele eigene Besonderheiten.

Allgemeiner Modellzweck kann sein:
- Linguistic Engineering
- Knowledge Engineering & Management
- Business Engineering & Management
- Software Engineering & Management

Abhängig vom Anwendungszweck des Modells sind viele Anwendungssichten auf ein Modell möglich. Ausgehend von der Zwecksetzung des Modells sind die verschiedener Anwendergruppen und deren Sichten von vornherein zu identifizieren, um diese verschiedenen Sichten bei gleichzeitiger Sicherstellung der Konsistenz des Modells zu garantieren. Die Modellanwendergruppen werden genauer im Sichtenmodell bestimmt.

Das Modell kann nicht alle Aspekte des realen Systems und seiner Umwelt abbilden, sondern lediglich von einer bestimmten Zielsetzung ausgehend, einen bestimmten Betrachtungsausschnitt als eine Annäherung an die Realität, möglichst optimal erfassen. Insbesondere ist zu bestimmen:
- Welche Fachinhalte gehören zum Modellgegenstand, welche nicht? (Modellbreite)
- Wie detailliert soll der Modellgegenstand abgebildet werden? (Modelltiefe)

Der Modellumfang wird genauer durch die Fachraumgliederung bestimmt.

Das konkrete Modellziel wird mit der Aufgabenstellung vorgegeben.

### 5.2 Fachwissen erfassen und verwalten

### 5.2.1 Wissenverwaltungsmodell

### 5.2.1.1 Klassen des Wissensverwaltungsmodelles

### 5.2.1.1.1 FachExperte

### 5.2.1.1.2 Fachdokument

### 5.2.1.1.3 Fachsoftware

### 5.2.1.1.4 Fachgebiet

### 5.2.1.1.5 Exemplar

### 5.2.1.1.6 Fachbezeichner

### 5.2.1.1.7 Organisation

### 5.2.1.1.8 Adresse

### 5.2.1.2 Grafische Darstellung des Wissensverwaltungsmodells

Die Figur 20. zeigt das UML-Diagramme des Wissensverwaltungsmodells, das Bestandteil des gesamten Modells ist. Das Wissensverwaltungsmodell ist vorzugsweise auf dem Metamodell des Kernmodells aufgebaut um nun den Aufbau des Wissens Verwaltung Modells kann man den einzelnen Klassen der Figur 2 entnehmen. Die Assoziationen und Aggregationen stellen die einzelnen Klassen in ihr semantisches Geflecht. Aufgrund der sprechenden Bezeichnung der einzelnen Klassen ist eine weitere Beschreibung nicht notwendig.

### 5.2.2 Prozess ModellWissenQuellen bestimmen

### 5.2.2.1 ModellWissenQuellen.auswählen

### 5.2.2.1.1 FachExperten.auswählen

### 5.2.2.1.2 FachDokument.auswählen

### 5.2.2.1.3 FachSoftware.auswählen

### 5.2.2.2 ModellWissenQuellen.verwalten

### 5.2.2.2.1 FachExperten.verwalten

### 5.2.2.2.1.1 Fachexperten.erfassen

### 5.2.2.2.1.2 Fachexperten.bearbeiten

### 5.2.2.2.1.3 Fachexperten.recherchieren

### 5.2.2.2.2 FachDokument.verwalten

### 5.2.2.2.2.1 Fachdokument.erfassen

### 5.2.2.2.2.2 Fachdokument.bearbeiten

### 5.2.2.2.2.3 Fachdokument.recherchieren

### 5.2.2.2.3 FachSoftware.verwalten

### 5.2.2.2.3.1 Fachsoftware.erfassen

### 5.2.2.2.3.2 Fachsoftware.bearbeiten

### 5.2.2.2.3.3 Fachsoftware.recherchieren

### 5.3 Fachraum gliedern

### 5.3.1 GliederungModell

### 5.3.1.1 Definition der Klassen des GliederungModells

### 5.3.1.1.1 Gliederung

Die Gliederung ist eine hierarchische Struktur zur Anordnung von Fachwissen.

### 5.3.1.1.2 AggregationGliederung

Die AggregationGliederung ist eine Gliederung.

Die AggregationGliederung besteht aus GliederungElementen.

Die GliederungElemente der AggregationGliederung sind Teile des jeweils übergeordneten GliederungElementes.

### 5.3.1.1.3 GeneralisierungGliederung

Die GeneralisierungGliederung ist eine Gliederung.

Die GeneralisierungGliederung besteht aus GliederungElementen.

Die GliederungElemente der GeneralisierungGliederung gehen durch Spezialisierung aus dem jeweils übergeordneten GliederungElement hervor.

### 5.3.1.1.4 ThemenGliederung

Die ThemenGliederung ist eine Gliederung.

Die ThemenGliederung besteht aus GliederungElementen.

### 5.3.1.1.5 GliederungElement

Das GliederungElement ist der Teil einer Gliederung.

Das GliederungElement ist ein Gliederungspunkt.

### 5.3.1.2 Beschreibung des Gliederungsmodells und Beispiele

Durch die einzelnen Gliederungen in ihrer Gesamtheit werden Breite und Tiefe der Modelle bestimmt.

Vollständige Gliederungen spiegeln in hohem Maße schon das Modell wider.

### Aufgabe der Gliederungen:

- Abgrenzung des Fachraums bzw. des Modells von anderen Fachräumen bzw. Modellen
- Darstellung der Struktur des Fachgebietes
- Unterstützung der Bildung von Arbeitspaketen bei verteilter Modellierung

### 5.3.1.2.1 Objektorientierte Fachraumgliederung

Objektorientierte Gliederungen widerspiegeln insbesondere funktionale Aspekte

### 5.3.1.2.1.1 FachobjektAggregationgliederung

Eine FachobjektAggregationgliederung ist eine Gliederung der funktionalen Teile eines Objekts. Sie stellt dar, welche funktionalen Teile eines Objekts modelliert werden sollen

Das jeweils oberste Aggregatobjekt ist der Fachraum bzw. der Modellgegenstand

### Beispiel:

### Unternehmen

besteht aus:
Unternehmensprodukte
Unternehmensziele
Unternehmenskultur
Unternehmensprozesse
Kunden
Lieferanten
Inventar (Ressourcen)
Handelsbücher
Belege (Dokumente)
Organisationseinheiten
Stellen
Mitarbeiter
Management

### 5.3.1.2.1.2 FachobjektSpezialisierunggliederung

Eine FachobjektSpezialisierunggliederung gibt eine Übersicht, welche abstrakteren und welche konkreteren Objekte aus dem Fachraum modelliert werden sollen

Es sollen Objekte spezialisiert werden, die in der funktionalen Aggregationgliederung auftauchen

### Beispiel:

### Rechtsgeschäft (wird spezialisiert durch)

Einseitige Rechtsgeschäfte
   Empfangsbedürftige einseitige Rechtsgeschäfte
   Kündigung
   Nichtempfangsbedürftige einseitige Rechtsgeschäfte
   Testament
Mehrseitige Rechtsgeschäfte
   Einseitig verpflichtende mehrseitige Rechtsgeschäfte Schenkung, Bürgschaft, Leibrente, Schuldversprechen, Schuldanerkenntnis
   Mehrseitig verpflichtende mehrseitige Rechtsgeschäfte Kauf, Tausch, Miete, Pacht, Leihe, Darlehen, Dienstvertrag, Werkvertrag, Mäklervertrag, Auslobung, Auftrag, Verwahrung, Gesellschaft, Gemeinschaft, Vergleich

### Produkt (wird spezialisiert durch)

Einzelprodukt
Serienprodukt
Chargenprodukt
Projekt
Dienstleistung

### 5.3.1.2.2 Prozessorientierte Fachraumgliederung

Prozessorientierte Gliederungen sind ergebnisorientiert. Sie bilden die Interaktion von Objekten ab und diese müssen ergebnisorientiert modelliert werden. Dies widerspiegelt sich u.a. im ziel- und nutzenorientierten Identifizieren und Benennen von Prozessen. Für Businessprozesse bedeutet das ein kundenorientiertes Modellieren der Prozesse.

### 5.3.1.2.2.1 FachprozessAggregationgliederung

Eine FachprozessAggregationgliederung ist eine Sammlung der Prozessteile, die funktional zum Prozess gehören.

Der Prozess ist das Aggregat und drückt aus, was erreicht werden soll (Ergebnis/Nutzen, Ziel des Prozesses)

Prozessteile drücken aus, wie das Ergebnis des Prozesses erreicht wird, wie das Ziel erreicht werden soll.

### Beispiel:

### Unternehmen.gründen (besteht aus)

Gründerpersönlichkeit.prüfen
Geschäftsidee.entwickeln
Unternehmen.planen
Unternehmensgründung.realisieren

### 5.3.1.2.2.2 FachprozessSpezialisierunggliederung

Spezialisierung nach Objekt, Operation bleibt gleich
Spezialisierung nach Prozess, Objekt bleibt gleich

### 5.3.1.2.2.3 FachprozessSpezialisierunggliederung nach Objekt

### Beispiel:

### Unternehmen.gründen (wird spezialisiert durch)

GewerblichesUnternehmen.gründen
HandwerklichesUnternehmen.gründen
FreiberuflichesUnternehmen.gründen
KaufmännischesUnternehmen.gründen

### 5.3.1.2.2.4 FachprozessSpezialisierunggliederung nach Operation

### Beispiel:

### Unternehmen.gründen (wird spezialisiert durch)

Unternehmen.neugründen
Unternehmen.kaufen
Unternehmen.franchisen
Unternehmen.tätigbeteiligen
Unternehmen.erben

### Unternehmen.beenden (wird spezialisiert durch)

Unternehmen.auflösen (wird spezialisiert durch)
   Unternehmen.selbstauflösen
   Unternehmen.zwangsauflösen
Unternehmen.verkaufen
Unternehmen.vererben
Unternehmen.verschenken

### 5.3.1.3 Grafische Darstellung des GliederungModells

Die Figuren 21a bis d sind eine grafische Darstellung des Gliederungsmodells. Von der Gliederung leitet sich die Themengliederung ab.

Die Gliederung umfasst die Generalisierung und die Aggregationen (Figur 21a). Die Bedeutung dieser einzelnen Gliederungsklassen kann man der vorhergehenden Beschreibung entnehmen.

Die Generalisierung enthält Generalisierungsgliederungselemente, die Modellelemente referenzieren. Ein Generalisierungselement kann sich auf ein übergeordnetes oder ein untergeordnetes Element beziehen (Figur 21b). Entsprechende Aussagen kann man für die Aggregationsgliederung treffen, wie sie in Figur 21c zu sehen ist. Für die Themengliederung, wie sie in Figur 21d beschrieben ist, ist auf die bereits beschriebenen Gliederungen zu verweisen.

### 5.4 Modellsichten bilden

Die Figur 22 zeigt in Form eines UML-Diagramms die Verbindung einzelner Modell Elemente mit Sichten. Sichten sind ebenfalls hierarchisch angeordnet. Einzelne Modellelemente sind einzelnen Sichten zugeordnet.

### 5.4.1 SichtModell

### 5.4.1.1 Definition der Klassen des SichtModells

### 5.4.1.1.1 Sicht

Die Sicht schränkt das Gesamtmodell nach festgelegten Kriterien (z.B. Sicht eines speziellen Fachgebietes, Sicht einer Branche, Sicht einer Anwendergruppe, usw) ein.

### 5.4.1.2 Grafische Darstellung des SichtModells

Die Figur 22 zeigt in Form eines UML-Diagramms die Verbindung einzelner Modell Elemente mit Sichten. Sichten sind ebenfalls hierarchisch angeordnet. Einzelne Modellelemente sind einzelnen Sichten zugeordnet.

### 5.4.1.3 Spezialisierungen der Klasse Sicht

Modellraum
Fachgebiet
Branche
Projekt
Anwender
Modellierungsteam
Fachmodellierer

### 5.4.2 Prozess ModellSichten.bilden

FunktionsSichten bilden
SpezialisierungsSichten.bilden
AnwenderSichten. bilden

### 5.5 Wissen analysieren

### 5.5.1 WissensanalyseModell

### 5.5.1.1 Definition der Klassen des WissensanalyseModells

### 5.5.1.1.1.1 Text

Der Text beschreibt das Wissen eines Fachgebietes.

### 5.5.1.1.1.2 Zitat

Das Zitat besteht aus einem oder mehreren Sätzen eines Textes.

### 5.5.1.1.1.3 Satz

Der Satz beinhaltet eine oder mehrere Aussagen.

### 5.5.1.1.1.4 FachAussage

Die FachAussage ist der Inhalt der/einer Aussage eines Satzes.

Die FachAussage drückt einen Sachverhalt eines bestimmten Fachgebietes aus.

### 5.5.1.1.1.5 Definition

Die Definition enthält die FachAussagen, welche den FachBegriff im wesentlichen definieren.

### 5.5.1.1.1.6 FachBegriff

Der FachBegriff besteht aus einer Bedeutung und mit mindestens einem Bezeichner in einem Fachgebiet.

### 5.5.1.1.1.7 FachBezeichner

Der Fachbezeichner besteht aus einem Wort oder einer Wortgruppe.

Der Fachbezeichner ist die Benennung einer Bedeutung in einem Fachgebiet.

### 5.5.1.1.1.8 ReferenzBezeichner

Der ReferenzBezeichner ist die Rolle eines FachBezeichners in Beziehung zu einem Fachbegriff in einem Fachgebiet. Das bedeutet, der FachBegriff wird in einem bestimmten Fachgebiet immer mit diesem ReferenzBezeichner identifiziert (Name des FachBegriffs).

### 5.5.1.1.1.9 SynonymBezeichner

Der SynonymBezeichner ist die Rolle eines Fachbezeichners in Beziehung zu einem Fachbegriff in einem Fachgebiet. Die Synonymbezeichner referenzieren auf die gleiche Bedeutung(FachBegriff) wie der ReferenzBezeichner in einem Fachgebiet, sind jedoch kein ReferenzBezeichner.

### 5.5.1.1.1.10 FachExperte

Der FachExperte ist der Verfasser/Hersteller von Wissensquellen eines bestimmten Fachgebietes.

### 5.5.1.2 Grafische Darstellung des WissensanalyseModells

die Figur 23 zeigt ein UML-Diagramme des Wissensanalysemodells. Einem Fachgebiet sind Fachbegriffe und Fachexperten zugeordnet. Der Fachbezeichner steht in einer Synonymen Beziehung zum Fachbegriff. Der Fachbezeichner kann jedoch auch durch eine Referenzbeziehung mit dem Fachbegriff in Verbindung stehen, wenn der Fachbezeichner identisch mit dem Fachbegriff ist. Die weiteren Beziehungen kann man den einzelnen Klassen des Diagramm entnehmen.

### 5.5.1.3 Spezialisierungen der Klassen des WissensanalyseModells

### 5.5.1.3.1 Fachaussagen

Definitionsaussagen
   Generalisierungsaussage
   Differenzaussage
Klasseaussagen
Attributaussagen
Attributwertaussage
Operationsaussage
Beziehungsaussagen
   Generalisierungs-/Spezialisierungsaussagen
   Assoziationsaussagen
   Aggregationsaussagen
   Rolleaussage
   Kardinalitätaussage
Geschehnisaussagen
   Reihenfolgeaussage
   Zustandsaussage
   Ereignisaussage
Bedingungsaussagen

### 5.5.2 Prozess FachgebietWissen.analysieren

Die Figuren 24a bis m beschreibenden den Prozess Fachgebietwissenanalysieren. Im ersten Schritt wird ein Text angelegt. Dieser Text wurde vorzugsweise von einer fremden Quellen in das entsprechende System eingelesen. Die Figur 24b zeigt in einem Ablaufdiagramm und einem UML-Diagramm wie ein Text angelegt wird.

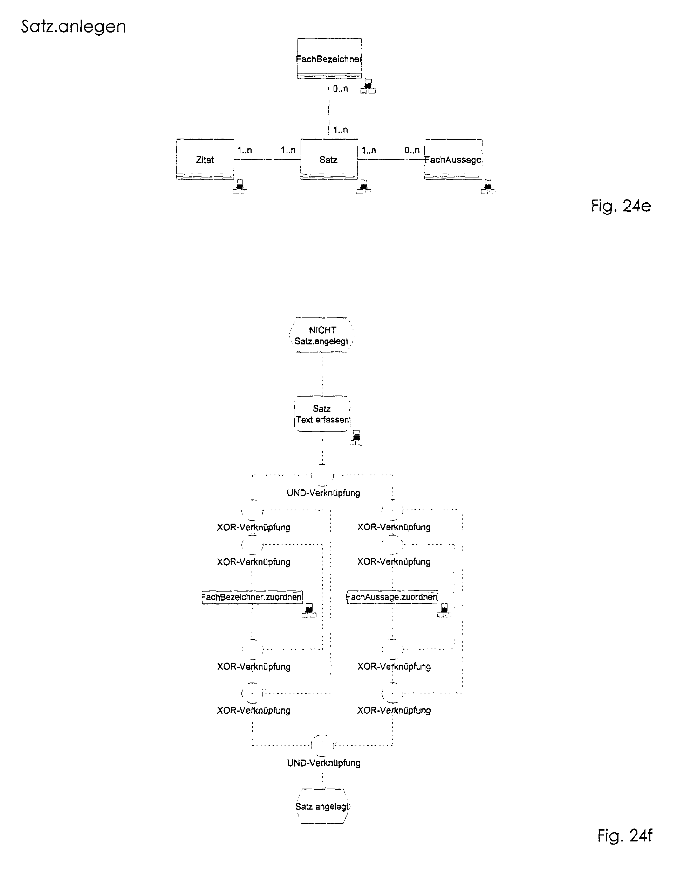

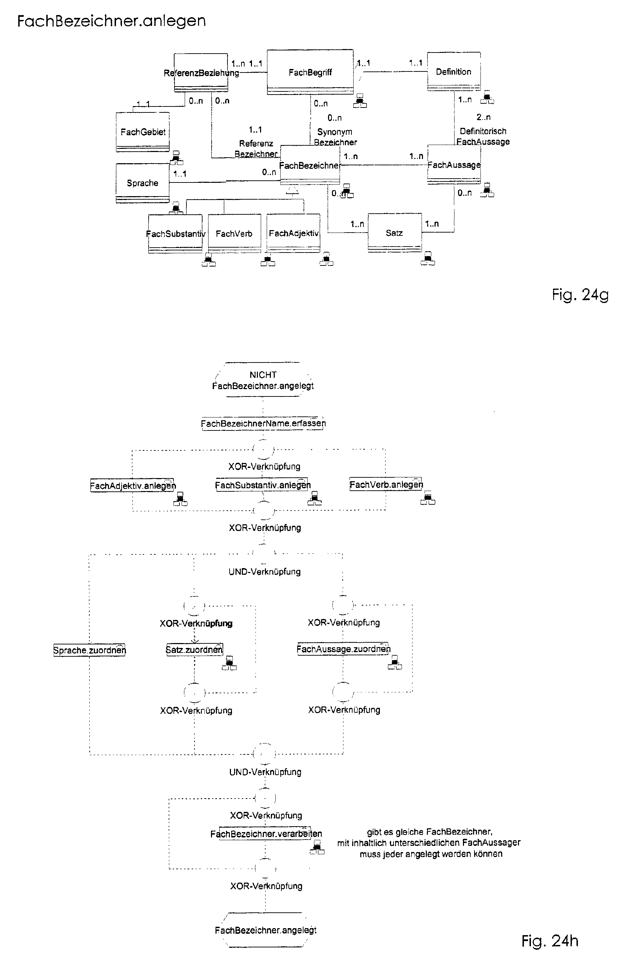

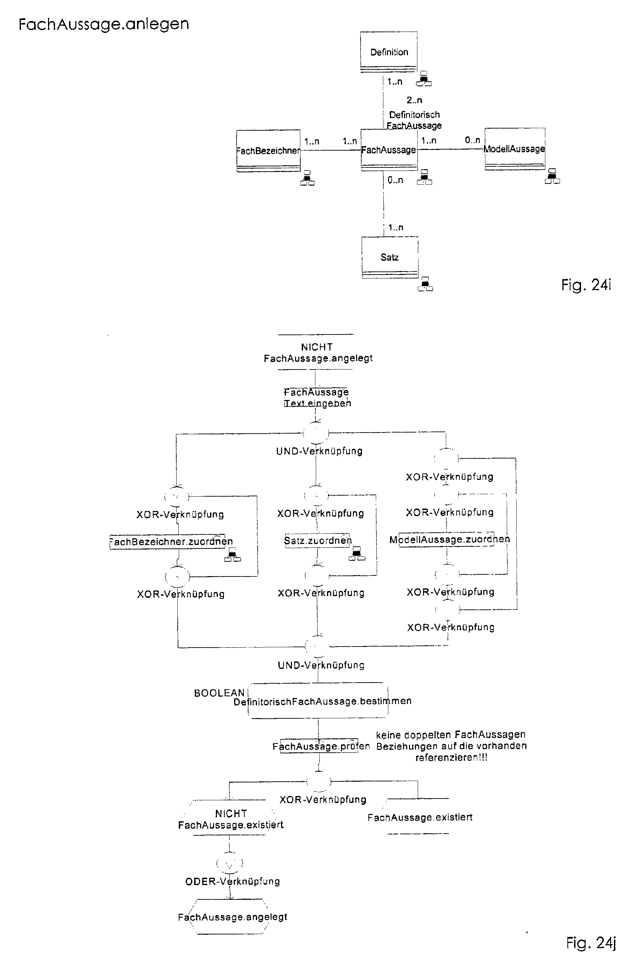

Aus diesem Text wird ein Zitat erfasst. Die Figur 24d zeigt den entsprechenden Ablauf. Nachdem ein Satz angelegt wurde (Figur 24f) wird der Fachbezeichner bestimmt. Die Figuren 24g und 24h zeigen in einem Ablaufdiagramm und in einem UML-Diagramm die Stellung des Fachbezeichner im Verhältnis zum Fachbegriff. Einem Fachbegriff können mehrere Fachbezeichner zugeordnet werden. Nachdem der Fachbezeichner und seine entsprechende Fachaussage angelegt wurden wird der Fachbegriff bestimmt. Hierzu ist es notwendig, dass der Fachbezeichner verarbeitet wird. Das besondere ist, dass es gleiche Fachbezeichner gibt, die unterschiedliche Sachaussagen aufweisen. Dies wird, wie in Figur 24h zu sehen ist, berücksichtigt.

### 5.5.2.1 Text.anlagen

Die Figur 24b zeigt in den Prozess Textanlegen. Das Ablaufdiagrammen beschreibt die einzelnen Schritte so detailliert, dass sich eine weitere Beschreibung erübrigt. Die einzelnen Verknüpfungen sind entweder UND-Verknüpfungen oder alternative Verknüpfungen insbesondere Schleifen.

### 5.5.2.2 Zitat.anlagen

die Figuren 24c und 24d beschreiben in Form eines UML-Diagramms und eines Ablaufdiagramms das Vorgehen bei der Anlage eines Zitats. Das Zitat ist Bestandteil eines Textes, eines Bildes, eines Videos oder einer Audioinformation. Dem Zitat wird ein Fachexperte zugeordnet und ein Fachgebiet. Ein Zitat kann aus Sätzen bestehen, die wiederum Fachbezeichner aufweisen.

### 5.5.2.3 Satz.anlagen

Die Figuren 24e und 24f beschreiben den Prozess satz anlegen. Ein Satz ist Bestandteil eines Zitats. Einem Satz wird eine Sachaussage zugeordnet. Sätze umfassen Fachbezeichner. Das Ablaufdiagrammen ist selbstsprechend.

### 5.5.2.4 Fachbezeichner.anlegen

Zwischen Fachbezeichner und Fachbegriff ist zu unterscheiden. Ein Fachbegriff stellt eine Normierung von Fachbezeichnern dar. So können mehrere Fachbezeichner den gleichen Fachbegriffe beschreiben. Sie haben aus diesem Grunde eine Synonymbeziehung zum Fachbegriff (Figur 24g). Fachbezeichner können Fachsubstantive Fachverben oder Fachadjektive sein.

### 5.5.2.5 Fachaussagen.anlegen

Die Figuren 24i und 24j beschreiben den Prozess Fachaussage anlegen. Dieser Prozess ist deswegen so wichtig, weil einem Fachbezeichner in Abhängigkeit seines Fachgebietes eine unterschiedliche Aussage zukommen kann. So kann z. B. im Bereich von sanitären Anlagen dem Fachbegriff Brille eine andere Aussage zugeordnet werden als im Bereich von Optikern. Diese unterschiedlichen Aussagen werden bei der Anlage eines Fachbezeichners berücksichtigt, indem diesem unterschiedliche Fachaussagen zugeordnet werden.

### 5.5.2.6 Fachbezeichner.verarbeiten

Die Figuren 24k und 24l zeigen wie ein Fachbezeichner verarbeitet wird. Im wesentlichen wird ein Fachbezeichner einem Fachbegriff zugeordnet. Die einzelnen Schritte sind den Diagrammen zu entnehmen.

### 5.5.2.7 Fachbegriff.anlegen

Die Figur 24m zeigt, wie ein Fachbegriff angelegt wird. einem Fachbegriff wird ein Fachbezeichner zugeordnet. Weiterhin wird denn Fachbegriff eine Definition zugeordnet. Der Fachbegriff erhält weiterhin eine Referenz zum Fachgebiet und der entsprechenden Definition. Zusätzlich wird der Fachbegriff für eine Verwendung im Fachgebiet festgelegt. Die wohl wichtigste Zuordnung ist die Referenz des Fachbegriffs zu den Modellelemente. So werden Fachsubstantive Klassen zugeordnet. Fachverben referenzieren Aktionen. Fachadjektive bestimmen Attributwerte.

### 5.6 Wissen sprachlich modellieren

### 5.6.1 Modellnormsprache

### 5.6.1.1 Beschreibung der Modellsprache

### 5.6.1.1.1 ModellBegriff

### (ModellNormsemantik)

Durch die Fachbegriffsbildung (Wissensanalyse) ist gesichert, dass jeder im Modell verwendete Begriffsbezeichner eine eindeutige Semantik (Bedeutung) hat.

### 5.6.1.1.2 ModellBezeichner

### (ModellNormlexik)

Die jeweils gültigen Referenzbezeichner aus der Fachbegriffsbildung (Wissensanalyse) bilden das ausschließliche Vokabular, mit dem die Fachinhalte im Modell abgebildet werden.

### 5.6.1.1.3 ModellNormAussagenMuster

### (ModellNormsyntax)

Die Tabelle in Figur 25 beschreibt die Modellnormsyntax. Hierdurch ist es möglich die einzelnen Fachbegriffe durch eine Sprache den Modellelemente zuzuordnen und die Modellelemente zu beschreiben, sowie ihre Referenzen zu bestimmen . Weiterhin ist es möglich ein bestehendes Modell sowohl grafisch als auch syntaktisch auszugeben. Die Tabelle ist weitestgehend selbstsprechend.

### 5.7 Modell anlegen

die Figur 26 zeigt den Ablauf, der notwendig ist, um ein Modell anzulegen. In einem ersten Schritt werden sowohl dynamische Klassen als auch statische Klassen angelegt. Statische Klassen werden mit Attributen versehen. Weiterhin wird den stafischen Klassen Operationen zugeordnet. Statische Klassen referenzieren einen Zustand und ein Ereignis.

Dynamische Klassen stehen in Verbindung mit Aktivitäten und Bedingungen.

Abstraktionen, Assoziationen und Aggregationen sind weiterhin Bestandteil des statischen Modells.

### 5.7.1 Statisches Modell anlegen

### 5.7.1.1 Klasse.anlegen

die Figur 27 zeigt den Prozess Klasseanlegen. Zunächst wird die Klasse einer Sachaussage zugeordnet. Im folgenden wird der Klasse mindestens ein Attribut zuordnet. Weiterhin wird jeder Klasse mindestens eine Operation zugeordnet. Einer Klasse kann eine Oberklasse zugeordnet werden. Hierbei werden die Operationen und die Attribute angezeigt, die vererbt werden. Weiterhin können unter Klassen zugeordnet werden. Die Zuordnung eines Zustandes ist ebenfalls optional.

### 5.7.1.2 Attribut.anlegen

Die Figur 28 zeigt den Prozess Attribut anlegen. Als erstes wird dem Attribut eine Sachaussage zugeordnet. Im Folgenden wird eine Klasse ausgewählt, die das Attribut aufweist. Das Attribut, wird der Klasse zugeordnet.

Ferner wird eine Zusicherung bestimmt und beigeordnet.

Was ist eine Zusicherung

Eine Attributoperation wird dem entsprechend Attributen zugeordnet. Ferner wird der Wertebereich des Attributs festgelegt.

### 5.7.1.3 ObjektOperation.anlegen

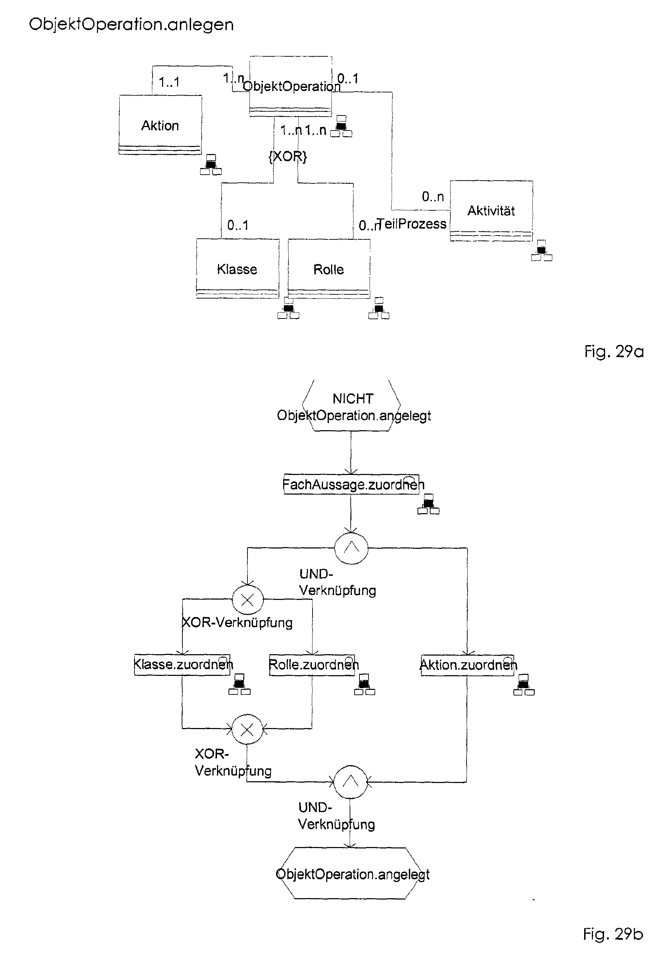

Die Figuren 29a und 29b zeigen den Ablauf, der notwendig ist, um eine Objektoperation anzulegen. Die Figur 29a, zeigt ein statisches Modell in Form eines UML-Diagramms, dass die Objektoperation im Verhältnis zu anderen Klassen darstellt. Der Unterschied einer Objektoperation und einer Attributoperation wurde bereits oben erklärt. Jeder Objektoperation mit einer Klasse oder eine Rolle zugeordnet. Weiterhin steht eine Klasse in Relation zu einer Aktion.

### 5.7.1.4 AttributOperation.anlegen

Die Figuren 30a und 30b zeigen den Prozess, der abläuft, um eine Attributoperation anzulegen. Im ersten Schritt wird einer Attributoperation eine Sachaussage zugeordnet. Im Folgenden wird jeder Operation ein Attribut und eine Aktion zugeordnet.

### 5.7.1.5 Zustand.anlegen

Die Figuren 31a und 31b zeigen den Ablauf des Prozesses Zustand anlegen. Zunächst wird der Zustand einer Sachaussage zugeordnet. Jeder Zustand steht in Verbindung mit einer Klasse und mit Aktionzustand. Weiterhin bezieht sich jeder Zustand auf Attributwerte.

### 5.7.1.6 Ereignis.anlegen

die Figuren 32a und 32b zeigen die notwendigen Schritte um ein Ereignis anzulegen. Durch die Ereignisse werden entsprechende Aktionen für entsprechende Klassen gestartet.

### 5.7.1.7 Abstraktion.anlegen

Die Figuren 33a und Figur 33b zeigen das Anlegen einer Abstraktionen. Jede Abstraktionen wird einer Sachaussage zugeordnet. Weiterhin referenziert jede Abstraktionen eine Oberklasse und eine Unterklasse.

### 5.7.1.8 Aggregation.anlegen

Die Figuren 33c und 33d zeigen den Ablauf des Anlegens einer Aggregation. Nach der Referenzierung einer Sachaussage wird die Aggregationen einem Aggregat zugeordnet. Ferner sind Bestandteil einer Aggregationen eine Reihe von Komponenten. Sowohl dem Aggregat als auch den Komponenten sind Rollen zuzuordnen. Die Kardinalität des Aggregat und der Komponenten ist ebenfalls zu bestimmen. Zu guter letzt werden Statikbedingungen bestimmt.

### 5.7.1.9 Assoziation.anlegen

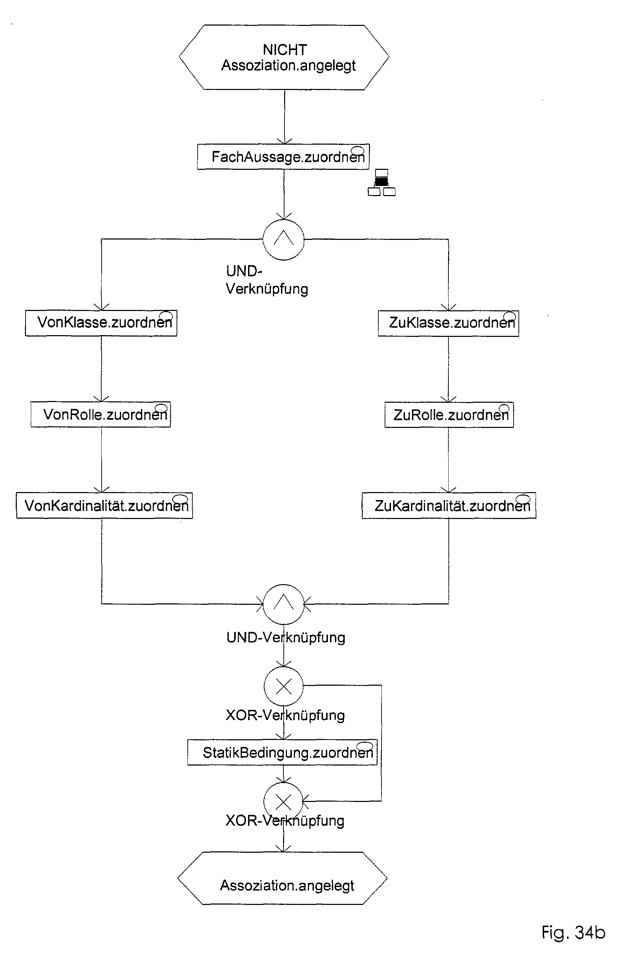

Die Figuren 34a und 34b zeigen zu guter letzt Anlegen einer Assoziation. Eine Assoziation hat von einer Klasse zu einer anderen Klasse zu erfolgen. Eine Assoziation kann unterschiedliche Rollen aufweisen. Ferner ist die Kardinalität festzulegen. Letzter Schritt sind jene Bedingungen zuzuordnen, unter der die Assoziation anzulegen ist.

### 5.7.2 Dynamisches Modell anlegen

### 5.7.2.1 ProzessKlasse.anlegen

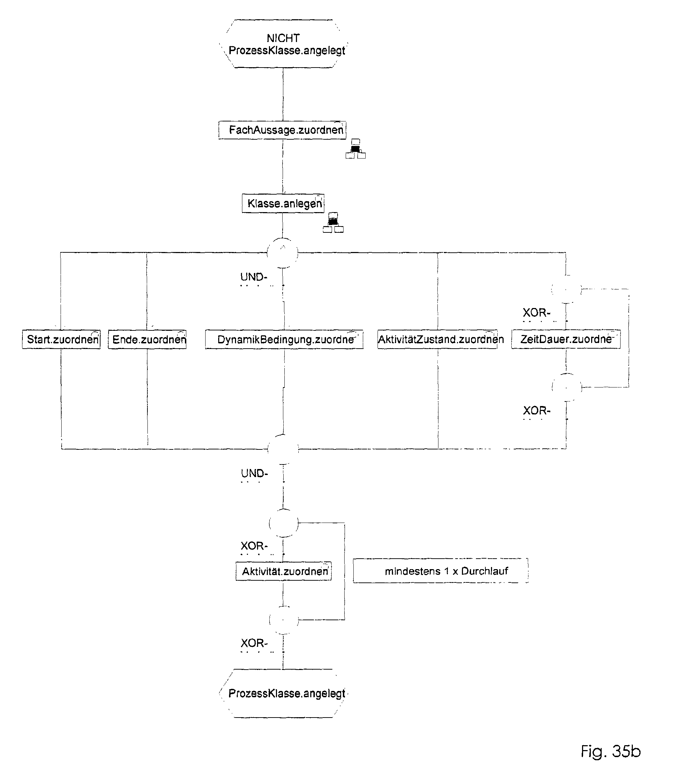

Die Figuren 35a und 35b zeigen die Schritte, die notwendigen sind, um eine Prozessklasse anzulegen. Zunächst wird eine Fachaussage zugeordnet. Im folgenden wird eine Referenz zu einer Start-, einer Ende-, und einer Zeitdauerklasse vorgenommen. Weiterhin erfolgt eine Zuordnung zu einer Dynamikbedingung. Jeder Prozessklasse ist mindestens eine Aktivität zugeordnet.

### 5.7.2.2 Aktivität.anlegen

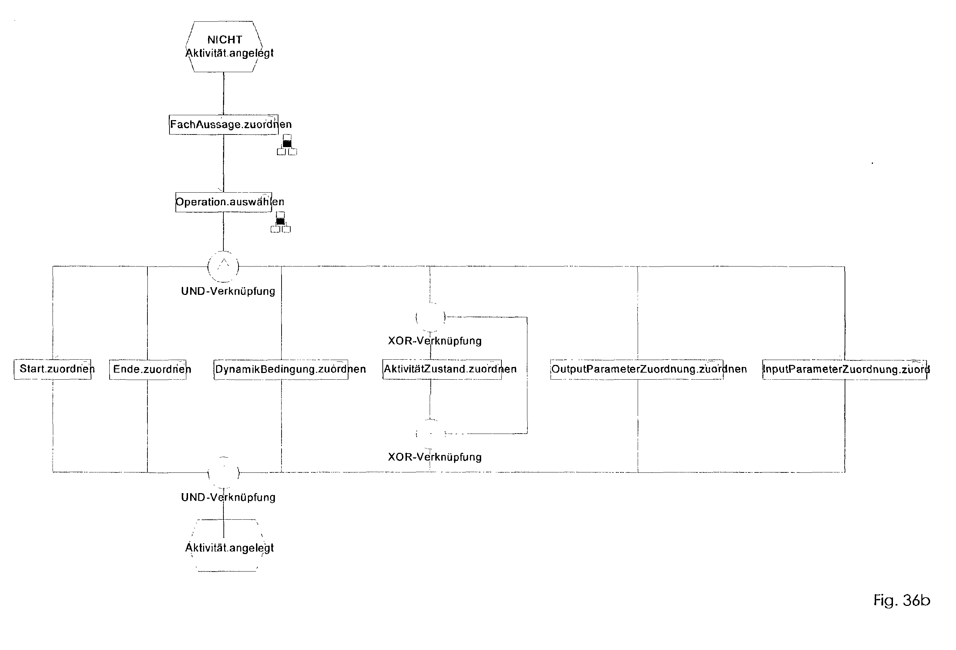

Aktivitäten stellen den realen Ablauf eine Operation da. Das Anlegen einer Aktivität wird in Figuren 36a und 36b dargestellt. Im ersten Schritt wird bei der Anlage einer Aktivität der Aktivitäten eine Sachaussage zugeordnet. Daraufhin wird eine Operation ausgewählt. Es wird ferner einer Aktivitäten eine Startklasse und eine Endklasse beigeordnete. Jede Aktivität benötigt Parameter, wobei es sich sowohl um Inputparameter als auch um Autorparameter handeln kann. Diese Parameter sind wie die Parameter einer Prozeduraufruf zu verstehen. Um den Ablauf einer Aktivität verfolgen zu können, sind einer Aktivität Zustände zugeordnet. Weiterhin dienen Dynamikbedingungen zur Steuerung des Ablaufs.

### 5.7.2.3 DynamikBedingung.anlegen

Die Figuren 37a und 37b beschreiben das Anlegen einer Dynamikbedingung. Dynamikbedingungen können aus Logikoperatoren, Vergleichsoperatoren oder Rechenoperatoren bestehen. In Abhängigkeit eines Ereignisses oder eines bestimmten Zustandes wird eine Dynamikbedingung überprüft. Einer Dynamikbedingung wird eine Sachaussage zugeordnet. Ferner wird ein Ereignis einer Aktivität oder ein Zustand einer Aktion zugeordnet. Bestandteil von Dynamikbedingungen sind Logikoperatoren, die von den Dynamikbedingungen referenziert werden.

## Patentansprüche

1. Verfahren zur Erzeugung eines computerlauffähigen Modells auf der Basis eines Metamodells,
- wobei das Metamodell ein statisches Kernmodell umfasst, das Entity-Klassen beinhaltet, die durch Attribute und Operationen beschrieben werden, wobei die Operationen das Verhalten der Instanzen der Entity-Klassen, insbesondere den Zustand der Attribute, bestimmen, wobei den Operationen Prozess-Klassen oder Programmcode zugeordnet sind,
- wobei das Metamodell ein dynamisches Kernmodell umfasst, das Prozess-Klassen enthält, die durch Aktivitäten beschrieben werden, wobei die Aktivitäten den Ablauf des Prozesses beschreiben, indem auf Operationen zurückgegriffen wird, die durch Verzweigungen und/oder Bedingungen und/oder Sequenzen und/oder Schleifen und/oder Synchronisation miteinander verknüpft sind,
a)mit einem ersten Schritt bei dem auf der Basis des Metamodells ein Modell entsteht, wobei nur die Elemente zur Beschreibung Verwendung finden, die das Metametamodell zur Verfügung stellt,
b) mit einem zweiten Schritt, bei dem die so beschriebenen Entity-Klassen auf entsprechende Strukturen einer Zielsprache abgebildet werden, und die Prozess-Klassen und ihre Aktivitäten solange ersetzt werden, bis alle Operationen durch Programmcode dargestellt sind, wobei der Programmcode in Verzweigungen und/oder Bedingungen und/oder Sequenzen und/oder Schleifen und/oder Synchronisation eingebettet wird,
c) mit einem dritten Schritt bei dem durch Instanzierung des Metamodells das Modell entsteht.

2. Verfahren nach Anspruch 1, **dadurch gekennzeichnet, dass** das statische und/oder das dynamische Kernmodell des Metametamodells über die Modellelemente Assoziation und/oder Aggregation und/oder Abstraktion und/oder Zustand und/oder Prozessrolle und/oder Vererbung verfügt.

3. Verfahren nach einem oder mehreren der Ansprüche 1 bis 2, **dadurch gekennzeichnet, dass** Prozess-Klassen Attribute aufweisen.

4. Verfahren nach einem oder mehreren der Ansprüche 1 bis 3, **gekennzeichnet durch** ein Modellelement Operator, dass andere Modellelemente, insbesondere Aussagen, Bedingungen Zustände, Ereignisse Attributwerte zu komplexen Modellaussagen verknüpft.

5. Verfahren nach einem oder mehreren der Ansprüche 1 bis 4, **dadurch gekennzeichnet, dass** Bestandteile des Models wie Konfigurationsmanagement, AktivitätenModel, SichtenModell, GliederungsModell, DiagrammModell, DialogModell, AdministrationsModell Wissensträger-und-Anaylse-Modell auf der Basis des Metamodells entwickelt werden, so dass ein iterativer Prozess der Entwicklung eintritt.

6. Verfahren zur Erzeugung eines Fachmodells unter vorzugsweiser Verwendung eines Metamodells wie nach Anspruch 1,
- mit einem ersten Schritt bei dem ein Fachgebiet und ein Modellzweck bestimmen werden,
- mit einem zweiten Schritt bei dem Modellwissensquellen analysiert werden und Fachbegriffe durch Normierung von Begriffen bestimmt werden
- mit einem dritten Schritt bei dem Fachbegriffen, die Substantive sind, Klassen oder Attributen zugeordnet werden, bei dem Fachbegriffen, die Verben sind, Aktionen zugeordnet werden, wobei eine Aktion in Verbindung mit einer statischen Klasse zur Bestimmung einer Operation dient, und bei dem Fachbegriffe, die Adjektive sind, durch Attributwerte abgebildet werden und diese Abbildung sowohl für das statische als auch für das dynamische Modell vorgenommen wird,
- mit einem vierten Schritt bei dem die so erzeugten Klassen instanziiert werden.

7. Verfahren nach Anspruch 6, **dadurch gekennzeichnet, dass** Fachaussagen durch Formalisierung unter Verwendung von Fachbegriffen definiert werden, wodurch eine Fachprogrammiersprache bestimmt wird.

8. Verfahren nach einem oder mehreren der Ansprüche 6 und 7, **dadurch gekennzeichnet, dass** einer statischen Klasse nur solche Operationen und Attribute zugeordnet werden dürfen, die als Fachbegriffe definiert wurden, wobei dynamischen Klassen nur solche Fachbegriffe zugeordnet werden dürfen, die in statischen Klassen bereits zur Bestimmung von Operationen verwendet wurden.

9. Verfahren nach einem oder mehreren der Ansprüche 1 bis 8, **dadurch gekennzeichnet, dass** den Prozess-Klassen Ablaufaussagen insbesondere Reihenfolgeaussagen, Synchronitätsaussagen, Wiederholungsaussagen und/oder Bedingungsaussagen zugeordnet werden.

10. Verfahren nach einem oder mehreren der Ansprüche 1 bis 9, **dadurch gekennzeichnet, dass** die gewonnen Informationen in einem Wissensverwaltungsmodell gespeichert werden, das vorzugsweise auf dem erfindungsgemäßen Metamodell basiert.

11. Verfahren nach einem oder mehreren der Ansprüche 10 bis 16, **dadurch gekennzeichnet, dass** Modellsichten gebildet werden, die vorzugsweise in einem separaten Modell abgelegt werden, das auf dem erfindungsgemäßen Metamodell basiert.

12. Vorrichtung zur Erzeugung eines computerlauffähigen Modells auf der Basis eines Metamodells,
- wobei das Metamodell ein statisches Kernmodell umfasst, das Entity-Klassen beinhaltet, die durch Attribute und Operationen beschrieben werden, wobei die Operationen das Verhalten der Instanzen der Entity-Klassen, insbesondere den Zustand der Attribute, bestimmen, wobei den Operationen Prozess-Klassen oder Programmcode zugeordnet sind,
- wobei das Metamodell ein dynamisches Kernmodell umfasst, das Prozess-Klassen enthält, die durch Aktivitäten beschrieben werden, wobei die Aktivitäten den Ablauf des Prozesses beschreiben, indem auf Operationen zurückgegriffen wird, die durch Verzweigungen und/oder Bedingungen und/oder Sequenzen und/oder Schleifen und/oder Synchronisation miteinander verknüpft sind,
a) mit Ein- und Ausgabemitteln zur Informationseingabe und Informationsaufgabe,
b) mit einem Speicherbereich und einer Verarbeitungseinheit, wobei die Verarbeitungseinheit bei der Konfiguration des Modells die Vorgaben des Metamodells überwacht, indem nur die Elemente zur Beschreibung des Modells Verwendung finden, die das Metametamodell zur Verfügung stellt,
wobei die Verarbeitungseinheit bei der Erzeugung des Computerprogramms die beschriebenen Entity-Klassen auf entsprechende Strukturen einer Zielsprache abgebildet und die Prozess-Klassen und ihre Aktivitäten solange ersetzt werden, bis alle Operationen durch Programmcode dargestellt sind, wobei der Programmcode in Verzweigungen und/oder Bedingungen und/oder Sequenzen und/oder Schleifen und/oder Synchronisation eingebettet wird.

13. Vorrichtung nach Anspruch 12, **dadurch gekennzeichnet, dass** die Verarbeitungseinheit zur Laufzeit überwacht, ob bei den entsprechenden Abfragen die Vorgaben des Metamodells eingehalten werden, indem die Eingaben und Ereignisse überprüft werden und die entsprechenden Prozesse aktiviert werden, wodurch sichergestellt wird, dass das Modell korrekt instanziiert wird.

14. Metamodell zur Beschreibung eines Modells, wobei das Metamodell ein statisches Kernmodell umfasst, das Entity-Klassen beinhaltet, die durch Attribute und Operationen beschrieben werden, wobei die Operationen das Verhalten der Instanzen der Entity-Klassen, insbesondere den Zustand der Attribute, bestimmen, wobei den Operationen Prozess-Klassen oder Programmcode zugeordnet sind,
wobei das Metamodell ein dynamisches Kernmodell umfasst, das Prozess-Klassen enthält, die durch Aktivitäten beschrieben werden, wobei die Aktivitäten den Ablauf des Prozesses beschreiben, indem auf Operationen zurückgegriffen wird, die durch Verzweigungen und/oder Bedingungen und/oder Sequenzen und/oder Schleifen und/oder Synchronisation miteinander verknüpft sind.

15. Software **gekennzeichnet durch** die Merkmale des Verfahrens nach Anspruch 1 und/oder Anspruch 6 sowie keinem bis mehreren der Merkmale der entsprechenden Unteransprüche.

16. Datenträger **gekennzeichnet durch** eine Informationsstruktur, die auf einem Metamodell nach Anspruch 14 basiert.
